(19) Europäisches Patentamt
European Patent Office
Office européen des brevets

(11) **EP 3 061 778 B1**

(12) **EUROPEAN PATENT SPECIFICATION**


(45) Date of publication and mention of the grant of the patent:
**20.05.2020 Bulletin 2020/21**

(21) Application number: **14854941.3**

(22) Date of filing: **20.10.2014**

(51) Int Cl.:
***C08G 18/72*** (2006.01) ***B29C 39/18*** (2006.01)
***B32B 27/40*** (2006.01) ***C08G 18/28*** (2006.01)
***C08G 18/40*** (2006.01) ***C08G 18/75*** (2006.01)
***G02B 1/04*** (2006.01) ***G02C 7/02*** (2006.01)
***G02C 7/12*** (2006.01) ***B29C 45/14*** (2006.01)
***B29D 11/00*** (2006.01) ***B29K 675/00*** (2006.01)
***C08G 18/02*** (2006.01) ***C08G 18/09*** (2006.01)
***C08G 18/18*** (2006.01) ***C08G 18/32*** (2006.01)
***C08G 18/36*** (2006.01) ***C08G 18/48*** (2006.01)
***C08G 18/73*** (2006.01) ***C08G 18/79*** (2006.01)

(86) International application number:
**PCT/JP2014/077856**

(87) International publication number:
**WO 2015/060259 (30.04.2015 Gazette 2015/17)**


(54) **POLYMERIZABLE COMPOSITION FOR OPTICAL MATERIAL AND OPTICAL MATERIAL**

POLYMERISIERBARE ZUSAMMENSETZUNG FÜR OPTISCHES MATERIAL UND OPTISCHES MATERIAL

COMPOSITION POLYMÉRISABLE POUR MATÉRIAU OPTIQUE ET MATÉRIAU OPTIQUE ASSOCIÉ


(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.10.2013 JP 2013218734**
**21.10.2013 JP 2013218736**
**29.08.2014 JP 2014175758**

(43) Date of publication of application:
**31.08.2016 Bulletin 2016/35**



(73) Proprietor: **Mitsui Chemicals, Inc.**
**Tokyo 105-7117 (JP)**

(72) Inventors:
- **TSUKADA Hidetaka**
**Omuta-shi**
**Fukuoka 836-8610 (JP)**
- **GOTO Kenichi**
**Sodegaura-shi**
**Chiba 299-0265 (JP)**
- **MIYATA Atsushi**
**Sodegaura-shi**
**Chiba 299-0265 (JP)**
- **NAKAGAWA Toshihiko**
**Sodegaura-shi**
**Chiba 299-0265 (JP)**
- **YAMASAKI Satoshi**
**Sodegaura-shi**
**Chiba 299-0265 (JP)**
- **MORITA Hirokazu**
**Sodegaura-shi**
**Chiba 299-0265 (JP)**

(74) Representative: **Mewburn Ellis LLP**
**Aurora Building**
**Counterslip**
**Bristol BS1 6BX (GB)**



(56) References cited:
**WO-A1-2005/087829** **WO-A1-2009/051114**
**WO-A1-2012/121291** **WO-A1-2012/121291**
**JP-A- 2011 178 898** **JP-A- 2012 515 814**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).


EP 3 061 778 B1

SEQUENCE LISTING

<110> Mitsui chemicals, inc.

<120> POLYMERIZABLE COMPOSITION FOR OPTICAL MATERIAL, OPTICAL MATERIAL

<130> MC-70827WO

<150> JP2013-218734
<151> 2013-10-21

<150> JP2013-218736
<151> 2013-10-21

<150> JP2014-175758
<151> 2014-8-29

<160> 4

<170> PatentIn version 3.3

<210> 1
<211> 47
<212> DNA
<213> Artificial

<220>
<223> Primer

<400> 1
aaggtaccac aaaaaggata aaacaatgaa cgttattgca atattga 47

<210> 2
<211> 30
<212> DNA
<213> Artificial

<220>
<223> Primer

<400> 2
agtctagatt attttttgct ttcttctttc 30

<210> 3
<211> 2177
<212> DNA
<213> Escherichia coli

<220>
<221> CDS
<222> (24)..(2171)

<400> 3

```
ggtaccacaa aaaggataaa aca atg aac gtt att gca ata ttg aat cac atg     53
                          Met Asn Val Ile Ala Ile Leu Asn His Met
                          1               5                   10

ggg gtt tat ttt aaa gaa gaa ccc atc cgt gaa ctt cat cgc gcg ctt      101
Gly Val Tyr Phe Lys Glu Glu Pro Ile Arg Glu Leu His Arg Ala Leu
                15                  20                  25
```

```
gaa cgt ctg aac ttc cag att gtt tac ccg aac gac cgt gac gac tta      149
Glu Arg Leu Asn Phe Gln Ile Val Tyr Pro Asn Asp Arg Asp Asp Leu
            30                  35                  40

tta aaa ctg atc gaa aac aat gcg cgt ctg tgc ggc gtt att ttt gac      197
Leu Lys Leu Ile Glu Asn Asn Ala Arg Leu Cys Gly Val Ile Phe Asp
        45                  50                  55

tgg gat aaa tat aat ctc gag ctg tgc gaa gaa att agc aaa atg aac      245
Trp Asp Lys Tyr Asn Leu Glu Leu Cys Glu Glu Ile Ser Lys Met Asn
    60                  65                  70

gag aac ctg ccg ttg tac gcg ttc gct aat acg tat tcc act ctc gat      293
Glu Asn Leu Pro Leu Tyr Ala Phe Ala Asn Thr Tyr Ser Thr Leu Asp
75                  80                  85                  90

gta agc ctg aat gac ctg cgt tta cag att agc ttc ttt gaa tat gcg      341
Val Ser Leu Asn Asp Leu Arg Leu Gln Ile Ser Phe Phe Glu Tyr Ala
                95                  100                 105

ctg ggt gct gct gaa gat att gct aat aag atc aag cag acc act gac      389
Leu Gly Ala Ala Glu Asp Ile Ala Asn Lys Ile Lys Gln Thr Thr Asp
            110                 115                 120

gaa tat atc aac act att ctg cct ccg ctg act aaa gca ctg ttt aaa      437
Glu Tyr Ile Asn Thr Ile Leu Pro Pro Leu Thr Lys Ala Leu Phe Lys
        125                 130                 135

tat gtt cgt gaa ggt aaa tat act ttc tgt act cct ggt cac atg ggc      485
Tyr Val Arg Glu Gly Lys Tyr Thr Phe Cys Thr Pro Gly His Met Gly
    140                 145                 150

ggt act gca ttc cag aaa agc ccg gta ggt agc ctg ttc tat gat ttc      533
Gly Thr Ala Phe Gln Lys Ser Pro Val Gly Ser Leu Phe Tyr Asp Phe
155                 160                 165                 170

ttt ggt ccg aat acc atg aaa tct gat att tcc att tca gta tct gaa      581
Phe Gly Pro Asn Thr Met Lys Ser Asp Ile Ser Ile Ser Val Ser Glu
                175                 180                 185

ctg ggt tct ctg ctg gat cac agt ggt cca cac aaa gaa gca gaa cag      629
Leu Gly Ser Leu Leu Asp His Ser Gly Pro His Lys Glu Ala Glu Gln
            190                 195                 200

tat atc gct cgc gtc ttt aac gca gac cgc agc tac atg gtg acc aac      677
Tyr Ile Ala Arg Val Phe Asn Ala Asp Arg Ser Tyr Met Val Thr Asn
        205                 210                 215

ggt act tcc act gcg aac aaa att gtt ggt atg tac tct gct cca gca      725
Gly Thr Ser Thr Ala Asn Lys Ile Val Gly Met Tyr Ser Ala Pro Ala
    220                 225                 230

ggc agc acc att ctg att gac cgt aac tgc cac aaa tcg ctg acc cac      773
Gly Ser Thr Ile Leu Ile Asp Arg Asn Cys His Lys Ser Leu Thr His
235                 240                 245                 250

ctg atg atg atg agc gat gtt acg cca atc tat ttc cgc ccg acc cgt      821
Leu Met Met Met Ser Asp Val Thr Pro Ile Tyr Phe Arg Pro Thr Arg
                255                 260                 265

aac gct tac ggt att ctt ggt ggt atc cca cag agt gaa ttc cag cac      869
Asn Ala Tyr Gly Ile Leu Gly Gly Ile Pro Gln Ser Glu Phe Gln His
```

```
            270                 275                 280

gct acc att gct aag cgc gtg aaa gaa aca cca aac gca acc tgg ccg      917
Ala Thr Ile Ala Lys Arg Val Lys Glu Thr Pro Asn Ala Thr Trp Pro
        285                 290                 295

gta cat gct gta att acc aac tct acc tat gat ggt ctg ctg tac aac      965
Val His Ala Val Ile Thr Asn Ser Thr Tyr Asp Gly Leu Leu Tyr Asn
    300                 305                 310

acc gac ttc atc aag aaa aca ctg gat gtg aaa tcc atc cac ttt gac     1013
Thr Asp Phe Ile Lys Lys Thr Leu Asp Val Lys Ser Ile His Phe Asp
315                 320                 325                 330

tcc gcg tgg gtg cct tac acc aac ttc tca ccg att tac gaa ggt aaa     1061
Ser Ala Trp Val Pro Tyr Thr Asn Phe Ser Pro Ile Tyr Glu Gly Lys
                335                 340                 345

tgc ggt atg agc ggt ggc cgt gta gaa ggg aaa gtg att tac gaa acc     1109
Cys Gly Met Ser Gly Gly Arg Val Glu Gly Lys Val Ile Tyr Glu Thr
            350                 355                 360

cag tcc act cac aaa ctg ctg gcg gcg ttc tct cag gct tcc atg atc     1157
Gln Ser Thr His Lys Leu Leu Ala Ala Phe Ser Gln Ala Ser Met Ile
        365                 370                 375

cac gtt aaa ggt gac gta aac gaa gaa acc ttt aac gaa gcc tac atg     1205
His Val Lys Gly Asp Val Asn Glu Glu Thr Phe Asn Glu Ala Tyr Met
    380                 385                 390

atg cac acc acc act tct ccg cac tac ggt atc gtg gcg tcc act gaa     1253
Met His Thr Thr Thr Ser Pro His Tyr Gly Ile Val Ala Ser Thr Glu
395                 400                 405                 410

acc gct gcg gcg atg atg aaa ggc aat gca ggt aag cgt ctg atc aac     1301
Thr Ala Ala Ala Met Met Lys Gly Asn Ala Gly Lys Arg Leu Ile Asn
                415                 420                 425

ggt tct att gaa cgt gcg atc aaa ttc cgt aaa gag atc aaa cgt ctg     1349
Gly Ser Ile Glu Arg Ala Ile Lys Phe Arg Lys Glu Ile Lys Arg Leu
            430                 435                 440

aga acg gaa tct gat ggc tgg ttc ttt gat gta tgg cag ccg gat cat     1397
Arg Thr Glu Ser Asp Gly Trp Phe Phe Asp Val Trp Gln Pro Asp His
        445                 450                 455

atc gat acg act gaa tgc tgg ccg ctg cgt tct gac agc acc tgg cac     1445
Ile Asp Thr Thr Glu Cys Trp Pro Leu Arg Ser Asp Ser Thr Trp His
    460                 465                 470

ggc ttc aaa aac atc gat aac gag cac atg tat ctt gac ccg atc aaa     1493
Gly Phe Lys Asn Ile Asp Asn Glu His Met Tyr Leu Asp Pro Ile Lys
475                 480                 485                 490

gtc acc ctg ctg act ccg ggg atg gaa aaa gac ggc acc atg agc gac     1541
Val Thr Leu Leu Thr Pro Gly Met Glu Lys Asp Gly Thr Met Ser Asp
                495                 500                 505

ttt ggt att ccg gcc agc atc gtg gcg aaa tac ctc gac gaa cat ggc     1589
Phe Gly Ile Pro Ala Ser Ile Val Ala Lys Tyr Leu Asp Glu His Gly
            510                 515                 520

atc gtt gtt gag aaa acc ggt ccg tat aac ctg ctg ttc ctg ttc agc     1637
```

```
Ile Val Val Glu Lys Thr Gly Pro Tyr Asn Leu Leu Phe Leu Phe Ser
        525                 530                 535

atc ggt atc gat aag acc aaa gca ctg agc ctg ctg cgt gct ctg act      1685
Ile Gly Ile Asp Lys Thr Lys Ala Leu Ser Leu Leu Arg Ala Leu Thr
    540                 545                 550

gac ttt aaa cgt gcg ttc gac ctg aac ctg cgt gtg aaa aac atg ctg      1733
Asp Phe Lys Arg Ala Phe Asp Leu Asn Leu Arg Val Lys Asn Met Leu
555                 560                 565                 570

ccg tct ctg tat cgt gaa gat cct gaa ttc tat gaa aac atg cgt att      1781
Pro Ser Leu Tyr Arg Glu Asp Pro Glu Phe Tyr Glu Asn Met Arg Ile
                575                 580                 585

cag gaa ctg gct cag aat atc cac aaa ctg att gtt cac cac aat ctg      1829
Gln Glu Leu Ala Gln Asn Ile His Lys Leu Ile Val His His Asn Leu
            590                 595                 600

ccg gat ctg atg tat cgc gca ttt gaa gtg ctg ccg acg atg gta atg      1877
Pro Asp Leu Met Tyr Arg Ala Phe Glu Val Leu Pro Thr Met Val Met
        605                 610                 615

act ccg tat gct gca ttc cag aaa gag ctg cac ggt atg acc gaa gaa      1925
Thr Pro Tyr Ala Ala Phe Gln Lys Glu Leu His Gly Met Thr Glu Glu
    620                 625                 630

gtt tac ctc gac gaa atg gta ggt cgt att aac gcc aat atg atc ctt      1973
Val Tyr Leu Asp Glu Met Val Gly Arg Ile Asn Ala Asn Met Ile Leu
635                 640                 645                 650

ccg tac ccg ccg gga gtt cct ctg gta atg ccg ggt gaa atg atc acc      2021
Pro Tyr Pro Pro Gly Val Pro Leu Val Met Pro Gly Glu Met Ile Thr
                655                 660                 665

gaa gaa agc cgt ccg gtt ctg gag ttc ctg cag atg ctg tgt gaa atc      2069
Glu Glu Ser Arg Pro Val Leu Glu Phe Leu Gln Met Leu Cys Glu Ile
            670                 675                 680

ggc gct cac tat ccg ggc ttt gaa acc gat att cac ggt gca tac cgt      2117
Gly Ala His Tyr Pro Gly Phe Glu Thr Asp Ile His Gly Ala Tyr Arg
        685                 690                 695

cag gct gat ggc cgc tat acc gtt aag gta ttg aaa gaa gaa agc aaa      2165
Gln Ala Asp Gly Arg Tyr Thr Val Lys Val Leu Lys Glu Glu Ser Lys
    700                 705                 710

aaa taa tctaga                                                       2177
Lys
715
```

<210> 4
<211> 715
<212> PRT
<213> Escherichia coli

<400> 4

```
Met Asn Val Ile Ala Ile Leu Asn His Met Gly Val Tyr Phe Lys Glu
1               5                   10                  15
```

```
Glu Pro Ile Arg Glu Leu His Arg Ala Leu Glu Arg Leu Asn Phe Gln
            20                  25                  30

Ile Val Tyr Pro Asn Asp Arg Asp Asp Leu Leu Lys Leu Ile Glu Asn
        35                  40                  45

Asn Ala Arg Leu Cys Gly Val Ile Phe Asp Trp Asp Lys Tyr Asn Leu
    50                  55                  60

Glu Leu Cys Glu Glu Ile Ser Lys Met Asn Glu Asn Leu Pro Leu Tyr
65                  70                  75                  80

Ala Phe Ala Asn Thr Tyr Ser Thr Leu Asp Val Ser Leu Asn Asp Leu
                85                  90                  95

Arg Leu Gln Ile Ser Phe Phe Glu Tyr Ala Leu Gly Ala Ala Glu Asp
            100                 105                 110

Ile Ala Asn Lys Ile Lys Gln Thr Thr Asp Glu Tyr Ile Asn Thr Ile
        115                 120                 125

Leu Pro Pro Leu Thr Lys Ala Leu Phe Lys Tyr Val Arg Glu Gly Lys
    130                 135                 140

Tyr Thr Phe Cys Thr Pro Gly His Met Gly Gly Thr Ala Phe Gln Lys
145                 150                 155                 160

Ser Pro Val Gly Ser Leu Phe Tyr Asp Phe Phe Gly Pro Asn Thr Met
                165                 170                 175

Lys Ser Asp Ile Ser Ile Ser Val Ser Glu Leu Gly Ser Leu Leu Asp
            180                 185                 190

His Ser Gly Pro His Lys Glu Ala Glu Gln Tyr Ile Ala Arg Val Phe
        195                 200                 205

Asn Ala Asp Arg Ser Tyr Met Val Thr Asn Gly Thr Ser Thr Ala Asn
    210                 215                 220

Lys Ile Val Gly Met Tyr Ser Ala Pro Ala Gly Ser Thr Ile Leu Ile
225                 230                 235                 240

Asp Arg Asn Cys His Lys Ser Leu Thr His Leu Met Met Met Ser Asp
                245                 250                 255

Val Thr Pro Ile Tyr Phe Arg Pro Thr Arg Asn Ala Tyr Gly Ile Leu
            260                 265                 270
```

```
Gly Gly Ile Pro Gln Ser Glu Phe Gln His Ala Thr Ile Ala Lys Arg
        275                 280                 285

Val Lys Glu Thr Pro Asn Ala Thr Trp Pro Val His Ala Val Ile Thr
    290                 295                 300

Asn Ser Thr Tyr Asp Gly Leu Leu Tyr Asn Thr Asp Phe Ile Lys Lys
305                 310                 315                 320

Thr Leu Asp Val Lys Ser Ile His Phe Asp Ser Ala Trp Val Pro Tyr
                325                 330                 335

Thr Asn Phe Ser Pro Ile Tyr Glu Gly Lys Cys Gly Met Ser Gly Gly
            340                 345                 350

Arg Val Glu Gly Lys Val Ile Tyr Glu Thr Gln Ser Thr His Lys Leu
        355                 360                 365

Leu Ala Ala Phe Ser Gln Ala Ser Met Ile His Val Lys Gly Asp Val
    370                 375                 380

Asn Glu Glu Thr Phe Asn Glu Ala Tyr Met Met His Thr Thr Thr Ser
385                 390                 395                 400

Pro His Tyr Gly Ile Val Ala Ser Thr Glu Thr Ala Ala Ala Met Met
                405                 410                 415

Lys Gly Asn Ala Gly Lys Arg Leu Ile Asn Gly Ser Ile Glu Arg Ala
            420                 425                 430

Ile Lys Phe Arg Lys Glu Ile Lys Arg Leu Arg Thr Glu Ser Asp Gly
        435                 440                 445

Trp Phe Phe Asp Val Trp Gln Pro Asp His Ile Asp Thr Thr Glu Cys
    450                 455                 460

Trp Pro Leu Arg Ser Asp Ser Thr Trp His Gly Phe Lys Asn Ile Asp
465                 470                 475                 480

Asn Glu His Met Tyr Leu Asp Pro Ile Lys Val Thr Leu Leu Thr Pro
                485                 490                 495

Gly Met Glu Lys Asp Gly Thr Met Ser Asp Phe Gly Ile Pro Ala Ser
            500                 505                 510

Ile Val Ala Lys Tyr Leu Asp Glu His Gly Ile Val Val Glu Lys Thr
        515                 520                 525
```

```
Gly Pro Tyr Asn Leu Leu Phe Leu Phe Ser Ile Gly Ile Asp Lys Thr
    530                 535                 540

Lys Ala Leu Ser Leu Leu Arg Ala Leu Thr Asp Phe Lys Arg Ala Phe
545                 550                 555                 560

Asp Leu Asn Leu Arg Val Lys Asn Met Leu Pro Ser Leu Tyr Arg Glu
                565                 570                 575

Asp Pro Glu Phe Tyr Glu Asn Met Arg Ile Gln Glu Leu Ala Gln Asn
            580                 585                 590

Ile His Lys Leu Ile Val His His Asn Leu Pro Asp Leu Met Tyr Arg
        595                 600                 605

Ala Phe Glu Val Leu Pro Thr Met Val Met Thr Pro Tyr Ala Ala Phe
    610                 615                 620

Gln Lys Glu Leu His Gly Met Thr Glu Glu Val Tyr Leu Asp Glu Met
625                 630                 635                 640

Val Gly Arg Ile Asn Ala Asn Met Ile Leu Pro Tyr Pro Pro Gly Val
                645                 650                 655

Pro Leu Val Met Pro Gly Glu Met Ile Thr Glu Glu Ser Arg Pro Val
            660                 665                 670

Leu Glu Phe Leu Gln Met Leu Cys Glu Ile Gly Ala His Tyr Pro Gly
        675                 680                 685

Phe Glu Thr Asp Ile His Gly Ala Tyr Arg Gln Ala Asp Gly Arg Tyr
    690                 695                 700

Thr Val Lys Val Leu Lys Glu Glu Ser Lys Lys
705                 710                 715
```

## Description

TECHNICAL FIELD

The present invention relates to an eco-friendly polymerizable composition for an optical material, and an optical material and plastic lens which are obtained by using the composition for an optical material and which are in harmony with global environment

BACKGROUND ART

Glass has been mainly used as an optical material from the related art, and recently, plastic for an optical material has been variously developed and has been widely used as a substitution of the glass. A plastic material such as an acryl resin, an aliphatic carbonate resin, polycarbonate, and polythiourethane has been mainly used as a lens material such as spectacles from a viewpoint of excellent optical properties, light weight, cracking resistance, and excellent molding properties.
The plastic material has been used for improving performance, but in a plastic material using fossil resources, the influences on the global environment such as scarcity of resources or carbon dioxide gas emissions have been concerns, and thus, application of biomass resources such as a plant-derived raw material to development of the material has been considered.
A spectacle lens which is obtained by injection molding using a polycarbonate resin having constituent unit derived from isosorbide as a main component has been proposed as the plastic lens material obtained by using the plant-derived raw material (Patent Document 1) .
In addition, an optical polyurethane resin composition which is comprised of a polyisocyanate component including a modified product of aliphatic polyisocyanate, and a polyol component has been proposed (Patent Document 2). The optical polyurethane resin composition is not obtained by using the plant-derived raw material, and thus, there is room for improvement of optical properties.
Further, in Patent Document 3, a biopolyurethane resin using the plant-derived raw material has been proposed, but the biopolyurethane resin is not for an optical material, and thus, optical properties or the like of the obtained resin are not exhibited.

RELATED DOCUMENT

PATENT DOCUMENT

[Patent Document 1] Japanese Laid-open Patent Publication No. 2010-190919
[Patent Document 2] Japanese Laid-open Patent Publication No. 2011-12141
[Patent Document 3] Japanese Laid-open Patent Publication No. 2011-225863

SUMMARY OF THE INVENTION

From a viewpoint of application of non-fossil resources, it is preferable that the plant-derived raw material is used, and a material having a high degree of biomass is used.
However, when the degree of biomass increases, physical properties such as transparency and heat resistance decrease. Therefore, according to intensive studies, it has been found that even when the degree of biomass increases within a predetermined composition, the physical properties thereof are able to be improved.
That is, an object of the present invention is to provide a polyurethane molded product for an optical material which increases a degree of biomass by using a compound obtained from a plant-derived raw material, and has satisfactory performance such as transparency and heat resistance, and thus, is to provide a plastic lens which is in harmony with global environment.
As a result of intensive studies of the present inventors, it has been found that a polyurethane molded product for an optical material having improved physical properties is obtained by a predetermined composition using a compound obtained from a plant-derived raw material, and a plastic lens which is in harmony with global environment is able to be provided by using the molded product, and thus, the present invention has been completed.
That is, the present invention is able to be described as follows .

[1] A polymerizable composition for an optical material, comprising polyisocyanate (a) which is obtained from a

plant-derived raw material and includes a modified product of aliphatic polyisocyanate; polyol (d) which is a plant-derived compound; and(poly)glycerin fatty acid esters (e) represented by General Formula (1).

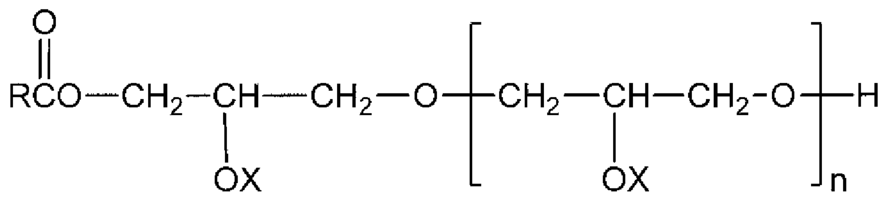

(1)

(In General Formula (1), R represents a C5 to C19 alkyl group or a C5 to C19 alkenyl group, and the alkyl group or the alkenyl group may have a straight chain or a branched chain; X represents a hydrogen atom or a R'CO group, wherein R' is a C5 to C19 alkyl group or a C5 to C19 alkenyl group, the alkyl group or the alkenyl group may have a straight chain or a branched chain; a plurality of Xs may be identical to each other or different from each other; and n represents an integer of 0 to 3.)

[2] The polymerizable composition for an optical material according to a [1], in which the modified product is an isocyanurate product of aliphatic polyisocyanate, and an isocyanurate trimer is contained in the polyisocyanate (a) in the amount of 15 weight% or more.

[3] The polymerizable composition for an optical material according to [1], in which a molar ratio ((d) / (e) + (d)) of a hydroxyl group of the polyol (d) to the total number of hydroxyl groups of the (poly)glycerin fatty acid esters (e) and the polyol (d) is 0.5 to 0.9.

[4] The polymerizable composition for an optical material according to [3], further comprising polyol which has a hydroxyl value of 300 mgKOH/g to 650 mgKOH/g and has the average number of functional groups of 2 or more and less than 7 and which is obtained from a plant-derived raw material, and/or alicyclic polyisocyanate (b) .

[5] The polymerizable composition for an optical material according to [4], in which the polyol (c) is obtained by using at least one selected from glycerin, sorbitol, isosorbide, sucrose, 1,4-butanediol, 1,3-butanediol, and 1,3-propanediol which are plant-derived raw materials as a raw material.

[6] The polymerizable composition for an optical material according to [5], in which the polyol (c) is at least one selected from polyether polyol, polyester polyol, polycarbonate polyol, and polyacryl polyol.

[7] The polymerizable composition for an optical material according to any one of [1] to [6], in which the polyol (d) is at least one selected from glycerin, sorbitol, isosorbide, sucrose, 1,3-butanediol, 1,4-butanediol, and 1,3-propanediol.

[8] The polymerizable composition for an optical material according to any one of [1] to [7], further comprising a non-metal catalyst.

[9] A polyurethane molded product which is obtained by polymerizing and curing the polymerizable composition for an optical material according to [3].

[10] The polyurethane molded product according to [9], in which a degree of biomass is 20% to 75%.

[11] The polyurethane molded product according to either [9] or [10], in which Tg is 60°C or higher.

[12] An optical material which is comprised of the polyurethane molded product according to any one of [9] to [11].

[13] A plastic spectacle lens which is comprised of the optical material according to [12].

[14] A plastic polarization lens in which a layer obtained by polymerizing and curing the polymerizable composition for an optical material according to any one of [1] to [8] is laminated over at least one surface of a polarizing film.

Furthermore, herein, for example, the expression "300 mgKOH/g to 650 mgKOH/g" indicates "300 mgKOH/g or more and 650 mgKOH/g or less", and the same applies to other numerical ranges.

According to the polymerizable composition for an optical material of the present invention, it is possible to provide a polyurethane molded product for an optical material which contributes to conservation of the global environment by using a plant-derived raw material and has excellent practicality such as transparency and heat resistance, and it is possible to provide a plastic lens which is in harmony with global environment.

DESCRIPTION OF EMBODIMENTS

A polymerizable composition for an optical material of the invention comprises polyisocyanate (a) which is obtained from a plant-derived raw material and includes a modified product of aliphatic polyisocyanate; (poly)glycerin fatty acid esters (e) represented by General Formula (1); and polyol (d) which is a plant-derived compound.

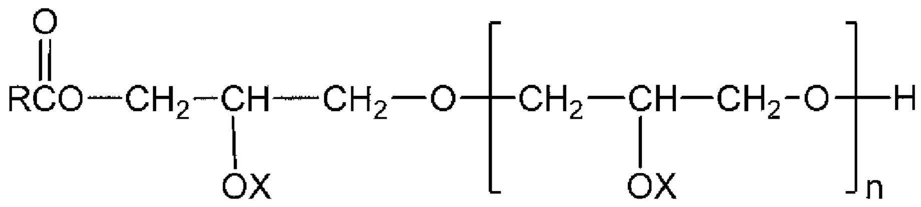

(1)

In General Formula (1), R represents a C5 to C19 alkyl group or a C5 to C19 alkenyl group, and the alkyl group or the alkenyl group may have a straight chain or a branched chain. X represents a hydrogen atom or a R'CO group, wherein R' is a C5 to C9 alkyl group or a C5 to C19 alkenyl group, and the alkyl group or alkenyl group may have a straight chain or a branched chain. A plurality of Xs may be identical to each other or different from each other. n represents an integer of 0 to 3.

(Polyisocyanate (a))

The polyisocyanate (a) is obtained from the plant-derived raw material, and includes the modified product of the aliphatic polyisocyanate as an essential component.

For example, the plant-derived aliphatic polyisocyanate is obtained by performing acid amidation and reduction with respect to a plant-derived bivalent carboxylic acid to convert a terminal group thereof into an amino group, by reacting the product with phosgene to convert the amino group into an isocyanate group.

Examples of the plant-derived aliphatic polyisocyanate include pentamethylene diisocyanate, heptamethylene diisocyanate, lysine diisocyanate, lysine triisocyanate, dimer acid diisocyanate, octamethylene diisocyanate, decamethylene diisocyanate, and the like.

In addition, the plant-derived polyisocyanate is able to be obtained by using an amino acid which is the plant-derived raw material as a raw material, and by converting the amino group into an isocyanate group.

For example, the pentamethylene diisocyanate is able to be obtained by performing decarbonation with respect to a carboxyl group of lysine, and then by converting an amino group into an isocyanate group. Examples of the pentamethylene diisocyanate are able to include 1, 5-pentamethylene diisocyanate.

Examples of the modified product of the aliphatic polyisocyanate include a multimer of the aliphatic polyisocyanate, a biuret modified product, an allophanate modified product, an oxadiazine trione modified product, a polyol modified product, and the like.

Examples of the multimer of the aliphatic polyisocyanate include a dimer such as uretedione, uretonimine, and carbodiimide, and a trimer or more such as isocyanurate and iminooxadiane dione.

Isocyanurate of the aliphatic polyisocyanate is able to be obtained by performing a reaction of the aliphatic polyisocyanate in the presence of a known isocyanurate-formed catalyst.

The biuret modified product of the aliphatic polyisocyanate is able to be obtained by allowing the aliphatic polyisocyanate to react with, for example, water, tertiary alcohol (for example, t-butyl alcohol, and the like), secondary amine (for example, dimethyl amine, diethyl amine, and the like), and the like, and then by further performing the reaction in the presence of a known biuret-formed catalyst.

The allophanate modified product of the aliphatic polyisocyanate is able to be obtained by allowing the aliphatic polyisocyanate to react with monoalcohol (monohydric alcohol, for example, alcohol having 1 to 10 carbon atoms), and then by further performing the reaction in the presence of a known allophanate-formed catalyst.

The oxadiazine trione modified product of the aliphatic polyisocyanate is able to be obtained by allowing the aliphatic polyisocyanate to react with carbon dioxide.

The iminooxadiane dione modified product of the aliphatic polyisocyanate is able to be obtained by further performing a reaction of the aliphatic polyisocyanate in the presence of a known iminooxadiane dione-formed catalyst.

The polyol modified product of the aliphatic polyisocyanate is able to be obtained by allowing the aliphatic polyisocyanate to react with alcohol. Examples of the alcohol used for obtaining the modified product of the aliphatic polyisocyanate are able to include tertiary alcohol, monoalcohols and polyol, and preferably trihydric alcohol such as glycerin, and trimethylol propane, and it is more preferable that the alcohol is a plant-derived compound.

The modified product of the aliphatic polyisocyanate is able to be independently used, or at least two kinds thereof are able to be used in combination.

Among the modified products of the aliphatic polyisocyanate, the multimer of the aliphatic polyisocyanate is preferable, and an isocyanurate product of the aliphatic polyisocyanate is more preferable.

The polyisocyanate (a) includes polyisocyanate other than the modified product, examples of the polyisocyanate are able to include plant-derived aliphatic polyisocyanate, and the polyisocyanate may be the aliphatic polyisocyanate described above. That is, the polyisocyanate (a) is able to be indicated as a polyisocyanate composition.

Specifically, in present embodiment, the polyisocyanate (a) is able to be used as a reaction liquid which is obtained at the time of preparing the modified product of the aliphatic polyisocyanate. In this case, the polyisocyanate (a) includes the modified product and the aliphatic polyisocyanate.

Furthermore, the aliphatic polyisocyanate used in the reaction is also able to be separately added to the reaction liquid.

The concentration of the isocyanate group of the polyisocyanate (a), for example, is 5 weight% to 30 weight%, is preferably 10 weight% to 30 weight%, and is more preferably 20 weight% to 30 weight%.

In present embodiment, the polyisocyanate (a) is able to contain an isocyanurate trimer (an isocyanurate monokaryon) of the aliphatic polyisocyanate in the polyisocyanate (a) in the amount of 10 weight% or more, preferably in the amount of 15 weight% or more, more preferably in the amount of 30 weight% or more, and even more preferably in the amount of 45 weight% or more. By setting the content of the isocyanurate trimer to be in the range described above, it is possible to provide a polyurethane molded product having more excellent heat resistance and high practicality. It is possible to set the upper limit of the content of the isocyanurate trimer to be 80 weight% or less, and preferably 70 weight% or less, from a viewpoint of heat resistance of polyurethane to be obtained.

It is preferable that only the polyisocyanate (a) is included as an isocyanate compound from a viewpoint of setting a degree of biomass of the polyurethane molded product to be 70% or more.

(Polyol (d))

The polymerizable composition for an optical material of present embodiment contains at least one kind of polyols (d) which are plant-derived compounds.

In general, the polyol is a compound having two or more hydroxyl groups and a number average molecular weight of 40 or more and less than 400, and examples of the polyol include dihydric alcohol such as ethylene glycol, propylene glycol, 1,3-propanediol, 1,4-butanediol, 1,4-butylene glycol, 1,3-butylene glycol, 1,2-butylene glycol, 2-methyl-1,3-propanediol, 1,5-pentanediol, neopentyl glycol, 3-methyl-1,5-pentanediol, 2,4-diethyl-1,5-pentanediol, 1,6-hexanediol, 2,6-dimethyl-1-octene-3,8-diol, alkane (having 7 to 22 carbon atoms) diol, cyclohexane dimethanol, hydrogenated bisphenol A, 1,4-dihydroxy-2-butene, bishydroxy ethoxy benzene, xylene glycol, bishydroxy ethylene terephthalate, bisphenol A, diethylene glycol, trioxy ethylene glycol, tetraoxy ethylene glycol, pentaoxy ethylene glycol, hexaoxy ethylene glycol, dipropylene glycol, trioxy propylene glycol, tetraoxy propylene glycol, pentaoxy propylene glycol, hexaoxy propylene glycol, and isosorbide; trihydric alcohol such as glycerin, 2-methyl-2-hydroxy methyl-1, 3-propanediol, 2,4-dihydroxy-3-hydroxy methyl pentane, 1,2,6-hexane triol, trimethylol propane, 2,2-bis(hydroxy methyl) -3-butanol, and other aliphatic triols (having 8 to 24 carbon atoms);
tetrahydric alcohol such as tetramethylol methane (pentaerythritol) and diglycerin;
pentahydric alcohol such as xylitol;
hexahydric alcohol such as sorbitol, mannitol, allitol, iditol, dulcitol, altritol, inositol, and dipentaerythritol; heptahydric alcohol such as perseitol;
octahydric alcohol such as sugar;
sucrose, chitin, chitosan, and the like.

It is preferable that the polyol (d) is at least one selected from glycerin, sorbitol, isosorbide, sucrose, $\alpha$-methyl glycoside, mannitol, 1,4-butanediol, 1,3-butanediol, and 1,3-propanediol.

In the polyol which is used herein and is the plant-derived compound, it is preferable that the hydroxyl value is 700 mgKOH/g to 2000 mgKOH/g, and the hydroxyl value of the compound is as follows.

Glycerin: 1827 mgKOH/g
Sorbitol: 1848 mgKOH/g
Isosorbide: 768 mgKOH/g
Sucrose: 1311 mgKOH/g
1, 3-Butanediol: 1245 mgKOH/g
1, 4-Butanediol: 1245 mgKOH/g
1, 3-Propanediol: 1475 mgKOH/g
$\alpha$-Methyl Glycoside: 1155 mgKOH/g
Mannitol: 1848 mgKOH/g

In the composition of present embodiment, by containing the polyol (d) and the polyisocyanate (a) of which the concentration of the isocyanurate trimer is 15 weight% or more, it is possible to obtain a polyurethane molded product which has excellent physical properties such as transparency and heat resistance, and has an excellent balance these properties and other optical properties in a range where the degree of biomass of the polyurethane molded product is within a specific range (70% or more).

(Polyol (c))

The polymerizable composition for an optical material of present embodiment is able to further contain polyol (c) which is obtained from a plant-derived raw material.
The polyol (c) is obtained from the plant-derived raw material.
In the polyol (c), a hydroxyl value is 300 mgKOH/g to 650 mgKOH/g, and is preferably 350 mgKOH/g to 600 mgKOH/g, and the average number of functional groups is 2 or more and less than 7, and is preferably 2 to 6.5.
Furthermore, the hydroxyl value is able to be obtained from a known titration method, and the hydroxyl value and the hydroxyl equivalent have a relationship of Expression (1) described below.

$$\text{Hydroxyl Value} = 56100 / \text{Hydroxyl Equivalent} \quad (1)$$

Examples of the polyol (c) are able to include polyether polyol, polyester polyol, polycarbonate polyol, polyacryl polyol, and the like.
The polyether polyol, for example, is able to be obtained by performing an addition reaction with respect to alkylene oxide such as ethylene oxide and/or propylene oxide, and styrene oxide by using at least one kind of polyols which are the plant-derived compounds and are suitably selected from dihydric alcohol, trihydric alcohol, and alcohol having four or more hydroxyl groups as an initiator such that the average number of functional groups is in the range described above.
In general, the polyol is a compound having two or more hydroxyl groups and a number average molecular weight of 40 or more and less than 400, and examples of the polyol include dihydric alcohol such as ethylene glycol, propylene glycol, 1,3-propanediol, 1,3-butanediol, 1,4-butanediol, 1,4-butylene glycol, 1,3-butylene glycol, 1,2-butylene glycol, 2-methyl-1,3-propanediol, 1,5-pentanediol, neopentyl glycol, 3-methyl-1,5-pentanediol, 2,4-diethyl-1,5-pentanediol, 1,6-hexanediol, 2, 6-dimethyl-1-octene-3,8-diol, alkane (having 7 to 22 carbon atoms) diol, cyclohexane dimethanol, hydrogenated bisphenol A, 1,4-dihydroxy-2-butene, bishydroxy ethoxy benzene, xylene glycol, bishydroxy ethylene terephthalate, bisphenol A, diethylene glycol, trioxy ethylene glycol, tetraoxy ethylene glycol, pentaoxy ethylene glycol, hexaoxy ethylene glycol, dipropylene glycol, trioxy propylene glycol, tetraoxy propylene glycol, pentaoxy propylene glycol, hexaoxy propylene glycol, and isosorbide; trihydric alcohol such as glycerin, 2-methyl-2-hydroxy methyl-1, 3-propanediol, 2, 4-dihydroxy-3-hydroxy methyl pentane, 1, 2, 6-hexane triol, trimethylol propane, 2, 2-bis(hydroxy methyl) -3-butanol, and other aliphatic triols (having 8 to 24 carbon atoms);
tetrahydric alcohol such as tetramethylol methane (pentaerythritol) and diglycerin;
pentahydric alcohol such as xylitol;
hexahydric alcohol such as sorbitol, mannitol, allitol, iditol, dulcitol, altritol, inositol, and dipentaerythritol; heptahydric alcohol such as perseitol;
octahydric alcohol such as sugar;
sucrose, chitin, chitosan, and the like.
It is preferable that the polyol used as the initiator is at least one type of polyols which are the plant-derived raw materials and are selected from glycerin, sorbitol, isosorbide, sucrose, 1,3-butanediol, 1,4-butanediol, and 1,3-propanediol. The isosorbide is particularly preferable.
Examples of the polyether polyol include polyoxy alkylene polyol having 2 to 3 carbon atoms (ethylene and/or propylene) such as polyethylene polyol, polypropylene polyol and/or polyethylene polypropylene polyol (a random or block copolymer), and one type or at least two kinds thereof are able to be used in combination.
The polyester polyol, for example, is able to be obtained by allowing at least one kind of polyols which are plant-derived compounds and are suitably selected from the dihydric alcohol, the trihydric alcohol, and the alcohol having four or more hydroxyl groups described above to react with a plant-derived polybasic acid, or an acid anhydride thereof or an acid halide thereof such that the average number of functional groups is in the range described above.
Examples of the polybasic acid, and the acid anhydride or the acid halide thereof include an oxalic acid, a malonic acid, a succinic acid, a methyl succinic acid, a glutaric acid, an adipic acid, a 1,1-dimethyl-1,3-dicarboxy propane, a 3-methyl-3-ethyl glutaric acid, an azelaic acid, a sebacic acid, and other aliphatic dicarboxylic acids (having 11 to 13 carbon atoms); a carboxylic acid such as a hydrogenated dimer acid, a maleic acid, a fumaric acid, an itaconic acid, an orthophthalic acid, an isophthalic acid, a terephthalic acid, a toluene dicarboxylic acid, a dimer acid, and a HET acid; an acid anhydride derived from these carboxylic acids and the like; an acid halide derived from these carboxylic acids, and the like.
Examples of the acid anhydride include oxalic anhydride, succinic anhydride, maleic anhydride, phthalic anhydride, 2-alkyl (having 12 to 18 carbon atoms) succinic anhydride, tetrahydrophthalic anhydride, and trimellitic anhydride.
Examples of the acid halide include oxalic dichloride, adipic dichloride, sebacic dichloride, and the like.

In addition, examples of the polyester polyol include lactone-based polyester polyol such as polycaprolactone polyol and polyvalerolactone polyol, which is obtained by performing ring opening polymerization, for example, with respect to lactones such as ε-caprolactone and γ-valerolactone using polyol in which the dihydric alcohol, the trihydric alcohol, and the alcohol having four or more hydroxyl groups described above as an initiator such that the average number of functional groups is in the range described above. At least one kind of polyols selected from the lactone-based polyester polyols are able to be used in combination as the polyester polyol.

Further, examples of the polyester polyol include vegetable oil-based polyester polyol and the like which are obtained by a condensation reaction, for example, between the polyol in which the dihydric alcohol, the trihydric alcohol, and the alcohol having four or more hydroxyl groups described above, and a hydroxy carboxylic acid such as a hydroxyl group-containing vegetable oil fatty acid (for example, a castor oil fatty acid containing a ricinoleic acid, a hydrogenated castor oil fatty acid containing a 12-hydroxy stearic acid, and the like) under known conditions.

Examples of the polycarbonate polyol include, for example, a ring opening polymerization product of ethylene carbonate using the polyol (preferably, the dihydric alcohol) as an initiator or amorphous polycarbonate polyol which are obtained by copolymerization between dihydric alcohol such as 1,4-butanediol, 1,5-pentanediol, 3-methyl-1,5-pentanediol, or 1,6-hexanediol, and a ring opening polymerization product, and the like.

Examples of the acryl polyol include a copolymer which is obtained by copolymerization, for example, between hydroxyl group-containing acrylate and a copolymerizable vinyl monomer which is able to be copolymerized with the hydroxyl group-containing acrylate.

Examples of the hydroxyl group-containing acrylate include 2-hydroxy ethyl (meth)acrylate, hydroxy propyl (meth)acrylate, hydroxy butyl (meth)acrylate, 2,2-dihydroxy methyl butyl (meth)acrylate, polyhydroxy alkyl maleate, polyhydroxy alkyl fumarate, and the like. The 2-hydroxy ethyl (meth) acrylate, and the like are preferable as the hydroxyl group-containing acrylate.

Examples of the copolymerizable vinyl monomer include alkyl (meth)acrylate (having 1 to 15 carbon atoms) such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, isononyl (meth)acrylate, 2-ethyl hexyl (meth)acrylate, cyclohexyl acrylate, and isobornyl (meth)acrylate, aromatic vinyl such as styrene, vinyl toluene, and α-methyl styrene, vinyl cyanide such as (meth)acrylonitrile,

a vinyl monomer having a carboxyl group such as a (meth) acrylic acid, a fumaric acid, a maleic acid, and an itaconic acid, or alkyl ester thereof,

alkane polyol poly(meth)acrylate such as ethylene glycol di(meth)acrylate, butylene glycol di(meth)acrylate, hexanediol di(meth)acrylate, oligoethylene glycol di(meth)acrylate, trimethylol propane di(meth)acrylate, and trimethylol propane tri(meth)acrylate,

a vinyl monomer having an isocyanate group such as 3-(2-isocyanate-2-propyl)-α-methyl styrene, and the like.

The acryl polyol is able to be obtained by copolymerization between the hydroxyl group-containing acrylate and the copolymerizable vinyl monomer in the presence of a suitable solvent and a polymerization initiator.

In addition, in the acryl polyol, for example, silicone polyol or fluorine polyol is included.

Examples of the silicone polyol include acryl polyol to which, for example, a silicone compound having a vinyl group such as γ-methacryloxy propyl trimethoxy silane is mixed as a copolymerizable vinyl monomer in the copolymerization of the acryl polyol described above.

The fluorine polyol is a copolymer of fluoroolefin and a double bond-containing monomer which is able to be copolymerized with the fluoroolefin, and is a fluorine-containing copolymer soluble in a weak solvent, in which the content of fluorine based on the fluoroolefin is 10 mass% or more, 5 mol% to 30 mol% of the double bond-containing monomer has a hydroxyl group, and 10 mol% to 50 mol% of the double bond-containing monomer has a branched alkyl group having carbon atoms of 3 or more.

Examples of the fluoroolefin include fluoroolefin having the number of added fluorine atoms of preferably 2 or more, and more preferably 3 to 4, from a viewpoint of weather resistance, and specifically include tetrafluoroethylene, chlorotrifluoroethylene, vinylidene fluoride, hexafluoropropylene, and the like, and the tetrafluoroethylene and the chlorotrifluoroethylene are preferable. The fluoroolefin is able to be independently used or two or more types thereof are able to be used in combination.

The double bond-containing monomer is able to be copolymerized with the fluoroolefin, and vinyl-based monomers other than the fluoroolefin are preferably used as the double bond-containing monomer. The vinyl-based monomer is a compound having a carbon-carbon double bond represented by CH2=CH-. Examples of the vinyl-based monomer include alkyl vinyl ether, alkyl vinyl ester, and the like having a straight chain alkyl group, a branched alkyl group, or a cyclic alkyl group.

In addition, the double bond monomer includes both of a double bond-containing monomer containing a hydroxyl group (hereinafter, simply referred to as a hydroxyl group-containing monomer) and a double bond-containing monomer containing a branched alkyl group having carbon atoms of 3 or more (hereinafter, simply referred to as a branched alkyl group-containing monomer). Furthermore, the hydroxyl group-containing monomer may contain the branched alkyl group

having carbon atoms of 3 or more, or the branched alkyl group-containing monomer may contain the hydroxyl group.

In addition, 5 mol% to 30 mol% of the double bond-containing monomer contains the hydroxyl group. When the content of the hydroxyl group-containing monomer is 5 mol% or more, it is possible to obtain a coated film having high hardness, and when the content of the hydroxyl group-containing monomer is 30 mol% or less, it is possible to maintain sufficient solubility with respect to a weak solvent.

The number of carbon atoms of the hydroxyl group-containing monomer is not particularly limited, but for example, is 2 to 10, is preferably 2 to 6, and is more preferably 2 to 4.

Examples of such a hydroxyl group-containing monomer include hydroxy alkyl vinyl ethers such as 4-hydroxy butyl vinyl ether (HBVE), 2-hydroxy ethyl vinyl ether, and cyclohexane dimethanol monovinyl ether, hydroxy alkyl allyl ethers such as hydroxy ethyl allyl ether and cyclohexane dimethanol monoallyl ether, a (meth)acrylic acid hydroxy alkyl esters such as hydroxy ethyl (meth)acrylate, and the like.

The hydroxy alkyl vinyl ethers are preferable from a viewpoint of excellent copolymerizability and of improving weather resistance of a coated film to be formed. In particular, hydroxy alkyl vinyl ether having 2 to 4 carbon atoms is preferable, and HBVE is more preferable, from a viewpoint of excellent solubility with respect to a weak solvent. The hydroxyl group-containing monomer is able to be independently used or two or more types thereof are able to be used in combination.

In addition, 10 mol% to 50 mol% of the double bond-containing monomer contains the branched alkyl group having carbon atoms of 3 or more. When the content of the branched alkyl group-containing monomer is 10 mol% to 50 mol%, it is possible to ensure solubility with respect to a weak solvent even when the hydroxyl group-containing monomer is mixed at the ratio described above.

The number of carbon atoms of the branched alkyl group of the branched alkyl group-containing monomer is not particularly limited insofar as the number of carbon atoms is 3 or more, but is preferably 4 to 15, and is more preferably 4 to 10.

Examples of such a branched alkyl group-containing monomer include vinyl ethers, allyl ethers, or (meth)acrylic acid esters containing a branched alkyl group. Examples of the branched alkyl group include an isopropyl group, an isobutyl group, a sec-butyl group, a tert-butyl group, a 2-ethyl hexyl group, a 2-methyl hexyl group, and the like. In addition, examples of the branched alkyl group-containing monomer preferably include vinyl ethers such as 2-ethyl hexyl vinyl ether (2-EHVE) and tert-butyl vinyl ether, and more preferably include 2-EHVE, from a viewpoint of excellent copolymerizability. The branched alkyl group-containing monomer is able to be independently used or two or more types thereof are able to be used in combination.

Double bond-containing monomers are able to be further contained as the double bond-containing monomer in addition to the hydroxyl group-containing monomer and the branched alkyl group-containing monomer.

Examples of the other double bond-containing monomer preferably include a monomer containing an alkyl group, and examples of the alkyl group include a straight chain alkyl group, a branched alkyl group, or a cyclic alkyl group. In addition, the number of carbon atoms of the alkyl group, for example, is 2 to 8, and is preferably 2 to 6. In particular, when the double bond-containing monomer containing the cyclic alkyl group is mixed, it is possible to increase the glass transition temperature (Tg) of the fluorine-containing copolymer, and it is possible to further increase the hardness of the coated film.

Examples of such a double bond-containing monomer containing the cyclic alkyl group include cyclic alkyl vinyl ethers such as cyclohexyl vinyl ether and cyclohexyl methyl vinyl ether, (meth)acrylic acid cyclic alkyl esters such as cyclohexyl (meth)acrylate and 3,3,5-trimethyl cyclohexyl (meth)acrylate, and the like. The other double bond-containing monomers are able to be independently used or two or more types thereof are able to be used in combination. In addition, a ratio of the double bond-containing monomer to the total amount of the other double bond-containing monomers are preferably 70 mol% or less, and is more preferably 30 mol% to 60 mol%.

In a ratio of the polymerization unit based on fluoroolefin and the polymerization unit based on the double bond-containing monomer, the polymerization unit based on the fluoroolefin is preferably 30 mol% to 70 mol%, and is more preferably 40 mol% to 60 mol%, and the polymerization unit based on the double bond-containing monomer is preferably 70 mol% to 30 mol%, and is more preferably 60 mol% to 40 mol%. When the ratio of the polymerization unit based on the fluoroolefin is 70 mol% or less, the solubility of the fluorine-containing copolymer with respect to a weak solvent becomes sufficient, and when the ratio of the polymerization unit based on the fluoroolefin is 30 mol% or more, it is possible to ensure sufficient weather resistance. Furthermore, it is preferable that the fluorine-containing copolymer is completely dissolved in a weak solvent in the amount of being mixed into the coating material composition, and a part of the fluorine-containing copolymer may not be dissolved in the weak solvent.

The fluorine-containing copolymer is able to be obtained by mixing the fluoroolefin and the double bond-containing monomer including the hydroxyl group-containing monomer and the branched alkyl group-containing monomer, by then adding a polymerization initiating source such as a polymerization initiator or ionizing radiation in the presence of or in the absence of a polymerization medium and performing copolymerization. The copolymerization reaction is a known radical copolymerization reaction, and reaction conditions such as a reaction temperature, a reaction time, and

a reaction pressure are suitably selected.

In addition, the fluorine-containing copolymer is able to further contain a carboxyl group. By containing the carboxyl group, dispersibility of a pigment is improved, for example, at the time of being used as a coating material. The content of the carboxyl group of the fluorine-containing copolymer, for example, is 1 mgKOH/g to 5 mgKOH/g, and is preferably 2 mgKOH/g to 5 mgKOH/g, with respect to the fluorine-containing copolymer.

The carboxyl group, for example, is able to be introduced by performing a polymerization reaction with respect to the fluoroolefin and the double bond-containing monomer, and then by allowing the hydroxyl group of the fluorine-containing copolymer to react with a polyvalent carboxylic acid or an anhydride thereof. In addition, the carboxyl group is able to be introduced by direct polymerization of the double bond-containing monomer having a carboxyl group.

In addition, the content of fluorine based on the fluoroolefin in the fluorine-containing copolymer is 10 mass% or more, and is preferably 20 mass% to 30 mass%, with respect to the total amount of fluorine-containing copolymer. When the content of the fluorine is 10 mass% or more, it is possible to improve weather resistance of the coated film.

In addition, the fluorine-containing copolymer contains a hydroxyl group for reacting with an isocyanate group of a polyisocyanate component, and the hydroxyl value thereof (hereinafter, referred to as OHV), for example, is 30 mgKOH/g to 55 mgKOH/g, and is preferably 35 mgKOH/g to 50 mgKOH/g. When OHV is 30 mgKOH/g or more, it is possible to increase the hardness of the coated film. In addition, when OHV is 55 mgKOH/g or less, the fluorine-containing copolymer is able to be sufficiently dissolved in a weak solvent.

Polyether polyol which has a hydroxyl value of 300 mgKOH/g to 650 mgKOH/g and has the average number of functional groups of 2 or more and less than 7 and which is obtained from a plant-derived raw material is preferable as the polyol (c), and examples of the polyol (c) include polypropylene polyol and/or polyethylene polypropylene polyol (a random or block copolymer) using at least one type of plant-derived compound selected from glycerin (the number of functional groups of 3), sorbitol (the number of functional groups of 6), sucrose (the number of functional groups of 8), and isosorbide (the number of functional groups of 2) as an initiator. The polypropylene polyol (the random or block copolymer) selected from the isosorbide (the number of functional groups of 2) is particularly preferable.

The polyol (c) is able to be independently used or two or more types thereof are able to be used in combination.

In present embodiment, when the polyol (c) is contained, a molar ratio ((d) / (c) + (d)) of a hydroxyl group of the polyol (d) to the total number of hydroxyl groups of the polyol (c) and the polyol (d) is 0.8 or more, and is preferably 0.83 or more.

By setting the composition of present embodiment to satisfy the molar ratios described above, it is possible to obtain a polyurethane molded product which has excellent physical properties such as transparency and heat resistance, and has an excellent balance with respect to other optical properties in the case that the degree of biomass of the polyurethane molded product is within a specific range (70% or more).

(Catalyst)

A known catalyst such as an organic metal compound, amines, or an acid is able to be used as a catalyst of a polymerization reaction in which a polyurethane resin is able to be obtained from the polymerizable composition for an optical material of present embodiment.

Examples of the organic metal compound include a compound containing tin, titanium, mercury, zinc, bismuth, zirconium, manganese, nickel, cobalt, copper, lead, and the like. Examples of the organic metal compound include an organic tin compound such as tin acetate, tin octylate, tin oleate, tin laurate, dibutyl tin diacetate, dimethyl tin dilaurate, dibutyl tin dilaurate, dibutyl tin dimercaptide, dibutyl tin maleate, dibutyl tin dineodecanoate, dioctyl tin dimercaptide, dioctyl tin dilaurate, dimethyl tin dichloride, and dibutyl tin dichloride, an organic lead compound such as lead octanoate and lead naphthenate, an organic zinc compound such as zinc naphthenate, an organic manganese compound such as manganese naphthenate, an organic nickel compound such as nickel naphthenate, an organic cobalt compound such as cobalt naphthenate, an organic copper compound such as copper octenate, and an organic bismuth compound such as bismuth octylate and bismuth neodecanoate.

Examples of the amines include tertiary amines such as triethyl amine, tri-n-propyl amine, triisopropyl amine, tri-n-butyl amine, triisobutyl amine, N,N-dimethyl benzyl amine, N-methyl morpholine, N,N-dimethyl cyclohexyl amine, dimethyl dipropylene triamine, pentamethyl diethylene triamine, bis(2-dimethyl aminoethyl) ether, N-methylmorpholine, N,N'-dimethyl piperazine, triethylene diamine, N,N,N',N'-tetramethyl ethylene diamine, and bicyclooctane diamine (DABCO),

quaternary ammonium salts such as tetraethyl ammonium hydroxide, imidazoles such as imidazole, 1,2-dimethyl imidazole, benzyl methyl imidazole, and 2-ethyl-4-imidazole,

pyrazoles such as pyrazole and 3,5-dimethyl pyrazole, Hindered amines such as 1,2,2,6,6-pentamethyl-4-piperidinol, 1,2,2,6,6-pentamethyl-4-hydroxy ethyl-4-piperidinol, methyl-1,2,2,6,6-pentamethyl-4-piperidyl sebacate, a mixture of methyl-1,2,2,6,6-pentamethyl-4-piperidyl sebacate and bis(1,2,2,6,6-pentamethyl-4-piperidyl) sebacate, bis(1,2,2,6,6-pentamethyl-4-piperidyl) sebacate, bis (2,2,6,6-tetramethyl-1-(octyl oxy)-4-piperidyl) sebacate, bis(1,2,2,6,6-pentamethyl-4-piperidyl) [[3,5-bis(1,1-dimethyl ethyl)-4-hydroxy phenyl] methyl] butyl malonate, and tetrakis(1,2,2,6,6-pentamethyl-4-piperidyl)
butane-1,2,3,4-tetracarboxylate.

Amines such as imidazoles, pyrazoles, and hindered amines which also function as a blocking agent of an isocyanate group are preferable as the amines, and the hindered amines are more preferable.

The hindered amine is also used as a light stabilizer, and examples of a commercially available product are able to include Lowilite 76 and Lowilite 92 manufactured by Chemtura Corporation, Tinuvin 144, Tinuvin 292, and Tinuvin 765 manufactured by BASF SE, ADEKA STAB LA-52 and ADEKA STAB LA-72 manufactured by ADEKA CORPORATION, JF-95 manufactured by JOHOKU CHEMICAL CO. , LTD, and the like.

Examples of acids include a sulfonic acid such as methane sulfonic acid, benzene sulfonic acid, and toluene sulfonic acid, and an acidic phosphoric acid ester such as a phosphoric acid monoester and a phosphoric acid diester. A specific example of the acidic phosphoric acid ester is represented by General Formula (2).

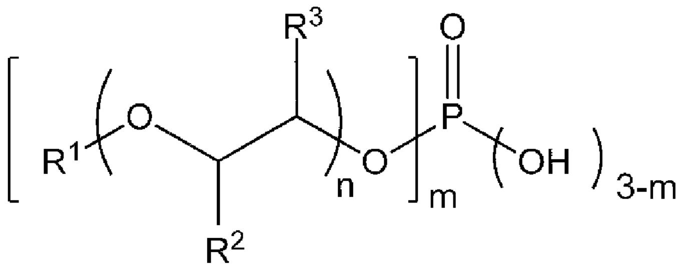

(2)

In the formula, m represents an integer of 1 or 2, n represents an integer of 0 to 18, $R^1$ represents an alkyl group having 1 to 20 carbon atoms, and $R^2$ and $R^3$ each independently represent a hydrogen atom, a methyl group, or an ethyl group. It is preferable that the number of carbon atoms in []m is 4 to 20.

In General Formula (2), examples of $R^1$ are able to include an organic residue derived from a straight chain aliphatic compound such as methane, ethane, propane, butane, pentane, hexane, heptane, octane, nonane, decane, undecane, dodecane, tetradecane, and hexadecane; an organic residue derived from a branched chain aliphatic compound such as 2-methyl propane, 2-methyl butane, 2-methyl pentane, 3-methyl pentane, 3-ethyl pentane, 2-methyl hexane, 3-methyl hexane, 3-ethyl hexane, 2-methyl heptane, 3-methyl heptane, 4-methyl heptane, 3-ethyl heptane, 4-ethyl heptane, 4-propyl heptane, 2-methyl octane, 3-methyl octane, 4-methyl octane, 3-ethyl octane, 4-ethyl octane, and 4-propyl octane; an organic residue derived from an alicyclic compound such as cyclopentane, cyclohexane, 1,2-dimethyl cyclohexane, 1,3-dimethyl cyclohexane, and 1,4-dimethyl cyclohexane; and the like, but are not limited only to these exemplified compounds.

The acidic phosphoric acid ester is also used as a release agent at the time of manufacturing a plastic lens, and examples of a commercially available product are able to include Zelec UN manufactured by STEPAN Company, JP Series manufactured by JOHOKU CHEMICAL CO., LTD, Phosphanol Series manufactured by TOHO Chemical Industry Co., Ltd., AP Series and DP Series manufactured by DAIHACHI CHEMICAL INDUSTRY CO., LTD., and the like.

A polymerization catalyst of present embodiment is not particularly limited, but a non-metal catalyst is preferable in consideration of synthesizing a polyurethane resin for an optical material from a plant-derived raw material, and of providing a plastic lens which is in harmony with global environment. A catalyst of amines and acids is used as the non-metal catalyst, and among them, the amines and the acids are particularly preferable in which the catalyst itself is able to be obtained by using a plant-derived compound. In addition, it may be preferable that specific cyclic amines are used together with phosphoric acid esters as the amines from a viewpoint of adjusting urethanization reactivity.

Particularly preferred examples of the amines include a mixture of methyl-1,2,2,6,6-pentamethyl-4-piperidyl sebacate and bis(1,2,2,6,6-pentamethyl-4-piperidyl) sebacate (Tinuvin 292, manufactured by BASF SE). In addition, particularly preferred examples of the acids include acidic phosphoric acid ester (Zelec UN, manufactured by STEPAN Company).

The catalyst is able to be independently used, or two or more types thereof are able to be used in combination.

The added amount of the amines as the catalyst is preferably 0.1 parts by weight to 6.0 parts by weight, and is more preferably 1.0 part by weight to 3.0 parts by weight, with respect to a total of 100 parts by weight of the constituents (a) to (d). The added amount of the acids as the catalyst is preferably 0.1 parts by weight to 6.0 parts by weight, and is more preferably 1.0 part by weight to 3.0 parts by weight, with respect to a total of 100 parts by weight of the constituents (a) to (d).

(Other Components)

The polymerizable composition of present embodiment is able to include an additive such as a light stabilizer, an ultraviolet absorber, an antioxidant, a coloring preventing agent, a dye, a bluing agent, and a resin improver, according to the purpose.

A hindered amine-based compound is able to be used as the light stabilizer.

Examples of the hindered amine-based compound are able to include Lowilite 76 and Lowilite 92 manufactured by Chemtura Corporation, Tinuvin 123, Tinuvin 144, Tinuvin 292, Tinuvin 765, and Tinuvin 770DF manufactured by BASF SE, ADEKA STAB LA-52 and ADEKA STAB LA-72 manufactured by ADEKA CORPORATION, JF-90 and JF-95 manufactured by JOHOKU CHEMICAL CO., LTD, and the like.

Examples of the bluing agent include a bluing agent which has absorption band in a wavelength region of orange to yellow in a visible light region, and has a function of adjusting a hue of an optical material comprised of a resin. More specifically, the bluing agent includes substances exhibiting a blue color to a violet color.

Examples of the ultraviolet absorber to be used include a benzophenone-based ultraviolet absorber such as 2,2'-dihydroxy-4-methoxy benzophenone, 2-hydroxy-4-acryloyl oxy benzophenone, 2-hydroxy-4-acryloyl oxy-5-tert-butyl benzophenone, and 2-hydroxy-4-acryloyl oxy-2',4'-dichlorobenzophenone, a triazine-based ultraviolet absorber such as 2-[4-[(2-hydroxy-3-dodecyl oxy propyl) oxy]-2-hydroxy phenyl]4,6-bis(2,4-dimethyl phenyl)-1,3,5-triazine, 2-[4-(2-hydroxy-3-tridecyl oxy propyl) oxy]-2-hydroxy phenyl]-4,6-bis(2,4dimethyl phenyl)-1,3,5-triazine, 2-[4-[(2-hydroxy-3-(2'-ethyl) hexyl) oxy]-2-hydroxy phenyl]-4,6-bis(2,4-dimethyl phenyl)-1,3,5-triazine, 2,4-bis(2-hydroxy-4-butyl oxy phenyl)-6-(2,4-bis-butyl oxy phenyl)-1,3,5-triazine, and 2-(2-hydroxy-4-[1-octyl oxy carbonyl ethoxy] phenyl)-4,6-bis(4-phenyl phenyl)-1,3,5-triazine, a benzotriazole-based ultraviolet absorber such as 2-(2H-benzotriazole-2-yl)-4-methyl phenol, 2-(2H-benzotriazole-2-yl)-4-tert-octyl phenol, 2-(2H-benzotriazole-2-yl)-4,6-bis(1-methyl-1-phenyl ethyl) phenol, 2-(2H-benzotriazole-2-yl)-4,6-di-tert-pentyl phenol, 2-(5-chloro-2H-benzotriazole-2-yl)-4-methyl-6-tert-butyl phenol, 2-(5-chloro-2H-benzotriazole-2-yl)-2,4-tert-butyl phenol, and 2,2'-methylene bis[6-(2H-benzotriazole-2-yl)-4-(1,1,3,3-tetramethyl butyl) phenol], and the like, and the benzotriazole-based ultraviolet absorber such as the 2-(2H-benzotriazole-2-yl)-4-tert-octyl phenol or the 2-(5-chloro-2H-benzotriazole-2-yl)-4-methyl-6-tert-butyl phenol is preferable. The ultraviolet absorber is able to be independently used, or two or more types thereof are able to be used in combination.

The added amount of the additive is preferably 0.05 parts by weight to 2.0 parts by weight, and is more preferably 0.05 parts by weight to 1.5 parts by weight, with respect to a total of 100 parts by weight of the constituents (a), (c) and (d).

The polymerizable composition for an optical material of present embodiment is able to be obtained by mixing the components described above. A mixing method is able to be performed by a known method of the related art.

In the polymerizable composition for an optical material of present embodiment, a molar ratio of the total number of hydroxyl groups of the constituent (c) and (d) to the total number of isocyanate groups of the constituent (a) is in a range of 0.8 to 1.2, is preferably in a range of 0.85 to 1.15, and is more preferably in a range of 0.9 to 1.1. In the range described above, it is possible to obtain a molded product which is suitably used as an optical material, in particular, a spectacle lens.

(Alicyclic Polyisocyanate (b))

The polymerizable composition for an optical material of present embodiment is able to further contain alicyclic polyisocyanate (b).

Examples of the alicyclic polyisocyanate (b) are able to include 3-isocyanate methyl-3,5,5-trimethyl cyclohexyl isocyanate, isophorone diisocyanate, 4,4'-, 2,4'-, or 2,2'-dicyclohexyl methane diisocyanate or a mixture thereof, 1,4- or 1, 3-bis (isocyanate methyl) cyclohexane or a mixture thereof, 1,4- or 1,3-bis(isocyanate ethyl) cyclohexane or a mixture thereof, bis(isocyanate methyl)-bicyclo[2.2.1] heptane, 1,3-cyclopentane diisocyanate, 1,4- or 1,3-cyclohexane diisocyanate or a mixture thereof, methyl-2,4-cyclohexane diisocyanate, methyl-2,6-cyclohexane diisocyanate, and the like.

Furthermore, the bis (isocyanate methyl)-bicyclo [2.2.1] heptane is an isomer comprised of mixture of 2,5-bis(isocyanate methyl)-bicyclo[2.2.1] heptane and 2,6-bis(isocyanate methyl)-bicyclo[2.2.1] heptane. In present embodiment, the compound comprised of the isomer mixture is used as one type of compound.

The alicyclic polyisocyanate is able to be independently used, or two or more types thereof are able to be used in combination. In present embodiment, the bis(isocyanate methyl)-bicyclo[2.2.1] heptane is preferably used as the alicyclic polyisocyanate (b) from a viewpoint of improving heat resistance of a molded product to be obtained.

((Poly)Glycerin Fatty Acid Esters (e))

The polymerizable composition for an optical material of present embodiment contains the (poly)glycerin fatty acid esters (e) represented by General Formula (1).

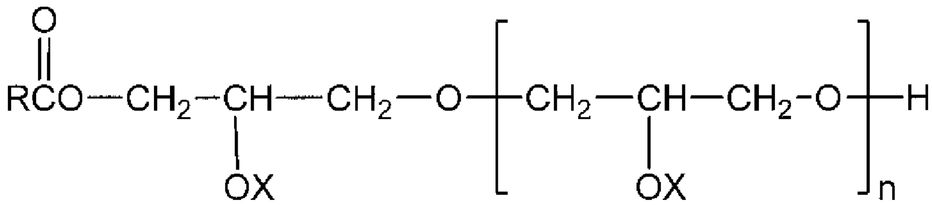

(1)

In the formula, R represents a C5 to C19 alkyl group or a C5 to C19 alkenyl group, and the alkyl group or the alkenyl group may have a straight chain or a branched chain. It is preferable that R is an alkyl group having 6 to 19 carbon atoms.

X represents a hydrogen atom or a R'CO group (the definition of R' is the same as that of R described above), and a plurality of Xs may be identical to each other or different from each other. It is preferable that X is a hydrogen atom. n represents an integer of 0 to 3.

The (poly) glycerin fatty acid esters (e) represented by General Formula (1) are able to be obtained by esterification between glycerin or polyglycerin and a fatty acid having 6 to 20 carbon atoms.

Diglycerin caprylate, tetraglycerin monolaurate, tetraglycerin ricinoleate, isostearic acid diglyceryl, diglycerin laurate, stearic acid glyceryl, and the like are exemplified as specific examples of the (poly)glycerin fatty acid esters (e).

The added amount of the (poly)glycerin fatty acid esters (e) is preferably 3.0 parts by weight to 20.0 parts by weight, and is more preferably 5.0 parts by weight to 15.0 parts by weight, with respect to a total of 100 parts by weight of the constituents (a), (b), (d), and (e).

A molar ratio ((d) / (e) + (d)) of a hydroxyl group of the polyol (d) to the total number of hydroxyl groups of the (poly) glycerin fatty acid esters (e) and the polyol (d) is 0.5 to 0.9, is preferably 0.6 to 0.9, and is more preferably 0.6 to 0.81.

By setting the composition of present embodiment to satisfy the molar ratios described above, it is possible to obtain a polyurethane molded product which has excellent physical properties such as releasability, transparency, and heat resistance, and has an excellent balance with respect to other optical properties in a range where the degree of biomass of the polyurethane molded product is within a specific range (20% to 75%).

(Alicyclic Polyisocyanate (b))

As described above, the polymerizable composition for an optical material of present embodiment is able to further contain the alicyclic polyisocyanate (b).

It is preferable that the alicyclic polyisocyanate (b) is obtained from a plant-derived raw material, and a compound which is not obtained from the plant-derived raw material is able to be used. At this time, the compound is able to be used such that the degree of biomass of the polyurethane molded product is in a predetermined range (20% to 75%).

When the alicyclic polyisocyanate (b) is contained, the molar ratio ((d) / (e) + (d)) of the hydroxyl group of the polyol (d) to the total number of hydroxyl groups of the (poly) glycerin fatty acid esters (e) and the polyol (d) is satisfied, and a molar ratio ((b) / (a) + (b)) of an isocyanate group of the alicyclic polyisocyanate (b) to the total number of isocyanate groups of the polyisocyanate (a) and the alicyclic polyisocyanate (b) is 0.2 to 0.85, is preferably 0.2 to 0.65, and is more preferably 0.35 to 0.65.

By setting the composition of present embodiment to satisfy all of the molar ratios described above, it is possible to provide polyurethane molded product having a degree of biomass within a specific range (20% to 75%). According to the polyurethane molded product obtained from the composition of present embodiment, it is possible to obtain an optical material which has excellent physical properties such as releasability, transparency, and heat resistance, and has an excellent balance with respect to other optical properties.

(Catalyst)

As described above, a catalyst is able to be used.

The added amount of the amines as the catalyst is preferably 0.1 parts by weight to 6.0 parts by weight, and is more preferably 1.0 part by weight to 3.0 parts by weight, with respect to a total of 100 parts by weight of the constituents (a), (b), (d), and (e). The added amount of the acids as the catalyst is preferably 0.1 parts by weight to 7.0 parts by weight, and is more preferably 1.0 part by weight to 4.0 parts by weight, with respect to a total of 100 parts by weight of the constituents (a), (b), (d), and (e).

(Other Components)

As described above, the polymerizable composition of present embodiment is able to include an additive such

as a light stabilizer, an ultraviolet absorber, an antioxidant, a coloring preventing agent, a dye, a bluing agent, and a resin improver, according to the purpose.

The added amount of the additive is preferably 0.05 parts by weight to 2.0 parts by weight, and is more preferably 0.05 parts by weight to 1.5 parts by weight, with respect to a total of 100 parts by weight of the constituents (a) to (e).

The polymerizable composition for an optical material of present embodiment is able to be obtained by mixing the components described above. A mixing method is able to be performed by a known method of the related art.

In the polymerizable composition for an optical material of present embodiment, a molar ratio of the total number of hydroxyl groups of the constituents (c) to (e) to the total number of isocyanate groups of the constituents (a) and (b) is in a range of 0.8 to 1.2, is preferably in a range of 0.85 to 1.15, and is more preferably in a range of 0.9 to 1.1. In the range described above, it is possible to obtain a molded product which is suitably used as an optical material, in particular, a spectacle lens.

[Polyurethane Molded Body]

By polymerizing and curing the polymerizable composition for an optical material of present embodiment, it is possible to obtain a polyurethane molded product which is obtained from a plant-derived raw material and which is in harmony with global environment. It is possible to set the degree of biomass of the polyurethane molded product to be 20% to 75%.

It is preferable that a plant-derived raw material is used, and a material having a high degree of biomass is used, from a viewpoint of the application of non-fossil resources. However, when the degree of biomass of the molded product is improved, physical properties or the like may decrease.

As a result of intensive studies of the present inventors, it has been found that a polyurethane molded product having a degree of biomass of 20% to 75% and an optical material are obtained by the composition of present embodiment, and it is possible to obtain a polyurethane molded product and an optical material which are able to contribute to the application of the non-fossil resources, and have excellent releasability, transparency, and heat resistance, and an excellent balance in physical properties such as a refractive index, the Abbe number, and releasability, and thus, the present invention has been completed.

Tg of the polyurethane molded product is 60°C or higher, is preferably 70°C or higher, and is more preferably 80°C or higher.

[Uses]

An optical material comprised of the polyurethane molded product for an optical material of the invention is able to be obtained in various shapes by changing a mold at the time of performing casting polymerization. Specifically, the optical material is able to be used in various applications such as a plastic lens, a camera lens, a light emitting diode (LED), a prism, an optical fiber, an information recording substrate, a filter, a light emitting diode, an optical lens for an automobile, and an optical lens for a robot. In particular, the optical material is suitable for an optical material or an optical element of a plastic lens, a camera lens, a light emitting diode, and the like.

Examples of the plastic lens are able to include a plastic spectacle lens comprised of a polyurethane molded product and a plastic polarization lens in which a layer comprised of a polyurethane resin is laminated over at least one surface of a polarizing film.

[Process for Producing Plastic Spectacle Lens]

A process for producing the plastic spectacle lens of present embodiment includes the following steps.

Step (1) : The polymerizable composition for an optical material of present embodiment is injected into a lens casting mold.

Step (2) : The polymerizable composition for an optical material in the lens casting mold is polymerized and cured.

Hereinafter, the manufacturing method will be sequentially described according to each of the steps.

Step (1)

In this step, the polymerizable composition of present embodiment is injected into a mold (the lens casting mold) held by a gasket, tape, or the like. At this time, it is preferable that, as necessary, a degassing treatment under reduced pressure, a filtration treatment under pressure or reduced pressure, or the like, is performed according to physical properties required to a molded product to be obtained.

Step (2)

In this step, polymerization of the polymerizable composition casted in the mold at a predetermined temperature is initiated, and the composition is polymerized. The polymerization conditions are considerably different according to the type of polyisocyanate or alcohol to be used, the shape of the mold, and the like, and thus, the conditions are not limited, and the polymerization is performed at a temperature of 0°C to 140°C for 1 hour to 48 hours.

A coating layer may be provided over one surface or both surfaces of the obtained plastic spectacle lens, as necessary. Examples of the coating layer include a primer layer, a hard coat layer, an anti-reflection layer, a defogging coat layer, a stain-proofing layer, a water repellent layer, and the like. The coating layer may be each independently used, or a plurality of coating layers may be used by being laminated. When the coating layer is provided over both of the surfaces of the plastic spectacle lens, the same coating layers may be provided over both of the surfaces or different coating layers may be provided over both of the surfaces.

The coating layer may be used together with an ultraviolet absorber for protecting lenses or eyes from an ultraviolet ray, an infrared absorber for protecting lenses or eyes from an infrared ray, a light stabilizer or an antioxidant lens for improving weather resistance, a dye or a pigment, a photochromic dye or a photochromic pigment, and an antistatic agent for increasing fashionability of the lens, and a known additive for increasing performance of the lens. In a layer which is formed by coating, various leveling agents for improving coating properties may be used.

In general, the primer layer is formed between the hard coat layer described below and the optical lens. The primer layer is a coating layer for improving adhesiveness between the hard coat layer and the lens formed on the coating layer, and is able to improve impact resistance, according to a case. In the primer layer, any material is able to be used insofar as the material has high adhesiveness with respect to the obtained optical lens, and in general, a primer composition including a urethane-based resin, an epoxy-based resin, a polyester-based resin, a melanin-based resin, and a polyvinyl acetal as a main component, and the like are used. In the primer composition, a suitable solvent which does not affect the lens may be used in order to adjust viscosity of the composition. Naturally, a solvent may not be used.

The primer composition is able to be formed by either a coating method or a dry method. When the coating method is used, the primer composition is applied to a lens by a known coating method such as spin coating and dip coating, and then is solidified, and thus, a primer layer is formed. When the dry method is performed, the primer layer is formed by a known dry method such as CVD method or vacuum vapor deposition method. When the primer layer is formed, in order to improve adhesiveness, the surface of the lens may be subjected to a pretreatment such as an alkali treatment, a plasma treatment, and an ultraviolet ray treatment, as necessary.

The hard coat layer is a coating layer for applying a function such as scratch resistance, abrasion resistance, moisture resistance, warm water resistance, heat resistance, and weather resistance to the surface of the lens.

In general, a hard coat composition which includes an organic silicon compound having curing properties and one type or more oxide fine particles of an element selected from an element group consisting of Si, Al, Sn, Sb, Ta, Ce, La, Fe, Zn, W, Zr, In, and Ti and/or at least one kind of fine particles configured of a composite oxide of at least two kinds of elements selected from the element group is used in the hard coat layer.

It is preferable that the hard coat composition includes at least one of amines, amino acids, a metal acetyl acetate complex, an organic acid metal salt, perchloric acids, a salt of perchloric acids, acids, a metal chloride, and a multifunctional epoxy compound in addition to the component described above. In the hard coat composition, a suitable solvent which does not affect the lens may be used. Naturally, a solvent may not be used.

In general, the hard coat layer is formed by coating the hard coat composition using a known coating method such as spin coating and dip coating, and then by curing the composition. Examples of a curing method include a thermal curing method, a curing method using an energy ray such as an ultraviolet ray or a visible light ray, and the like. In order to suppress the occurrence of an interference fringe, it is preferable that a difference between the refractive index of the hard coat layer and the refractive index of the lens is in a range of $\pm 0.1$.

In general, the anti-reflection layer is formed on the hard coat layer, as necessary. The anti-reflection layer includes an inorganic-based anti-reflection layer and an organic-based anti-reflection layer, and when the anti-reflection layer is the inorganic-based anti-reflection layer, the anti-reflection layer is formed by a dry method such as a vacuum vapor deposition method, a sputtering method, an ion plating method, an ion beam assist method, and a CVD method using an inorganic oxide such as $SiO_2$ and $TiO_2$. When the anti-reflection layer is the organic-based anti-reflection layer, the anti-reflection layer is formed by a wet method using an organic silicon compound and a composition including silica-based fine particles having an inner cavity.

The anti-reflection layer is configured of a single layer or a multilayer, and when the anti-reflection layer comprised of a single layer is used, it is preferable that the refractive index of the anti-reflection layer is less than the refractive index of the hard coat layer by at least 0.1 or more. In order to effectively exhibit an anti-reflection function, an anti-reflection film comprised of a multilayer film is preferable, and in this case, a low refractive index film and a high refractive index film are alternately laminated. Even in this case, it is preferable that a difference between the refractive indices of the low refractive index film and the high refractive index film is 0.1 or more. Examples of the high refractive index film

include a film of ZnO, $TiO_2$, $CeO_2$, $Sb_2O_5$, $SnO_2$, $ZrO_2$, $Ta_2O_5$, and the like, and examples of the low refractive index film include a $SiO_2$ film, and the like.

A defogging coat layer, a stain-proofing layer, and a water repellent layer may be formed on the anti-reflection layer, as necessary. In a method of forming the defogging coat layer, the stain-proofing layer, and the water repellent layer, a treatment method, a treatment material, and the like are not particularly limited insofar as an anti-reflection function is adversely affected, and a known defogging coat treatment method, a known stain-proofing treatment method, a known water repellent treatment method, and a known material are able to be used. For example, examples of the defogging coat treatment method and the stain-proofing treatment method include a method of covering the surface with a surfactant, a method of applying water absorbency to the surface by adding a hydrophilic film, a method of increasing water absorbency by covering the surface with fine concavities and convexities, a method of applying water absorbency by using photocatalyst activity, a method of preventing a water droplet from being attached to the surface by performing a super water repellent treatment, and the like. In addition, examples of the water repellent treatment method include a method of forming a water repellent treatment layer by performing vapor deposition or sputtering with respect to a fluorine-containing silane compound and the like, a method of forming a water repellent treatment layer by dissolving a fluorine-containing silane compound in a solvent, and then by applying the compound onto the surface, and the like.

In the plastic spectacle lens of present embodiment, a coloring matter according to the purpose may be used, or the plastic spectacle lens may be used by being dyed, in order to applying fashionability or photochromic properties. The lens is able to be dyed by a known dyeing method, and in general, is dyed by the following method.

In general, the method for dyeing the lens is a method in which a lens material which has been finished so as to be a predetermined optical surface is dipped in a dyeing liquid where a coloring matter to be used is dissolved or is homogeneously dispersed (a dyeing step), and then, as necessary, the lens is heated and the coloring matter is fixed (a step of annealing after dyeing). The coloring matter used in the dyeing step is not particularly limited insofar as the coloring matter is a known coloring matter, and in general, an oil-soluble dye or a dispersion dye is used. A solvent used in the dyeing step is not particularly limited insofar as the coloring matter to be used is able to be dissolved or is able to be homogeneously dispersed in the solvent. In the dyeing step, as necessary, a surfactant for dispersing the coloring matter in the dyeing liquid or a carrier for accelerating dyeing may be added. In the dyeing step, the coloring matter and the surfactant which is added as necessary were dispersed in water or a mixture of water and an organic solvent, and thus, a dyeing bath is prepared, and the optical lens is dipped in the dyeing bath and is dyed at a predetermined temperature for a predetermined time. The dyeing temperature and the dyeing time are changed according to a desired coloring concentration, and in general, the dyeing temperature may be lower than or equal to 120°C and the dyeing time may be several minutes to several tens of hours, and the dyeing is performed at a dye concentration of the dyeing bath of 0.01 weight% to 10 weight%. In addition, when it is difficult to performing dyeing, the dyeing may be performed under pressure. The step of annealing after dyeing, which is performed as necessary is a step of performing a heat treatment with respect to the dyed lens material. In the heat treatment, water remaining on the surface of the lens material which has been dyed in the dyeing step is removed by a solvent or the like, or for example, the lens is retained in a furnace such as an infrared ray heating furnace in an air atmosphere or a resistance heating furnace for a predetermined time. In the step of annealing after dyeing, water penetrating into the lens material at the time of performing dyeing is removed while preventing decoloration of the dyed lens material (a decoloration preventive treatment).

[Process for Producing Plastic Polarization Lens]

A process for producing a plastic polarization lens of present embodiment includes the following steps.

Step (a) : A polarizing film is fixed into a lens casting mold in a state where at least one surface of the polarizing film is separated from the mold.
Step (b) : The polymerizable composition for an optical material of present embodiment is injected into a gap between the polarizing film and the mold.
Step (c) : A layer comprised of a polyurethane resin is laminated over at least one surface of the polarizing film by polymerizing and curing the polymerizable composition for an optical material.

Hereinafter, the manufacturing method will be sequentially described according to each of the steps.

Step (a)

The polarizing film comprised of thermoplastic polyester or the like is disposed in a space of the lens casting mold such that at least one surface of the film is parallel to the facing inner surface of the mold. A gap portion is formed between the polarizing film and the mold. The polarizing film may be molded in advance.

Step (b)

Next, in the space of the lens casting mold, the polymerizable composition for an optical material of present embodiment is injected into the gap portion between the mold and the polarizing film by a predetermined injection unit.

Step (c)

Next, the lens casting mold into which the polymerizable composition for an optical material is injected and onto which the polarizing film is fixed is heated in a heating device such as an oven or water for several hours to several tens of hours according to a predetermined temperature program, and curing and molding are performed.
The polymerizing and curing temperature is not able to be limited since conditions are different according to the composition of the polymerizable composition, the type of catalyst, the shape of the mold, and the like, but the polymerizing and curing is performed at a temperature of 0°C to 140°C for 1 hour to 48 hours.
The plastic polarization lens of present embodiment in which the layer comprised of the polyurethane resin is laminated over at least one surface of the polarizing film is able to be obtained by being taken out from the lens casting mold after the curing and molding ends.
In order to reduce distortion due to polymerization, it is preferable that the plastic polarization lens of present embodiment is subjected to an annealing treatment by heating the released lens.
The plastic polarization lens of present embodiment, as necessary, is used by disposing a coating layer over one surface or both surfaces thereof. Examples of the coating layer include a primer layer, a hard coat layer, an anti-reflection layer, a defogging coat layer, a stain-proofing layer, a water repellent layer, and the like, as with the plastic spectacle lens.
As described above, the embodiments of the present invention are described, but the embodiments are examples of the present invention, and various configurations other than the configurations described above are able to be adopted within a range not impairing the effects of the present invention.

[Examples]

Hereinafter, the present invention will be described in more detail with reference to Example C, but the present invention is not limited thereto. In the following description, unless otherwise particularly stated, "parts" and % are based on a weight.

<Reference Example A>

(Measurement Method of Concentration (Unit: Weight%) of Unreacted 1,5-Pentamethylene Diisocyanate in Polyisocyanate)

The concentration of unreacted 1, 5-pentamethylene diisocyanate in polyisocyanate was obtained from a calibration curve prepared by using 1,5-pentamethylene diisocyanate obtained in Reference Producing Example A2 described below as a specimen by using the following device.

Device: Prominence (manufactured by Shimadzu Corporation)
Column: SHISEIDO SILICA SG-120
Column Temperature: 40°C
Eluent: n-Hexane/Methanol/1,2-Dichloroethane = 90/5/5 (Volume Ratio)
Flow Rate: 0.2 ml/min
Detector: UV 225nm
R. Time: 16.9 min
Measurement Solution Adjustment: 0.1 g of a sample and dibenzyl amine having a molar ratio approximately 20 times the molar ratio of the sample were added to a volumetric flask of 50 ml, and 1,2-dichloroethane was mixed thereto, and thus, a measurement solution was obtained.
Measurement: 1 μL of the measurement solution was injected, and thus, measurement was performed.

(Measurement Method of Concentration (Unit: Weight%) of Isocyanate Group of Polyisocyanate)

The concentration of an isocyanate group of the polyisocyanate was obtained by being measured by an n-dibutyl amine method using a potential difference titration device on the basis of JIS K-1556.

(Measurement Method of Concentration (Unit: Weight%) of Isocyanurate Trimer in Polyisocyanate)

An area ratio of a peak corresponding to a molecular weight three times the molecular weight of 1,5-pentamethylene isocyanate to the total peak area was obtained as the concentration (weight%) of an isocyanurate trimer in the polyisocyanate according to a chromatogram obtained by gel permeation chromatography by using the following device.

Device: HLC-8020 (manufactured by TOSOH CORPORATION)
Column: Series Connection of G1000HXL, G2000HXL, and G3000HXL (manufactured by TOSOH CORPORATION)
Column Temperature: 40°C
Eluent: Tetrahydrofuran
Flow Rate: 0.8 ml/min
Detector: Differential Refractometer
R. Time: Isocyanurate trimer 27.2 min
Standard Substance: Polyethylene Oxide (TSK Standard Polyethylene Oxide, manufactured by TOSOH CORPORATION)
Measurement: 30 mg of a sample was dissolved in 10 ml of tetrahydrofuran, and 100 μL of the obtained solution was injected, and thus, measurement was performed.

(Calculation Method of Average Number of Functional Groups of Polyisocyanate)

The average number of functional groups of the polyisocyanate was calculated by the following expression using a number average molecular weight obtained by the same measurement as that of the concentration of the isocyanurate trimer in the polyisocyanate and the concentration of the isocyanate group of the polyisocyanate.

(Average Number of Functional Groups of Polyisocyanate) = (Number Average Molecular Weight of Polyisocyanate) × (Concentration of Isocyanate Group of Polyisocyanate) / 4202

(Measurement Method of Hydroxyl Value of Polyol)

Hydroxyl Value (mgKOH/g) : Measured on the basis of JIS K1557-1 (B Method).

(Calculation Method of Average Number of Functional Groups of Polyol)

The average number of functional groups of the polyol was calculated by the following expression.

$$\Sigma(Mn / MWn \times fn) / \Sigma(Mn / MWn)$$

Mn: Part by Weight of Multifunctional Alcohol
MWn: Molecular Weight of Multifunctional Alcohol
fn: Number of Hydroxyl Groups in One Molecule of Multifunctional Alcohol

(Calculation Method of Degree of Biomass (Unit: %) of Polyisocyanate (a) and Polyol (c))

The degree of biomass of polyisocyanate and polyol described in Reference Synthesis Examples A1 to A11 was calculated by the following expression.

Number of Plant-Derived Carbon Atoms / (Number of Plant-Derived Carbon Atoms + Number of Petroleum-Derived Carbon Atoms) × 100

(Calculation Method of Degree of Biomass (Unit: %) of Polyurethane Molded Body)

The degree of biomass of a polyurethane molded product described in Reference Examples A1 to A7 and Comparative Examples A1 and A2 was calculated by the following expression.

{[Part by Weight of (a) × Degree of Biomass of (a) /100] + [Part by Weight of (c) × Degree of Biomass of (c) / 100] + [Part by Weight of (d) × Degree of Biomass of (d) / 100]} / [Total Weight (Part by Weight) of (a) + (c) + (d)]

In the expression described above, (a), (c), and (d) are as follows.

(a): Polyisocyanate (a)
(c): Polyol (c)
(d): Polyol (d)

The degree of biomass of the polyurethane molded product was obtained by using the value of the degree of biomass of the polyisocyanate (a) and the polyol (c) which was calculated by the calculation method described above. The degree of biomass of the polyurethane molded product was obtained by setting the degree of biomass of the polyol (d) to 100%.

(Performance Testing Method of Lens)

A lens obtained by polymerization was evaluated by performing a performance test. In the performance test, a refractive index and the Abbe number, heat resistance, and specific gravity were evaluated by the following testing method.

- Refractive Index (ne) and Abbe Number (νe) : Measured at 20°C by using Pulfrich refractometer KPR-30 manufactured by Shimadzu Corporation.
- Heat Resistance: Glass transition temperature (Tg) in a TMA penetration method (a load of 50 g and a pin tip of 0.5 mmφ) was set as heat resistance by using TMA-60 manufactured by Shimadzu Corporation.
- Specific Gravity: Measured at 20°C by Archimedes' method.

[Reference Preparation Example A]

(Synthesis of 1,5-Pentamethylene Diisocyanate Using Plant-Derived Raw Material]

Reference Preparation Example A1 (Preparation of Fungus Body Lysate Liquid)

(Cloning of Lysine Decarbonation Enzyme Gene (cadA))

Genome DNA prepared according to an ordinary method from a cluster of Escherichia coli W3110 (ATCC27325) was used for molding PCR.

In a primer for PCR, oligonucleotide (synthesized through commission to Life Technologies Japan Ltd.) having a base sequence represented by Sequence Numbers 1 and 2 designed on the basis of a base sequence of lysine decarbonation enzyme gene (cadA) (GenBank Accession No. AP009048) was used. The primer has each restriction enzyme recognition sequence of KpnI and XbaI in the vicinity of a 5' terminal.

PCR was performed by using 25 μL of a PCR reaction liquid including 1 ng/μL of the genome DNA and 0.5 pmol/μL of each of the primers in conditions where a reaction cycle including Modification: 94°C and 30 seconds, Annealing: 55°C and 30 seconds, and Extension Reaction: 68°C and 2 minutes was repeated 30 times.

A PCR reaction product and Plasmid pUC18 (manufactured by TAKARA SHUZO CO., LTD.) were digested by KpnI and XbaI and were connected by using Ligation High (manufactured by TOYOBO CO., LTD.), and then Eschrichia

coli DH5α (manufactured by TOYOBO CO., LTD.) was transformed by using the obtained recombinant plasmid. The transformant was cultured by an LB agar medium including 100 μg/mL of Ampicillin (Am) and X-Gal (5-bromo-4-chloro-3-indolyl-β-D-galactoside), and thus, a transformant which had resistance to Am and became a white colony was obtained. The plasmid was extracted by the transformant obtained as described above.

It was confirmed that the base sequence of a segment of DNA introduced into the plasmid was a base sequence represented by Sequence Number 3 according to a general determination method of a base sequence.

The plasmid having DNA which encodes the obtained lysine decarbonation enzyme was named pCADA. The transformed escherichia coli was cultured by using pCADA, and thus, it was possible to produce a lysine decarbonation enzyme having an amino acid sequence represented by Sequence Number 4.

(Preparation of Transformant)

A cluster of Escherichia coli W3110 was transformed by a general method using pCADA, and the obtained transformant was named W/pCADA.

The transformant was vaccinated against 500 ml of an LB medium including 100 μg/mL of Am in an erlenmeyer flask which was attached with a baffle and was subjected to shake culture at 30°C until OD (660 nm) became 0.5, and then isopropyl-β-thiogalactopyranoside (IPTG) was added such that the amount of IPTG became 0.1 mmol/L and was subjected to shake culture for 14 hours. A culture liquid was subjected to centrifugal separation at 8000 rpm for 20 minutes, and thus, a fungus body was obtained. The fungus body was suspended in 20 mmol/L of a buffer solution of sodium phosphate (pH 6.0), and was subjected to ultrasonic crushing, and thus, a fungus body lysate liquid was prepared.

Reference Preparation Example A2 (Preparation of Aqueous Solution of 1,5-Pentamethylene Diamine)

120 parts by weight of a substrate solution in which L-lysine monohydrochloride (manufactured by Wako Pure Chemical Industries, Ltd.) was prepared such that the final concentration was 45 weight% and a pyridoxal phosphoric acid (manufactured by Wako Pure Chemical Industries, Ltd.) was prepared such that the final concentration was 0.15 mmol/L was added to a flask. Next, the W/pCADA fungus body lysate liquid described above (preparing a dried fungus body having a conversion weight of 0.3 g) was added and a reaction was initiated. The reaction conditions were 37°C and 200 rpm. pH of a reaction liquid was adjusted to pH 6 by 6 mol/L of a hydrochloric acid. After 24 hours, a reaction yield of 1,5-pentamethylene diamine reached 99%. pH of the reaction liquid after performing the reaction described above for 24 hours was adjusted to pH 2 by 6 mol/L of a hydrochloric acid, 0.6 parts by weight of activated charcoal (powder activated charcoal PM-SX, manufactured by Sanso Chemical Company) was added to the reaction liquid and was stirred at 25°C for 1 hour, and then filtration was performed by using filter paper (5C, manufactured by Toyo Roshi Kaisha, Ltd.). Next, pH of the filtrate was adjusted to pH 12 by sodium hydroxide, and thus, an aqueous solution of 1,5-pentamethylene diamine (an aqueous solution of 17.0 weight%) was obtained.

Reference Producing Example A1 (Preparation of 1,5-Pentamethylene Diamine)

100 parts by weight of the aqueous solution of the 1,5-pentamethylene diamine and 100 parts by weight of n-butanol were put into a liquid separating funnel at 23°C, were mixed for 10 minutes, and then were left to stand for 30 minutes. A lower layer which was a water layer was extracted, and then an upper layer which was an organic layer (the n-butanol including the 1,5-pentamethylene diamine) was extracted. As a result of measuring an extraction rate, the extraction rate was 91.6%. Next, 80 parts by weight of an extraction liquid of the organic layer was put into a four-neck flask provided with a thermometer, a distillation tower, a cooling pipe, and a nitrogen introduction pipe, an oil bath temperature was set to 120°C, and the n-butanol was distilled under reduced pressure of 10 kPa. Next, the oil bath temperature was set to 140°C, the 1,5-pentamethylene diamine was distilled under reduced pressure of 10 kPa, and thus, 1,5-pentamethylene diamine having a purity of 99.9 weight% was obtained.

Reference Producing Example A2 (Preparation of 1,5-Pentamethylene Diisocyanate)

2000 parts by weight of o-dichlorobenzene was put into a pressurization reactor attached with a jacket in which an electromagnetic induction stirrer, an automatic pressure adjusting valve, a thermometer, a nitrogen introduction line, a phosgene introduction line, a condenser, and a raw material feed pump were provided. Next, 2300 parts by weight of phosgene was added thereto from the phosgene introduction line, and stirring was initiated. Cold water passed through the jacket of the reactor, and thus, the temperature inside the reactor was maintained at approximately 10°C. A solution in which 400 parts by weight of the 1,5-pentamethylene diamine obtained in Reference Producing Example A1 was dissolved in 2600 parts by weight of o-dichlorobenzene was fed into the reactor by a feed pump for 60 minutes, and cold phosgenation was initiated at a temperature of lower than or equal to 30°C and under normal pressure. After the

feeding ended, the liquid in the pressurization reactor became a light brown white slurry-like liquid.

Next, the liquid in the reactor was pressurized to 0.25 MPa while being gradually heated up to 160°C, and was further subjected to thermal phosgenation at a pressure of 0.25 MPa and a reaction temperature of 160°C for 90 minutes. Furthermore, 1100 parts by weight of phosgene was further added during the thermal phosgenation. The liquid in the pressurization reactor became a light brown clear solution during the thermal phosgenation. After the thermal phosgenation ended, nitrogen gas passed through the reactor at 100°C to 140°C and 100 L/hour, and thus, degassing was performed.

Next, the o-dichlorobenzene was distilled under reduced pressure, and then similarly, the 1,5-pentamethylene diisocyanate was distilled under reduced pressure, and thus, 558 parts by weight of 1,5-pentamethylene diisocyanate having a purity of 98.7% was obtained.

Next, 558 parts by weight of 1,5-pentamethylene diisocyanate, and 0.02 parts by weight of tris(tridecyl) phosphite (manufactured by JOHOKU CHEMICAL CO., LTD., Product Name: JP-333E) with respect to 100 parts by weight of the 1,5-pentamethylene diisocyanate were put into a four-neck flask provided with a stirrer, a thermometer, a reflux pipe, and a nitrogen introduction pipe, a heat treatment was performed at 210°C for 2 hours under normal pressure while introducing nitrogen, and thus, 553 parts by weight of 1,5-pentamethine diisocyanate having purity of 98.3% was obtained. In the heat treatment, the yield of the 1,5-pentamethylene diisocyanate was 99.6%.

Next, the 1,5-pentamethylene diisocyanate after the heat treatment was put into a glass flask, a distillation pipe was filled with 4 elements of a filler (manufactured by Sumitomo Heavy Industries, Ltd., Product Name: Sumitomo/Sulzer Laboratory Packing EX Type), and rectification was performed under conditions of 127°C to 132°C and 2.7 KPa by using a distillation tower (manufactured by SIBATA SCIENTIFIC TECHNOLOGY LTD., Product Name: Distillation Head K Type) provided with a reflux ratio adjusting timer and a rectification device provided with a cooler while further performing reflux, and thus, 1,5-pentamethylene diisocyanate having a purity of 99.9 weight% was obtained. As a result of measuring the degree of biomass by the following method, the degree of biomass of the 1,5-pentamethylene diisocyanate was 71%.

(Measurement Method of Degree of Biomass of 1,5-Pentamethylene Diisocyanate)

The degree of biomass was measured on the basis of ASTM D6866 METHOD-B.

The 1,5-pentamethylene diisocyanate was subjected to methyl carbamation (urethanization) by methanol, and the degree of biomass of a methyl carbamate body was measured. As a result thereof, the degree of biomass was 56%. On the basis of this value, the degree of biomass of the 1,5-pentamethylene diisocyanate was obtained by the following expression.

$$\text{Number of Plant-Derived Carbon Atoms} / (\text{Number of Plant-Derived Carbon Atoms} + \text{Number of Petroleum-Derived Carbon Atoms}) \times 100$$

[Reference Synthesis Example A1]

(Synthesis of Polyisocyanate A1)

500 parts of the 1,5-pentamethylene diisocyanate obtained in Reference Producing Example A2 (hereinafter, also simply referred to as PDI), 1 part of isobutyl alcohol (hereinafter, also simply referred to as IBA), 0.3 parts of 2, 6-di (tert-butyl) -4-methyl phenol (hereinafter, also simply referred to as BHT), and 0.3 parts of tris(tridecyl) phosphite (manufactured by JOHOKU CHEMICAL CO., LTD., Product Name: JP-333E) were put into a four-neck flask provided with a stirrer, a thermometer, a reflux pipe, and a nitrogen introduction pipe, and were subjected to a reaction at 80°C for 2 hours. Next, 0.05 parts of N- (2-hydroxy propyl) -N,N,N-trimethyl ammonium-2-ethyl hexanoate (manufactured by Air Products and Chemicals Inc., Product Name: DABCO(r)TMR) was added as an isocyanuration catalyst. After performing the reaction for 50 minutes, 0.12 parts of o-toluene sulfone amide (hereinafter, also simply referred to as OTS) was added, and thus, 502 parts of polyisocyanate A1 was obtained. The amount of 1,5-pentamethylene diisocyanate-derived component configuring the polyisocyanate A1 was 99.6 weight%.

The concentration of unreacted 1,5-pentamethylene diisocyanate in the polyisocyanate A1 was 82 weight%, the concentration of an isocyanurate trimer was 12 weight%, the concentration of an isocyanate group was 49%, the average number of functional groups was 2.1, and the degree of biomass was 71%.

Hereinafter, a calculation method of the degree of biomass will be described. DABCO(r)TMR of the used isocyanuration catalyst was a mixture of 33.8 weight% of N-(2-hydroxy propyl)-N,N,N-trimethyl ammonium-2-ethyl hexanoate, 41.2 weight% of 2-ethyl hexanoic acid, and 25 weight% of ethylene glycol.

Degree of Biomass of Polyisocyanate A1 = {502 (Part by Weight of Polyisocyanate A1) × 99.8 (Amount of PDI-Derived Component Configuring Polyisocyanate A1) / 100 / 154.2 (Molecular Weight of PDI) × 5 (Number of Plant-Derived Carbon Atoms in One Molecule of PDI)} / {502 (Part by Weight of Polyisocyanate A1) × 99.8 (Amount of PDI-Derived Component Configuring Polyisocyanate A1) / 100 / 154.2 (Molecular Weight of PDI) × 7 (Number of Carbon Atoms in One Molecule of PDI) + 1 (Part by Weight of IBA) / 74.1 (Molecular Weight of IBA) × 4 (Number of Carbon Atoms in One Molecule of IBA) + 0.3 (Part by Weight of BHT) / 220.4 (Molecular Weight of BHT) × 15 (Number of Carbon Atoms in One Molecule of BHT) + 0.3 (Part by Weight of JP-333E) / 628 (Molecular Weight of JP-333E) × 39 (Number of Carbon Atoms in One Molecule of JP-333E) + 0.02 (Part By Weight of N-(2-Hydroxy Propyl)-N,N,N-Trimethyl Ammonium-2-Ethyl Hexanoate) / 118.2 (Molecular Weight of N-(2-Hydroxy Propyl)-N,N,N-Trimethyl Ammonium-2-Ethyl Hexanoate) × 6 (Number of Carbon Atoms in One Molecule of N-(2-Hydroxy Propyl)-N,N,N-Trimethyl Ammonium-2-Ethyl Hexanoate) + 0.02 (Part by Weight of 2-Ethyl Hexanoic Acid) / 144.2 (Molecular Weight of 2-Ethyl Hexanoic Acid) × 8 (Number of Carbon Atoms in One Molecule of 2-Ethyl Hexanoic Acid) + 0.01 (Part by Weight of Ethylene Glycol) / 62.1 (Molecular Weight of Ethylene Glycol) × 2 (Number of Carbon Atoms in One Molecule of Ethylene Glycol) + 0.12 (Part by Weight of OTS) / 171.2 (Molecular Weight of OTS) × 7 (Number of Carbon Atoms in One Molecule of OTS)} × 100 = 71%

[Reference Synthesis Example A2]

(Synthesis of Polyisocyanate A2)

500 parts of the 1,5-pentamethylene diisocyanate obtained in Reference Producing Example A2, 1 part of isobutyl alcohol, 0.3 parts of 2,6-di(tert-butyl)-4-methyl phenol, and 0.3 parts of tris(tridecyl) phosphite were put into a four-neck flask provided with a stirrer, a thermometer, a reflux pipe, and a nitrogen introduction pipe, and were subjected to a reaction at 80°C for 2 hours. Next, 0.05 parts of N-(2-hydroxy propyl)-N,N,N-trimethyl ammonium-2-ethyl hexanoate (manufactured by Air Products and Chemicals Inc., Product Name: DABCO(r)TMR) was added as a trimerization catalyst. After performing the reaction for 50 minutes, 0.12 parts of o-toluene sulfone amide was added. The obtained reaction liquid passed through a thin film distillation device and was distilled at a vacuum degree of 0.09 KPa and a temperature of 150°C, and thus, 401 parts of unreacted pentamethylene diisocyanate was obtained. Further, 0.02 parts of o-toluene sulfone amide was added to 100 parts of the obtained composition, and thus, 100 parts of polyisocyanate A2 was obtained. The amount of 1,5-pentamethylene diisocyanate-derived component configuring the polyisocyanate A2 was 98 weight%.

The concentration of unreacted 1,5-pentamethylene diisocyanate in the polyisocyanate A2 was less than 1 weight%, the concentration of an isocyanurate trimer was 65 weight%, the concentration of an isocyanate group was 25%, the average number of functional groups was 3.3, and the degree of biomass was 70%.

[Reference Synthesis Example A3]

(Synthesis of Polyisocyanate A3)

500 parts of the 1,5-pentamethylene diisocyanate obtained in Reference Producing Example A2, 5 parts of isobutyl alcohol, 0.3 parts of 2,6-di(tert-butyl)-4-methyl phenol, and 0.3 parts of tris(tridecyl) phosphite were put into a four-neck flask provided with a stirrer, a thermometer, a reflux pipe, and a nitrogen introduction pipe, and were subjected to a reaction at 80°C for 2 hours. Next, 0.05 parts of N-(2-hydroxy propyl)-N,N,N-trimethyl ammonium-2-ethyl hexanoate (manufactured by Air Products and Chemicals Inc., Product Name: DABCO(r)TMR) was added as an isocyanuration catalyst. After performing the reaction for 40 minutes, 0.12 parts of o-toluene sulfone amide was added. The obtained reaction liquid passed through a thin film distillation device and was distilled at a vacuum degree of 0.09 KPa and a temperature of 150°C, and thus, 405 parts of unreacted pentamethylene diisocyanate was obtained. Further, 0.02 parts of o-toluene sulfone amide was added to 100 parts of the obtained composition, and thus, 101 parts of polyisocyanate A3 was obtained. The amount of 1,5-pentamethylene diisocyanate-derived component configuring the polyisocyanate A3 was 94 weight%.

The concentration of unreacted 1,5-pentamethylene diisocyanate in the polyisocyanate A3 was less than 1 weight%, the concentration of an isocyanurate trimer was 50 weight%, the concentration of an isocyanate group was 24%, the average number of functional groups was 3, and the degree of biomass was 67%.

[Reference Synthesis Example A4]

(Synthesis of Polyisocyanate A4)

500 parts of the 1,5-pentamethylene diisocyanate obtained in Reference Producing Example A2, 1 part of isobutyl alcohol, 0.3 parts of 2,6-di(tert-butyl)-4-methyl phenol, and 0.3 parts of tris(tridecyl) phosphite were put into a four-neck flask provided with a stirrer, a thermometer, a reflux pipe, and a nitrogen introduction pipe, and were subjected to a reaction at 80°C for 2 hours. Next, 0.05 parts of N-(2-hydroxy propyl)-N,N,N-trimethyl ammonium-2-ethyl hexanoate (manufactured by Air Products and Chemicals Inc., Product Name: DABCO(r)TMR) was added as an isocyanuration catalyst. After performing the reaction for 130 minutes, 0.12 parts of o-toluene sulfone amide was added. The obtained reaction liquid passed through a thin film distillation device and was distilled at a vacuum degree of 0.09 KPa and a temperature of 150°C, and thus, 341 parts of unreacted pentamethylene diisocyanate was obtained. Further, 0.02 parts of o-toluene sulfone amide was added to 100 parts of the obtained composition, and thus, 161 parts of polyisocyanate A4 was obtained. The amount of 1,5-pentamethylene diisocyanate-derived component configuring the polyisocyanate A4 was 99 weight%.

The concentration of unreacted 1,5-pentamethylene diisocyanate in the polyisocyanate A4 was less than 1 weight%, the concentration of the isocyanurate trimer was 46 weight%, the concentration of an isocyanate group was 23%, the average number of functional groups was 3.5, and the degree of biomass was 70%.

[Reference Synthesis Example A5]

(Synthesis of Polyisocyanate A5)

12 parts of trimethylol propane (hereinafter, simply referred to as TMP) was put into a dropping funnel and was heated by a ribbon heater, and thus, TMP was dissolved. Next, 500 parts of the 1,5-pentamethylene diisocyanate obtained in Reference Producing Example A2, 0.3 parts of 2, 6-di (tert-butyl) -4-methyl phenol, and 0.3 parts of tris(tridecyl) phosphite were put into a four-neck flask provided with a stirrer, a thermometer, a reflux pipe, and a nitrogen introduction pipe and were heated up to 95°C while being stirred under nitrogen atmosphere, and then the dissolved TMP was dropped thereto for approximately 60 minutes. After that, the reaction was continuously performed until the concentration of an isocyanate group reached the calculation value.

Next, 0.05 parts of N-(2-hydroxy propyl)-N,N,N-trimethyl ammonium-2-ethyl hexanoate (manufactured by Air Products and Chemicals Inc., Product Name: DABCO(r)TMR) was added as an isocyanuration catalyst. After performing the reaction for 100 minutes, 0.12 parts of o-toluene sulfone amide was added. The obtained reaction liquid passed through a thin film distillation device and was distilled at a vacuum degree of 0.09 KPa and a temperature of 150°C, and thus, 292 parts of unreacted pentamethylene diisocyanate was obtained. Further, 0.02 parts of o-toluene sulfone amide was added to 100 parts of the obtained composition, and thus, 221 parts of polyisocyanate A5 was obtained. The amount of 1,5-pentamethylene diisocyanate-derived component configuring the polyisocyanate A5 was 94 weight%.

The concentration of unreacted 1,5-pentamethylene diisocyanate in the polyisocyanate A5 was less than 1 weight%, the concentration of an isocyanurate trimer was 30 weight%, the concentration of an isocyanate group was 22%, the average number of functional groups was 4.4, and the degree of biomass was 67%.

[Reference Synthesis Example A6]

(Synthesis of Polyol A1)

As polyol, 77 parts by weight of plant-derived glycerin (manufactured by Sakamoto Yakuhin kogyo Co., Ltd., Product Name: refined glycerin), 244 parts by weight of sucrose, and 2 parts by weight of potassium hydroxide having a purity of 96% were put into an autoclave, was subjected to nitrogen substitution, and then was heated to 90°C, and 685 parts by weight of propylene oxide (hereinafter, also simply referred to as PO) was gradually put thereinto such that the inner pressure was not greater than 0.4 MPa (a gauge pressure). After putting all of the components into the autoclave, a reaction was continuously performed at 110°C until a decrease in the inner pressure of the autoclave was not observed. After the reaction ended, remaining propylene oxide was removed under reduced pressure, and measurement was performed, and thus, the amount of unreacted PO was 5 parts by weight. An aqueous solution of a phosphoric acid of 85% with equimolar to the potassium hydroxide added at the time of preparation and 50 parts by weight of pure water were added, and neutralization and refinement were performed. After that, 0.2 weight% of an adsorbent (manufactured by Tomita Pharmaceutical Co., Ltd., Product Name: Tomix AD-600) was added to the mass of polyol calculated from the prepared glycerin and sucrose and the reacted propylene oxide, and dehydration was performed under reduced pressure, and then a filtering operation was performed. Further, 0.03 parts by weight of BHT was added to 100 parts by weight of a filtrate, and thus, polyol A1 was obtained. In the polyol A1, the hydroxyl value was 459 mgKOH/g, the average number of functional groups was 5.3, and the degree of biomass was 24%.

Hereinafter, a calculation method of the average number of functional groups will be described.

Average Number of Functional Groups of Polyol A1 = {77 (Part by Weight of Glycerin) / 92.1 (Molecular Weight of Glycerin) × 3 (Number of Hydroxyl Groups in One Molecule of Glycerin) + 244 (Part by Weight of Sucrose) / 342.3 (Molecular Weight of Sucrose) × 8 (Number of Hydroxyl Groups in One Molecule of Sucrose)} / {77 (Part by Weight of Refined Glycerin) / 92.1 (Molecular Weight of Glycerin) + 244 (Part by Weight of Sucrose) / 342.3 (Molecular Weight of Sucrose)}

Hereinafter, a calculation method of the degree of biomass will be described.

Degree of Biomass of Polyol A1 = {77 (Part by Weight of Glycerin) / 92.1 (Molecular Weight of Glycerin) × 3 (Number of Plant-Derived Carbon Atoms in One Molecule of Glycerin) + 244 (Part by Weight of Sucrose) / 342.3 (Molecular Weight of Sucrose) × 12 (Number of Plant-Derived Carbon Atoms in One Molecule of Sucrose)} / {77 (Part by Weight of Glycerin) / 92.1 (Molecular Weight of Glycerin) × 3 (Number of Plant-Derived Carbon Atoms in One Molecule of Glycerin) + 244 (Part by Weight of Sucrose) / 342.3 (Molecular Weight of Sucrose) × 12 (Number of Plant-Derived Carbon Atoms in One Molecule of Sucrose) + 680 (Part by Weight of Reacted Propylene Oxide) / 58.1 (Molecular Weight of Propylene Oxide) × 3 (Number of Carbon Atoms in One Molecule of Propylene Oxide) + 0.3 (Part by Weight of BHT) / 220.4 (Molecular Weight of BHT) × 15 (Number of Carbon Atoms in One Molecule of BHT)} × 100 = 24%

[Reference Synthesis Example A7]

(Synthesis of Polyol A2)

Polyol A2 was obtained by the same operation as that in Reference Synthesis Example A6 except that 121 parts by weight of the plant-derived glycerin, 182 parts by weight of the sucrose, and 700 parts by weight of the propylene oxide were used. The amount of propylene oxide which had been subjected to an addition polymerization reaction was 697 parts by weight. In the polyol A2, the hydroxyl value was 451 mgKOH/g, the average number of functional groups was 4.4, and the degree of biomass was 22%.

[Reference Synthesis Example A8]

(Synthesis of Polyol A3)

Polyol A3 was obtained by the same operation as that in Reference Synthesis Example A6 except that 216 parts by weight of the plant-derived sorbitol and 790 parts by weight of the propylene oxide were used. The amount of propylene oxide which had been subjected to an addition polymerization reaction was 784 parts by weight. In the polyol A3, the hydroxyl value was 396 mgKOH/g, the average number of functional groups was 6, and the degree of biomass was 15%.

[Reference Synthesis Example A9]

(Synthesis of Polyol A4)

Polyol A4 was obtained by the same operation as that in Reference Synthesis Example A6 except that 265

parts by weight of the plant-derived sorbitol and 740 parts by weight of the propylene oxide were used. The amount of propylene oxide which had been subjected to an addition polymerization reaction was 735 parts by weight. In the polyol A4, the hydroxyl value was 489 mgKOH/g, the average number of functional groups was 6, and the degree of biomass was 19%.

[Reference Synthesis Example A10]

(Synthesis of Polyol A5)

Polyol A5 was obtained by the same operation as that in Reference Synthesis Example A6 except that 232 parts by weight of the plant-derived sorbitol, 16 parts by weight of the plant-derived glycerin, and 760 parts by weight of the propylene oxide were used. The amount of propylene oxide which had been subjected to an addition polymerization reaction was 752 parts by weight. In the polyol A5, the hydroxyl value was 450 mgKOH/g, the average number of functional groups was 5.6, and the degree of biomass was 17%.

[Reference Synthesis Example A11]

(Synthesis of Polyol A6)

As polyol, 716 parts by weight of plant-derived isosorbide (manufactured by ROQUETTE Corporation, Product Name: POLYSORBP) and 2 parts by weight of dimethyl palmityl amine were put into an autoclave, were subjected to nitrogen substitution, and then 286 parts by weight of propylene oxide was gradually put thereinto such that the inner pressure was not greater than 0.4 MPa (a gauge pressure). After putting all of the components into the autoclave, a reaction was continuously performed at 110°C until a decrease in the inner pressure of the autoclave was not observed. After the reaction ended, remaining propylene oxide was removed under reduced pressure. The amount of propylene oxide which had been subjected to an addition polymerization reaction was 284 parts by weight. Further, 0.03 parts by weight of BHT was added to 100 parts by weight of a reaction liquid, and thus, polyol A6 was obtained. In the polyol A6, the hydroxyl value was 557 mgKOH/g, the average number of functional groups was 2, and the degree of biomass was 67%.

[Reference Example A1]

1.9 g of Zelec UN (Acidic Phosphoric Acid Ester: Registered Trademark, manufactured by Stepan Company), 5.0 g of glycerin, and 5.0 g of 1,3-butanediol were mixed, and were stirred and dispersed at room temperature for 5 minutes, and then 46.0 g of the polyisocyanate A2 was added thereto, and 1.4 g of Tinuvin 292 (Hindered Amine: Registered Trademark, manufactured by BASF SE) was further added thereto, and was stirred and mixed at room temperature for 1 hour. Similarly, this liquid was subjected to degassing at room temperature for 3 hours, and then was injected into a mold comprised of a glass mold and tape, was put into an oven, was gradually heated up to 30°C to 130°C for approximately 24 hours, and thus, was subjected to polymerization. After the polymerization ended, the mold was taken out from the oven, and thus, a molded product was obtained by being released from the mold. The obtained molded product had a colorless transparent appearance, and in the molded product, the refractive index (ne) was 1.52, the Abbe number (ve) was 48, the heat resistance was 89°C, the specific gravity was 1.24, and the degree of biomass was 75%.

[Reference Example A2 to Reference Example A4]

Polyol (d) and polyisocyanate (c) were mixed along with a catalyst according to the type and the prepared amount shown in Table 1, as with Reference Example A1, and then were subjected to degassing, were injected to a mold, and were subjected to polymerization, and thus, a molded product was obtained by being released from the mold, as with Reference Example A1. The physical properties of the obtained molded product are collectively shown in Table 1.

[Reference Example A5]

1.2 g of Zelec UN (Acidic Phosphoric Acid Ester: Registered Trademark, manufactured by Stepan Company), 1.0 g of polyol A6, and 5.2 g of glycerin were mixed, and were stirred and dispersed at room temperature for 5 minutes, and then 30.0 g of the polyisocyanate A2 was added thereto, and 0.9 g of Tinuvin 292 (Hindered Amine : Registered Trademark, manufactured by BASF SE) was further added thereto, and was stirred and mixed at room temperature for 1 hour. Similarly, this liquid was subjected to degassing at room temperature for 3 hours, and then was injected into a

mold comprised of a glass mold and tape, was put into an oven, was gradually heated up to 30°C to 130°C for approximately 24 hours, and thus, was subjected to polymerization. After the polymerization ended, the mold was taken out from the oven, and thus, a molded product was obtained by being released from the mold. The obtained molded product had a colorless transparent appearance, and in the molded product, the refractive index (ne) was 1.53, the Abbe number (ve) was 48, the heat resistance was 100°C, the specific gravity was 1.25, and the degree of biomass was 74%.

[Reference Example A6 to Reference Example A7]

Polyol (c), polyol (d), and polyisocyanate (a) were mixed along with a catalyst according to the type and the prepared amount shown in Table 1, as with Reference Example A5, and then were subjected to degassing, were injected to a mold, and were subjected to polymerization, and thus, a molded product was obtained by being released from the mold, as with Reference Example A5. The physical properties of the obtained molded product are collectively shown in Table 1.

[Comparative Example A1]

0.9 g of Zelec UN (Acidic Phosphoric Acid Ester: Registered Trademark, manufactured by Stepan Company), 12.1 g of isosorbide, 15.9 g of the polyisocyanate A1, and 0.7 g of Tinuvin 292 (Hindered Amine: Registered Trademark, manufactured by BASF SE) were added, and were stirred and disperses at room temperature for 1 hour. Similarly, this liquid was subjected to degassing at room temperature for 3 hours, and then was injected into a mold comprised of a glass mold and tape, was put into an oven, was gradually heated up to 30°C to 130°C for approximately 24 hours, and thus, was subjected to polymerization. A polymerization reaction was performed for a predetermined period of time, but a cured product was not obtained.

[Comparative Example A2]

1.1 g of Zelec UN (Acidic Phosphoric Acid Ester: Registered Trademark, manufactured by Stepan Company), 16.3 g of isosorbide, 17.2 g of 1,5-pentamethylene diisocyanate obtained in Reference Producing Example A2, and 0.8 g of Tinuvin 292 (Hindered Amine: Registered Trademark, manufactured by BASF SE) were added, and were stirred and disperses at room temperature for 1 hour. Similarly, this liquid was subjected to degassing at room temperature for 3 hours, and then was injected into a mold comprised of a glass mold and tape, was put into an oven, was gradually heated up to 30°C to 130°C for approximately 24 hours, and thus, was subjected to polymerization. A polymerization reaction was performed for a predetermined period of time, but a cured product was not obtained.

[Table 1]

| | Polyisocyanate | | | | Polyol | | | | | | | Catalyst | | Lens Physical Properties | | | | |
|---|---|---|---|---|---|---|---|---|---|---|---|---|---|---|---|---|---|---|
| | Polyisocyanate (a) | | | | Polyol (c) | | | | Polyol (d) | | Total OH Mol | Zelec UN (g) | Tinuvin 292 (g) | Degree of Biomass (%) | Heat Resistance Tg (°C) | Refractive Index | Abbe Number | Specific Gravity |
| | No. | Concentration of Isocyanurate Trimer (wt%) | g | NCO Mol | No. | Hydroxyl Value mg-KOH/g | g | OH Mol | g/OH Mol | | | | | | | | | |
| Example A1 | A2 | 65 | 46.0 | 0.274 | - | - | - | - | Glycerin 5.0/0.163 | 1,3-Butanediol 5.0/0.111 | 0.274 | 1. 9 | 1.4 | 75 | 89 | 1.52 | 48 | 1.24 |
| Example A2 | A2 | 65 | 44. 0 | 0.262 | - | - | - | - | Glycerin 6.0/0.195 | 1,3-Butanediol 3.0/0.067 | 0.262 | 1.8 | 1.3 | 75 | 87 | 1.53 | 48 | 1.24 |
| Example A3 | A2 | 65 | 46.5 | 0.278 | - | - | - | - | Glycerin 7.3/0.237 | Isosorbide 3.0/0.041 | 0.278 | 3.9 | 2.8 | 75 | 98 | 1.52 | 50 | 1.24 |
| Example A4 | A2 | 65 | 37.2 | 0.222 | - | - | - | - | 1,3-Butanediol 10.0/0.222 | | 0.222 | 1.6 | 1.2 | 76 | 61 | 1.52 | 48 | 1.20 |
| Example A5 | A2 | 65 | 30.0 | 0.179 | A6 | 557 | 1. 0 | 0.010 | Glycerin 5.2/0.169 | | 0.179 | 1.2 | 0.9 | 74 | 100 | 1.53 | 48 | 1.25 |
| Example A6 | A2 | 65 | 30.3 | 0.181 | A6 | 557 | 3.0 | 0.030 | 1,3-Butanediol 6.8/0.151 | | 0.181 | 1.4 | 1 | 75 | 68 | 1.52 | 49 | 1.22 |
| Example A7 | A2 | 65 | 31.6 | 0.189 | A6 | 557 | 2.6 | 0.026 | Glycerin 1.0/0.033 | 1,3-Butanediol 5.9/0.131 | 0.189 | 1.4 | 1 | 75 | 75 | 1.52 | 49 | 1.20 |
| Comparative Example A1 | A1 | 12 | 15.9 | 0.185 | - | - | - | - | Isosorbide 12.1/0.185 | | 0.185 | 0.9 | 0.7 | 84 | Not Cured | | | |
| Comparative Example A2 | Compound B | 0 | 17.2 | 0.223 | - | - | - | - | Isosorbide 16.3/0.223 | | 0.223 | 1.1 | 0.8 | 85 | Not Cured | | | |

Compound B: 1,5-Pentamethylene Diisocyanate

As described above, according to the polymerizable composition for an optical material containing the polyisocyanate (a) and the polyol (d), it was possible to obtain a polyurethane molded product which contributed to conservation of the global environment by using a plant-derived raw material and had excellent practicality such as transparency and heat resistance.

Further, according to the polymerizable composition for an optical material containing the polyisocyanate (a), the polyol (d), and the polyol (c) which was suitably contained under predetermined conditions, it was possible to obtain a polyurethane molded product for an optical material which had a degree of biomass of 70% or more and had excellent practicality such as transparency and heat resistance.

In addition, as in Comparative Examples A1 and Comparative Example A2, when the concentration of the isocyanurate trimer was less than 15 weight%, the curing was not performed, and thus, the polyurethane molded product was not able to be obtained.

< Reference Example B>

(Measurement Method of Concentration (Unit: Weight%) of Unreacted 1,5-Pentamethylene Diisocyanate in Polyisocyanate)

The concentration of unreacted 1,5-pentamethylene diisocyanate in polyisocyanate was obtained from a calibration curve prepared by using 1,5-pentamethylene diisocyanate obtained in Reference Producing Example B2 described below as a specimen by using the following device.

Device: Prominence (manufactured by Shimadzu Corporation)
Column: SHISEIDO SILICA SG-120
Column Temperature: 40°C
Eluent: n-Hexane/Methanol/1,2-Dichloroethane = 90/5/5 (Volume Ratio)
Flow Rate: 0.2 ml/min
Detector: UV 225 nm
R. Time: 16.9 min
Measurement Solution Adjustment: 0.1 g of a sample and dibenzyl amine having a molar ratio approximately 20 times the molar ratio of the sample were added to a volumetric flask of 50 ml, and 1,2-dichloroethane was mixed thereto, and thus, a measurement solution was obtained.
Measurement: 1 μL of the measurement solution was injected, and thus, measurement was performed.

(Measurement Method of Concentration (Unit: Weight%) of Isocyanate Group of Polyisocyanate)

The concentration of an isocyanate group of the polyisocyanate was obtained by being measured by an n-dibutyl amine method using a potential difference titration device on the basis of JIS K-1556.

(Measurement Method of Concentration (Unit: Weight%) of Isocyanurate Trimer in Polyisocyanate)

An area ratio of a peak corresponding to a molecular weight three times the molecular weight of 1,5-pentamethylene isocyanate to the total peak area was obtained as the concentration (weight%) of the isocyanurate trimer in the polyisocyanate according to a chromatogram obtained by gel permeation chromatography by using the following device.

Device: HLC-8020 (manufactured by TOSOH CORPORATION)
Column: Series Connection of G1000HXL, G2000HXL, and G3000HXL (manufactured by TOSOH CORPORATION)
Column Temperature: 40°C
Eluent: Tetrahydrofuran
Flow Rate: 0.8 ml/min
Detector: Differential Refractometer
R. Time: Isocyanurate Trimer 27.2 min
Standard Substance: Polyethylene Oxide (TSK Standard Polyethylene Oxide, manufactured by TOSOH CORPORATION)
Measurement: 30 mg of a sample was dissolved in 10 ml of tetrahydrofuran, and 100 μL of the obtained solution was injected, and thus, measurement was performed.

(Calculation Method of Average Number of Functional Groups of Polyisocyanate)

The average number of functional groups of the polyisocyanate was calculated by the following expression using a number average molecular weight obtained by the same measurement as that of the concentration of the isocyanurate trimer in the polyisocyanate and the concentration of the isocyanate group of the polyisocyanate.

$$(\text{Average Number of Functional Groups of Polyisocyanate}) = (\text{Number Average Molecular Weight of Polyisocyanate}) \times (\text{Concentration of Isocyanate Group of Polyisocyanate}) / 4202$$

(Measurement Method of Hydroxyl Value of Polyol)

Hydroxyl Value (mgKOH/g): Measured on the basis of JIS K1557-1 (B Method).

(Calculation Method of Average Number of Functional Groups of Polyol)

The average number of functional groups of the polyol was calculated by the following expression.

$$\Sigma(Mn / MWn \times fn) / \Sigma(Mn / MWn)$$

Mn: Part by Weight of Multifunctional Alcohol
MWn: Molecular Weight of Multifunctional Alcohol
fn: Number of Hydroxyl Groups in One Molecule of Multifunctional Alcohol

(Calculation Method of Degree of Biomass (Unit: %) of Polyisocyanate (a) and Polyol (c))

The degree of biomass of polyisocyanate described in Reference Synthesis Examples B1 to B11 was calculated by the following expression.

$$\text{Number of Plant-Derived Carbon Atoms} / (\text{Number of Plant-Derived Carbon Atoms} + \text{Number of Petroleum-Derived Carbon Atoms}) \times 100$$

(Calculation Method of Degree of Biomass (Unit: %) of Polyurethane Molded Body)

The degree of biomass of a polyurethane molded product described in Reference Examples B1 to B5 and Comparative Examples B1 to B5 was calculated by the following expression.

$$\{[\text{Part by Weight of (a)} \times \text{Degree of Biomass of (a)} / 100] + [\text{Part by Weight of (c)} \times \text{Degree of Biomass of (c)} / 100] + [\text{Part by Weight of (d)} \times \text{Degree of Biomass of (d)} / 100]\} / [\text{Total Weight (Part by Weight) of (a)} + \text{(b)} + \text{(c)} + \text{(d)}]$$

In the expression described above, (a) to (d) are as follows.

(a): Polyisocyanate (a)
(b): Alicyclic Polyisocyanate (b)
(c): Polyol (c)

(d): Polyol (d)

The degree of biomass of the polyurethane molded product was obtained by using the value of the degree of biomass of the polyisocyanate (a) and the polyol (c) which was calculated by the calculation method described above. The degree of biomass of the polyurethane molded product was obtained by setting the degree of biomass of the polyol (d) to 100%.

(Performance Testing Method of Lens)

A lens obtained by polymerization was evaluated by performing a performance test. In the performance test, a refractive index and the Abbe number, heat resistance, and specific gravity were evaluated by the following testing method.

- Refractive Index (ne) and Abbe Number (νe) : Measured at 20°C by using Pulfrich refractometer KPR-30 manufactured by Shimadzu Corporation.
- Heat Resistance: Glass transition temperature (Tg) in a TMA penetration method (a load of 50 g and a pin tip of 0.5 mmφ) was set as heat resistance by using TMA-60 manufactured by Shimadzu Corporation.
- Specific Gravity: Measured at 20°C by Archimedes' method.

[Reference Preparation Example B]

(Synthesis of 1,5-Pentamethylene Diisocyanate Using Plant-Derived Raw Material)

Reference Preparation Example B1 (Preparation of Fungus Body Lysate Liquid)

(Cloning of Lysine Decarbonation Enzyme Gene (cadA))

Genome DNA prepared according to an ordinary method from a cluster of Escherichia coli W3110 (ATCC27325) was used for molding PCR.

In a primer for PCR, oligonucleotide (synthesized through commission to Life Technologies Japan Ltd.) having a base sequence represented by Sequence Numbers 1 and 2 designed on the basis of a base sequence of lysine decarbonation enzyme gene (cadA) (GenBank Accession No. AP009048) was used. The primer has each restriction enzyme recognition sequence of KpnI and XbaI in the vicinity of a 5' terminal.

PCR was performed by using 25 μL of a PCR reaction liquid including 1 ng/μL of the genome DNA and 0.5 pmol/μL of each of the primers in conditions where a reaction cycle including Modification: 94°C and 30 seconds, Annealing: 55°C and 30 seconds, and Extension Reaction: 68°C and 2 minutes was repeated 30 times.

A PCR reaction product and Plasmid pUC18 (manufactured by TAKARA SHUZO CO., LTD.) were digested by KpnI and XbaI and were connected by using Ligation High (manufactured by TOYOBO CO., LTD.), and then Eschrichia coli DH5α (manufactured by TOYOBO CO., LTD.) was transformed by using the obtained recombinant plasmid. The transformant was cultured by an LB agar medium including 100 μg/mL of Ampicillin (Am) and X-Gal (5-bromo-4-chloro-3-indolyl-β-D-galactoside), and thus, a transformant which had resistance to Am and became a white colony was obtained. The plasmid was extracted by the transformant obtained as described above.

It was confirmed that the base sequence of a segment of DNA introduced into the plasmid was a base sequence represented by Sequence Number 3 according to a general determination method of a base sequence.

The plasmid having DNA which encodes the obtained lysine decarbonation enzyme was named pCADA. The transformed escherichia coli was cultured by using pCADA, and thus, it was possible to produce a lysine decarbonation enzyme having an amino acid sequence represented by Sequence Number 4.

(Preparation of Transformant)

A cluster of Escherichia coli W3110 was transformed by a general method using pCADA, and the obtained transformant was named W/pCADA.

The transformant was vaccinated against 500 ml of an LB medium including 100 μg/mL of Am in an erlenmeyer flask which was attached with a baffle and was subjected to shake culture at 30°C until OD (660 nm) became 0.5, and then isopropyl-β-thiogalactopyranoside (IPTG) was added such that the amount of IPTG became 0.1 mmol/L and was subjected to shake culture for 14 hours. A culture liquid was subjected to centrifugal separation at 8000 rpm for 20 minutes, and thus, a fungus body was obtained. The fungus body was suspended in 20 mmol/L of a buffer solution of sodium phosphate (pH 6.0), and was subjected to ultrasonic crushing, and thus, a fungus body lysate liquid was prepared.

Reference Preparation Example B2 (Preparation of Aqueous Solution of 1,5-Pentamethylene Diamine)

120 parts by weight of a substrate solution in which L-lysine monohydrochloride (manufactured by Wako Pure Chemical Industries, Ltd.) was prepared such that the final concentration was 45 weight% and a pyridoxal phosphoric acid (manufactured by Wako Pure Chemical Industries, Ltd.) was prepared such that the final concentration was 0.15 mmol/L was added to a flask. Next, the W/pCADA fungus body lysate liquid described above (preparing a dried fungus body having a conversion weight of 0.3 g) was added and a reaction was initiated. The reaction conditions were 37°C and 200 rpm. pH of a reaction liquid was adjusted to pH 6 by 6 mol/L of a hydrochloric acid. After 24 hours, a reaction yield of 1,5-pentamethylene diamine reached 99%. pH of the reaction liquid after performing the reaction described above for 24 hours was adjusted to pH 2 by 6 mol/L of a hydrochloric acid, 0.6 parts by weight of activated charcoal (powder activated charcoal PM-SX, manufactured by Sanso Chemical Company) was added to the reaction liquid and was stirred at 25°C for 1 hour, and then filtration was performed by using filter paper (5C, manufactured by Toyo Roshi Kaisha, Ltd.). Next, pH of the filtrate was adjusted to pH 12 by sodium hydroxide, and thus, an aqueous solution of 1,5-pentamethylene diamine (an aqueous solution of 17.0 weight%) was obtained.

Reference Producing Example B1 (Preparation of 1,5-Pentamethylene Diamine)

100 parts by weight of the aqueous solution of the 1,5-pentamethylene diamine and 100 parts by weight of n-butanol were put into a liquid separating funnel at 23°C, were mixed for 10 minutes, and then were left to stand for 30 minutes. A lower layer which was a water layer was extracted, and then an upper layer which was an organic layer (the n-butanol including the 1,5-pentamethylene diamine) was extracted. As a result of measuring an extraction rate, the extraction rate was 91.6%. Next, 80 parts by weight of an extraction liquid of the organic layer was put into a four-neck flask provided with a thermometer, a distillation tower, a cooling pipe, and a nitrogen introduction pipe, an oil bath temperature was set to 120°C, and the n-butanol was distilled under reduced pressure of 10 kPa. Next, the oil bath temperature was set to 140°C, the 1,5-pentamethylene diamine was distilled under reduced pressure of 10 kPa, and thus, 1,5-pentamethylene diamine having a purity of 99.9 weight% was obtained.

Reference Producing Example B2 (Preparation of 1,5-Pentamethylene Diisocyanate)

2000 parts by weight of o-dichlorobenzene was put into a pressurization reactor attached with a jacket in which an electromagnetic induction stirrer, an automatic pressure adjusting valve, a thermometer, a nitrogen introduction line, a phosgene introduction line, a condenser, and a raw material feed pump were provided. Next, 2300 parts by weight of phosgene was added thereto from the phosgene introduction line, and stirring was initiated. Cold water passed through the jacket of the reactor, and thus, the temperature inside the reactor was maintained at approximately 10°C. A solution in which 400 parts by weight of the 1,5-pentamethylene diamine obtained in Reference Producing Example B1 was dissolved in 2600 parts by weight of o-dichlorobenzene was fed into the reactor by a feed pump for 60 minutes, and cold phosgenation was initiated at a temperature of lower than or equal to 30°C and under normal pressure. After the feeding ended, the liquid in the pressurization reactor became a light brown white slurry-like liquid.

Next, the liquid in the reactor was pressurized to 0.25 MPa while being gradually heated up to 160°C, and was further subjected to thermal phosgenation at a pressure of 0.25 MPa and a reaction temperature of 160°C for 90 minutes. Furthermore, 1100 parts by weight of phosgene was further added during the thermal phosgenation. The liquid in the pressurization reactor became a light brown clear solution during the thermal phosgenation. After the thermal phosgenation ended, nitrogen gas passed through the reactor at 100°C to 140°C and 100 L/hour, and thus, degassing was performed.

Next, the o-dichlorobenzene was distilled under reduced pressure, and then similarly, the 1,5-pentamethylene diisocyanate was distilled under reduced pressure, and thus, 558 parts by weight of 1,5-pentamethylene diisocyanate having a purity of 98.7% was obtained.

Next, 558 parts by weight of 1,5-pentamethylene diisocyanate, and 0.02 parts by weight of tris(tridecyl) phosphite (manufactured by JOHOKU CHEMICAL CO., LTD., Product Name: JP-333E) with respect to 100 parts by weight of the 1,5-pentamethylene diisocyanate were put into a four-neck flask provided with a stirrer, a thermometer, a reflux pipe, and a nitrogen introduction pipe, a heat treatment was performed at 210°C for 2 hours under normal pressure while introducing nitrogen, and thus, 553 parts by weight of 1,5-pentamethine diisocyanate having purity of 98.3% was obtained. In the heat treatment, the yield of the 1,5-pentamethylene diisocyanate was 99.6%.

Next, the 1,5-pentamethylene diisocyanate after the heat treatment was put into a glass flask, a distillation pipe was filled with 4 elements of a filler (manufactured by Sumitomo Heavy Industries, Ltd., Product Name: Sumitomo/Sulzer Laboratory Packing EX Type), and rectification was performed under conditions of 127°C to 132°C and 2.7 KPa by using a distillation tower (manufactured by SIBATA SCIENTIFIC TECHNOLOGY LTD., Product Name: Distillation Head K Type) provided with a reflux ratio adjusting timer and a rectification device provided with a cooler while further performing

reflux, and thus, 1,5-pentamethylene diisocyanate having a purity of 99.9 weight% was obtained. As a result of measuring the degree of biomass by the following method, the degree of biomass of the 1,5-pentamethylene diisocyanate was 71%.

(Measurement Method of Degree of Biomass of 1,5-Pentamethylene Diisocyanate)

The degree of biomass was measured on the basis of ASTM D6866 METHOD-B.

The 1,5-pentamethylene diisocyanate was subjected to methyl carbamation (urethanization) by methanol, and the degree of biomass of a methyl carbamate body was measured. As a result thereof, the degree of biomass was 56%. On the basis of this value, the degree of biomass of the 1,5-pentamethylene diisocyanate (a) was obtained by the following expression.

Number of Plant-Derived Carbon Atoms / (Number of Plant-Derived Carbon Atoms + Number of Petroleum-Derived Carbon Atoms) $\times$ 100

[Reference Synthesis Example B1]

(Synthesis of Polyisocyanate B1)

500 parts of the 1,5-pentamethylene diisocyanate obtained in Reference Producing Example B2 (hereinafter, also simply referred to as PDI), 1 part of isobutyl alcohol (hereinafter, also simply referred to as IBA), 0.3 parts of 2, 6-di (tert-butyl) -4-methyl phenol (hereinafter, also simply referred to as BHT), and 0.3 parts of tris(tridecyl) phosphite (manufactured by JOHOKU CHEMICAL CO., LTD., Product Name: JP-333E) were put into a four-neck flask provided with a stirrer, a thermometer, a reflux pipe, and a nitrogen introduction pipe, and were subjected to a reaction at 80°C for 2 hours. Next, 0.05 parts of N- (2-hydroxy propyl) -N,N,N-trimethyl ammonium-2-ethyl hexanoate (manufactured by Air Products and Chemicals Inc., Product Name: DABCO(R)TMR) was added as an isocyanuration catalyst. After performing the reaction for 50 minutes, 0.12 parts of o-toluene sulfone amide (hereinafter, also simply referred to as OTS) was added, and thus, 502 parts of polyisocyanate B1 was obtained. The amount of 1,5-pentamethylene diisocyanate-derived component configuring the polyisocyanate B1 was 99.6 weight%.

The concentration of unreacted 1,5-pentamethylene diisocyanate in the polyisocyanate B1 was 82 weight%, the concentration of an isocyanurate trimer was 12 weight%, the concentration of an isocyanate group was 49%, the average number of functional groups was 2.1, and the degree of biomass was 71%.

Hereinafter, a calculation method of the degree of biomass will be described. DABCO(R)TMR of the used isocyanuration catalyst was a mixture of 33.8 weight% of N-(2-hydroxy propyl)-N,N,N-trimethyl ammonium-2-ethyl hexanoate, 41.2 weight% of 2-ethyl hexanoic acid, and 25 weight% of ethylene glycol.

Degree of Biomass of Polyisocyanate B1 = {502 (Part by Weight of Polyisocyanate B1) × 99.8 (Amount of PDI-Derived Component Configuring Polyisocyanate B1) / 100 / 154.2 (Molecular Weight of PDI) × 5 (Number of Plant-Derived Carbon Atoms in One Molecule of PDI)} / {502 (Part by Weight of Polyisocyanate B1) × 99.8 (Amount of PDI-Derived Component Configuring Polyisocyanate B1) / 100 / 154.2 (Molecular Weight of PDI) × 7 (Number of Carbon Atoms in One Molecule of PDI) + 1 (Part by Weight of IBA) / 74.1 (Molecular Weight of IBA) × 4 (Number of Carbon Atoms in One Molecule of IBA) + 0.3 (Part by Weight of BHT) / 220.4 (Molecular Weight of BHT) × 15 (Number of Carbon Atoms in One Molecule of BHT) + 0.3 (Part by Weight of JP-333E) / 628 (Molecular Weight of JP-333E) × 39 (Number of Carbon Atoms in One Molecule of JP-333E) + 0.02 (Part by Weight of N-(2-Hydroxy Propyl)-N,N,N-Trimethyl Ammonium-2-Ethyl Hexanoate) / 118.2 (Molecular Weight of N-(2-Hydroxy Propyl)-N,N,N-Trimethyl Ammonium-2-Ethyl Hexanoate) × 6 (Number of Carbon Atoms in One Molecule of N-(2-Hydroxy Propyl)-N,N,N-Trimethyl Ammonium-2-Ethyl Hexanoate) + 0.02 (Part by Weight of 2-Ethyl Hexanoic Acid) / 144.2 (Molecular Weight of 2-Ethyl Hexanoic Acid) × 8 (Number of Carbon Atoms in One Molecule of 2-Ethyl Hexanoic Acid) + 0.01 (Part by Weight of Ethylene Glycol) / 62.1 (Molecular Weight of Ethylene Glycol) × 2 (Number of Carbon Atoms in One Molecule of Ethylene Glycol) + 0.12 (Part by Weight of OTS) / 171.2 (Molecular Weight of OTS) × 7 (Number of Carbon Atoms in One Molecule of OTS)} × 100 = 71%

[Reference Synthesis Example B2]

(Synthesis of Polyisocyanate B2)

500 parts of the 1,5-pentamethylene diisocyanate obtained in Reference Producing Example B2, 1 part of

isobutyl alcohol, 0.3 parts of 2,6-di(tert-butyl)-4-methyl phenol, and 0.3 parts of tris(tridecyl) phosphite were put into a four-neck flask provided with a stirrer, a thermometer, a reflux pipe, and a nitrogen introduction pipe, and were subjected to a reaction at 80°C for 2 hours. Next, 0.05 parts of N-(2-hydroxy propyl)-N,N,N-trimethyl ammonium-2-ethyl hexanoate (manufactured by Air Products and Chemicals Inc., Product Name: DABCO(R)TMR) was added as a trimerization catalyst. After performing the reaction for 50 minutes, 0.12 parts of o-toluene sulfone amide was added. The obtained reaction liquid passed through a thin film distillation device and was distilled at a vacuum degree of 0.09 KPa and a temperature of 150°C, and thus, 401 parts of unreacted pentamethylene diisocyanate was obtained. Further, 0.02 parts of o-toluene sulfone amide was added to 100 parts of the obtained composition, and thus, 100 parts of polyisocyanate B2 was obtained. The amount of 1, 5-pentamethylene diisocyanate-derived component configuring the polyisocyanate B2 was 98 weight%.

The concentration of unreacted 1,5-pentamethylene diisocyanate in the polyisocyanate B2 was less than 1 weight%, the concentration of an isocyanurate trimer was 65 weight%, the concentration of an isocyanate group was 25%, the average number of functional groups was 3.3, and the degree of biomass was 70%.

[Reference Synthesis Example B3]

(Synthesis of Polyisocyanate B3)

500 parts of the 1,5-pentamethylene diisocyanate obtained in Reference Producing Example B2, 5 parts of isobutyl alcohol, 0.3 parts of 2,6-di(tert-butyl)-4-methyl phenol, and 0.3 parts of tris(tridecyl) phosphite were put into a four-neck flask provided with a stirrer, a thermometer, a reflux pipe, and a nitrogen introduction pipe, and were subjected to a reaction at 80°C for 2 hours. Next, 0.05 parts of N-(2-hydroxy propyl)-N,N,N-trimethyl ammonium-2-ethyl hexanoate (manufactured by Air Products and Chemicals Inc., Product Name: DABCO(R)TMR) was added as an isocyanuration catalyst. After performing the reaction for 40 minutes, 0.12 parts of o-toluene sulfone amide was added. The obtained reaction liquid passed through a thin film distillation device and was distilled at a vacuum degree of 0.09 KPa and a temperature of 150°C, and thus, 405 parts of unreacted pentamethylene diisocyanate was obtained. Further, 0.02 parts of o-toluene sulfone amide was added to 100 parts of the obtained composition, and thus, 101 parts of polyisocyanate B3 was obtained. The amount of 1,5-pentamethylene diisocyanate-derived component configuring the polyisocyanate B3 was 94 weight%.

The concentration of unreacted 1,5-pentamethylene diisocyanate in the polyisocyanate B3 was less than 1 weight%, the concentration of an isocyanurate trimer was 50 weight%, the concentration of an isocyanate group was 24%, the average number of functional groups was 3, and the degree of biomass was 67%.

[Reference Synthesis Example B4]

(Synthesis of Polyisocyanate B4)

500 parts of the 1,5-pentamethylene diisocyanate obtained in Reference Producing Example B2, 1 part of isobutyl alcohol, 0.3 parts of 2,6-di(tert-butyl)-4-methyl phenol, and 0.3 parts of tris(tridecyl) phosphite were put into a four-neck flask provided with a stirrer, a thermometer, a reflux pipe, and a nitrogen introduction pipe, and were subjected to a reaction at 80°C for 2 hours. Next, 0.05 parts of N-(2-hydroxy propyl)-N,N,N-trimethyl ammonium-2-ethyl hexanoate (manufactured by Air Products and Chemicals Inc., Product Name: DABCO(R)TMR) was added as an isocyanuration catalyst. After performing the reaction for 130 minutes, 0.12 parts of o-toluene sulfone amide was added. The obtained reaction liquid passed through a thin film distillation device and was distilled at a vacuum degree of 0.09 KPa and a temperature of 150°C, and thus, 341 parts of unreacted pentamethylene diisocyanate was obtained. Further, 0.02 parts of o-toluene sulfone amide was added to 100 parts of the obtained composition, and thus, 161 parts of polyisocyanate B4 was obtained. The amount of 1,5-pentamethylene diisocyanate-derived component configuring the polyisocyanate B4 was 99 weight%.

The concentration of unreacted 1,5-pentamethylene diisocyanate in the polyisocyanate B4 was less than 1 weight%, the concentration of an isocyanurate trimer was 46 weight%, the concentration of an isocyanate group was 23%, the average number of functional groups was 3.5, and the degree of biomass was 70%.

[Reference Synthesis Example B5]

(Synthesis of Polyisocyanate B5)

12 parts of trimethylol propane (hereinafter, simply referred to as TMP) was put into a dropping funnel and was heated by a ribbon heater, and thus, TMP was dissolved. Next, 500 parts of the 1,5-pentamethylene diisocyanate

obtained in Reference Producing Example B2, 0.3 parts of 2, 6-di (tert-butyl) -4-methyl phenol, and 0.3 parts of tris(tridecyl) phosphite were put into a four-neck flask provided with a stirrer, a thermometer, a reflux pipe, and a nitrogen introduction pipe and were heated up to 95°C while being stirred under nitrogen atmosphere, and then the dissolved TMP was dropped thereto for approximately 60 minutes. After that, the reaction was continuously performed until the concentration of an isocyanate group reached the calculation value.

Next, 0.05 parts of N-(2-hydroxy propyl)-N,N,N-trimethyl ammonium-2-ethyl hexanoate (manufactured by Air Products and Chemicals Inc., Product Name: DABCO(R)TMR) was added as an isocyanuration catalyst. After performing the reaction for 100 minutes, 0.12 parts of o-toluene sulfone amide was added. The obtained reaction liquid passed through a thin film distillation device and was distilled at a vacuum degree of 0.09 KPa and a temperature of 150°C, and thus, 292 parts of unreacted pentamethylene diisocyanate was obtained. Further, 0.02 parts of o-toluene sulfone amide was added to 100 parts of the obtained composition, and thus, 221 parts of polyisocyanate B5 was obtained. The amount of 1,5-pentamethylene diisocyanate-derived component configuring the polyisocyanate B5 was 94 weight%.

The concentration of unreacted 1,5-pentamethylene diisocyanate in the polyisocyanate B5 was less than 1 weight%, the concentration of an isocyanurate trimer was 30 weight%, the concentration of an isocyanate group was 22%, the average number of functional groups was 4.4, and the degree of biomass was 67%.

[Reference Synthesis Example B6]

(Synthesis of Polyol B1)

As polyol, 77 parts by weight of plant-derived glycerin (manufactured by Sakamoto Yakuhin kogyo Co., Ltd., Product Name: refined glycerin), 244 parts by weight of sucrose, and 2 parts by weight of potassium hydroxide having a purity of 96% were put into an autoclave, was subjected to nitrogen substitution, and then was heated to 90°C, and 685 parts by weight of propylene oxide (hereinafter, also simply referred to as PO) was gradually put thereinto such that the inner pressure was not greater than 0.4 MPa (a gauge pressure). After putting all of the components into the autoclave, a reaction was continuously performed at 110°C until a decrease in the inner pressure of the autoclave was not observed. After the reaction ended, remaining propylene oxide was removed under reduced pressure, and measurement was performed, and thus, the amount of unreacted PO was 5 parts by weight. An aqueous solution of a phosphoric acid of 85% with equimolar to the potassium hydroxide added at the time of preparation and 50 parts by weight of pure water were added, and neutralization and refinement were performed. After that, 0.2 weight% of an adsorbent (manufactured by Tomita Pharmaceutical Co., Ltd., Product Name: Tomix AD-600) was added to the mass of polyol calculated from the prepared glycerin and sucrose and the reacted propylene oxide, and dehydration was performed under reduced pressure, and then a filtering operation was performed. Further, 0.03 parts by weight of BHT was added to 100 parts by weight of a filtrate, and thus, polyol B1 was obtained. In the polyol B1, the hydroxyl value was 459 mgKOH/g, the average number of functional groups was 5.3, and the degree of biomass was 24%.

Hereinafter, a calculation method of the average number of functional groups will be described.

Average Number of Functional Groups of Polyol B1 = {77 (Part by Weight of Glycerin) / 92.1 (Molecular Weight of Glycerin) × 3 (Number of Hydroxyl Groups in One Molecule of Glycerin) + 244 (Part by Weight of Sucrose) / 342.3 (Molecular Weight of Sucrose) × 8 (Number of Hydroxyl Groups in One Molecule of Sucrose)} / {77 (Part by Weight of Refined Glycerin) / 92.1 (Molecular Weight of Glycerin) + 244 (Part by Weight of Sucrose) / 342.3 (Molecular Weight of Sucrose)}

Hereinafter, a calculation method of the degree of biomass will be described.

Degree of Biomass of Polyol B1 = {77 (Part by Weight of Glycerin) / 92.1 (Molecular Weight of Glycerin) × 3 (Number of Plant-Derived Carbon Atoms in One Molecule of Glycerin) + 244 (Part by Weight of Sucrose) / 342.3 (Molecular Weight of Sucrose) × 12 (Number of Plant-Derived Carbon Atoms in One Molecule of Sucrose)} / {77 (Part by Weight of Glycerin) / 92.1 (Molecular Weight of Glycerin) × 3 (Number of Plant-Derived Carbon Atoms in One Molecule of Glycerin) + 244 (Part by Weight of Sucrose) / 342.3 (Molecular Weight of Sucrose) × 12 (Number of Plant-Derived Carbon Atoms in One Molecule of Sucrose)

+ 680 (Part by Weight of Reacted Propylene Oxide) / 58.1 (Molecular Weight of Propylene Oxide) × 3 (Number of Carbon Atoms in One Molecule of Propylene Oxide) + 0.3 (Part by Weight of BHT) / 220.4 (Molecular Weight of BHT) × 15 (Number of Carbon Atoms in One Molecule of BHT)} × 100 = 24%

[Reference Synthesis Example B7]

(Synthesis of Polyol B2)

Polyol B2 was obtained by the same operation as that in Reference Synthesis Example B6 except that 121 parts by weight of the plant-derived glycerin, 182 parts by weight of the sucrose, and 700 parts by weight of the propylene oxide were used. The amount of propylene oxide which had been subjected to an addition polymerization reaction was 697 parts by weight. In the polyol B2, the hydroxyl value was 451 mgKOH/g, the average number of functional groups was 4.4, and the degree of biomass was 22%.

[Reference Synthesis Example B8]

(Synthesis of Polyol B3)

Polyol B3 was obtained by the same operation as that in Reference Synthesis Example B6 except that 216 parts by weight of the plant-derived sorbitol and 790 parts by weight of the propylene oxide were used. The amount of propylene oxide which had been subjected to an addition polymerization reaction was 784 parts by weight. In the polyol B3, the hydroxyl value was 396 mgKOH/g, the average number of functional groups was 6, and the degree of biomass was 15%.

[Reference Synthesis Example B9]

(Synthesis of Polyol B4)

Polyol B4 was obtained by the same operation as that in Reference Synthesis Example B6 except that 265 parts by weight of the plant-derived sorbitol and 740 parts by weight of the propylene oxide were used. The amount of propylene oxide which had been subjected to an addition polymerization reaction was 735 parts by weight. In the polyol B4, the hydroxyl value was 489 mgKOH/g, the average number of functional groups was 6, and the degree of biomass was 19%.

[Reference Synthesis Example B10]

(Synthesis of Polyol B5)

Polyol B5 was obtained by the same operation as that in Reference Synthesis Example B6 except that 232 parts by weight of the plant-derived sorbitol, 16 parts by weight of the plant-derived glycerin, and 760 parts by weight of the propylene oxide were used. The amount of propylene oxide which had been subjected to an addition polymerization reaction was 752 parts by weight. In the polyol B5, the hydroxyl value was 450 mgKOH/g, the average number of functional groups was 5.6, and the degree of biomass was 17%.

[Reference Synthesis Example B11]

(Synthesis of Polyol B6)

As polyol, 716 parts by weight of plant-derived isosorbide (manufactured by ROQUETTE Corporation, Product Name: POLYSORB P) and 2 parts by weight of dimethyl palmityl amine were put into an autoclave, were subjected to nitrogen substitution, and then 286 parts by weight of propylene oxide was gradually put thereinto such that the inner pressure was not greater than 0.4 MPa (a gauge pressure). After putting all of the components into the autoclave, a reaction was continuously performed at 110°C until a decrease in the inner pressure of the autoclave was not observed. After the reaction ended, remaining propylene oxide was removed under reduced pressure. The amount of propylene oxide which had been subjected to an addition polymerization reaction was 284 parts by weight. Further, 0.03 parts by weight of BHT was added to 100 parts by weight of a reaction liquid, and thus, polyol B6 was obtained. In the polyol B6, the hydroxyl value was 557 mgKOH/g, the average number of functional groups was 2, and the degree of biomass was 67%.

[Reference Example B1]

1.5 g of Zelec UN (Acidic Phosphoric Acid Ester: Registered Trademark, manufactured by Stepan Company), 8.0 g of the polyol B5, and 8.0 g of isosorbide were mixed, and were stirred and dispersed at room temperature for 5 minutes, and then 29.1 g of the polyisocyanate B2 was added thereto, and 1.1 g of Tinuvin 292 (Hindered Amine: Registered Trademark, manufactured by BASF SE) was further added thereto, and was stirred and mixed at room temperature for 1 hour. Similarly, this liquid was subjected to degassing at room temperature for 3 hours, and then was injected into a mold comprised of a glass mold and tape, was put into an oven, was gradually heated up to 30°C to 130°C for approximately 24 hours, and thus, was subjected to polymerization. After the polymerization ended, the mold was taken out from the oven, and thus, a molded product was obtained by being released from the mold. The obtained molded product had a colorless transparent appearance, and in the molded product, the refractive index (ne) was 1.52, the Abbe number (νe) was 48, the heat resistance was 93°C, the specific gravity was 1.24, and the degree of biomass was 66%.

[Reference Example B2]

Polyol (c), polyol (d), and polyisocyanate (a) were mixed along with a catalyst according to the type and the prepared amount shown in Table 2, as with Reference Example B1, and then were subjected to degassing, were injected to a mold, and were subjected to polymerization, and thus, a molded product was obtained by being released from the mold, as with Reference Example B1. The physical properties of the obtained molded product are also collectively shown in Table 2.

[Reference Example B3]

2.1 g of Zelec UN (Acidic Phosphoric Acid Ester: Registered Trademark, manufactured by Stepan Company), 8.0 g of the polyol B5, 8.0 g of glycerin were mixed, and were stirred and dispersed at room temperature for 5 minutes, and then 32.0 g of the polyisocyanate B2 and 13.8 g of bis(isocyanate methyl)-bicyclo[2.2.1] heptane were added thereto, and 1.6 g of Tinuvin 292 (Hindered Amine: Registered Trademark, manufactured by BASF SE) was further added thereto, and was stirred and mixed at room temperature for 1 hour. Similarly, this liquid was subjected to degassing at room temperature for 3 hours, and then was injected into a mold comprised of a glass mold and a tape, was put into an oven, was gradually heated up to 30°C to 130°C for approximately 24 hours, and thus, was subjected to polymerization. After the polymerization ended, the mold was taken out from the oven, and thus, a molded product was obtained by being released from the mold. The obtained molded product had a colorless transparent appearance, and in the molded product, the refractive index (ne) was 1.52, the Abbe number (ve) was 50, the heat resistance was 111°C, the specific gravity was 1.23, and the degree of biomass was 51%.

[Reference Example B4 to Reference Example B5]

Polyol (c), polyol (d), polyisocyanate (a), and alicyclic polyisocyanate (b) were mixed along with a catalyst according to the type and the prepared amount shown in Table 2, as with Reference Example B3, and then were subjected to degassing, were injected to a mold, and were subjected to polymerization, and thus, a molded product was obtained by being released from the mold, as with Reference Example B3. The physical properties of the obtained molded product are also collectively shown in Table 2.

[Comparative Example B1]

0.8 g of Zelec UN (Acidic Phosphoric Acid Ester: Registered Trademark, manufactured by Stepan Company) and 20.0 g of the polyol B1 were mixed, and were stirred and dispersed at room temperature for 5 minutes, and then 27.5 g of the polyisocyanate B2 was added thereto, and 0.6 g of Tinuvin 292 (Hindered Amine: Registered Trademark, manufactured by BASF SE) was further added thereto, and was stirred and mixed at room temperature for 1 hour. Similarly, this liquid was subjected to degassing at room temperature for 3 hours, and then was injected into a mold comprised of a glass mold and a tape, was put into an oven, was gradually heated up to 30°C to 130°C for approximately 24 hours, and thus, was subjected to polymerization. After the polymerization ended, the mold was taken out from the oven, and thus, a molded product was obtained by being released from the mold. The obtained molded product had a colorless transparent appearance, and in the molded product, the refractive index (ne) was 1.51, the Abbe number (ve) was 54, the heat resistance was 56°C, the specific gravity was 1.19, and the degree of biomass was 51%.

[Comparative Example B2 to Comparative Example B5]

Polyol and polyisocyanate were mixed along with a catalyst according to the type and the prepared amount shown in Table 2, as with Comparative Example B1, and then were subjected to degassing, were injected to a mold, and were subjected to polymerization, and thus, a molded product was obtained by being released from the mold, as with Comparative Example B1. The physical properties of the obtained molded product are also collectively shown in Table 2.

[Table 2]

| | Polyisocyanate | | | | | | Polyol | | | | | | Catalyst | | Lens Physical Properties | | | | |
|---|---|---|---|---|---|---|---|---|---|---|---|---|---|---|---|---|---|---|---|
| | Polyisocyanate (a) | | | | Alicyclic Polyisocyanate (b) | Total NCC Mol | Polyol (c) | | | | Polyol (d) | Total OH Mol | ZelecUN (g) | Tinuvin 292 (g) | Degree of Biomass (%) | Heat Resistance Tg (°C) | Refractive Index | Abbe Number | Specific Gravity |
| | No. | Concentration of Isocyanurate Trimer (wt%) | g | NCO Mol | g/NCO Mol | | No | Hydroxyl Value mg-KOH/g | g | OH Mol | g/OH Mol | | | | | | | | |
| Example B1 | B2 | 65 | 29.1 | 0.174 | - | 0.174 | B5 | 450 | 8.0 | 0.064 | Isosorbide 8.0/0.109 | 0.173 | 1.5 | 1.1 | 66 | 93 | 1.52 | 48 | 1.24 |
| Example B2 | B3 | 50 | 31.1 | 0.174 | - | 0.174 | B5 | 450 | 8.0 | 0.064 | Isosorbide 8.0/0.109 | 0.173 | 1. 6 | 1.2 | 64 | 82 | 1.52 | 47 | 1.22 |
| Example B3 | B2 | 65 | 32.0 | 0.191 | Compound A 13.8/0.134 | 0.325 | B5 | 450 | 8.0 | 0.064 | Glycerin 8.0/0.261 | 0.325 | 2.1 | 1. 6 | 51 | 111 | 1. 52 | 50 | 1.23 |
| Example B4 | B4 | 46 | 40.0 | 0.222 | Compound A 10.6/0.103 | 0.325 | B5 | 450 | 8.0 | 0.064 | Glycerin 8.0/0.261 | 0.325 | 2.3 | 1.7 | 56 | 106 | 1. 52 | 50 | 1.24 |
| Example B5 | B2 | 65 | 22.6 | 0.135 | Compound A 12.5/0.121 | 0.256 | B5 | 450 | 7.0 | 0.056 | 1,3-Butanediol 9.0/0.200 | 0.256 | 3.5 | 2.6 | 51 | 67 | 1. 52 | 50 | 1.23 |
| Comparative Example B1 | B2 | 65 | 27.5 | 0.164 | - | 0.164 | B1 | 459 | 20. 0 | 0.164 | - | 0.164 | 0.8 | 0.6 | 51 | 56 | 1.51 | 54 | 1.19 |
| Comparative Example B2 | B3 | 50 | 28.9 | 0.162 | - | 0.162 | B2 | 451 | 20.0 | 0.161 | - | 0.161 | 0.8 | 0.6 | 49 | 55 | 1.51 | 53 | 1.20 |
| Comparative Example B3 | B2 | 65 | 23.8 | 0.142 | - | 0.142 | B3 | 396 | 20.00 | 0.142 | - | 0.142 | 1. 6 | 1.2 | 45 | 55 | 1.51 | 50 | 1.18 |

(continued)

| | Polyisocyanate | | | | | | Polyol | | | | | | Catalyst | | Lens Physical Properties | | | | |
|---|---|---|---|---|---|---|---|---|---|---|---|---|---|---|---|---|---|---|---|
| | Polyisocyanate (a) | | | | Alicyclic Polyisocy-anate (b) | Total NCC Mol | Polyol (c) | | | | Polyol (d) | Total OH Mol | Zele-cUN (g) | Tinu-vin 292 (g) | Degree of Bio-mass (%) | Heat Re-sistance Tg (°C) | Refrac-tive In-dex | Abbe Numbe r | Specif-ic Grav-ity |
| | No. | Concentra-tion of Iso-cyanurate Trimer (wt%) | g | NCO Mol | g/NCO Mol | | No | Hydroxyl Value mg-KOH/g | g | OH Mol | g/OH Mol | | | | | | | | |
| Compara-tive Exam-ple B4 | Com-poundB | 0 | 10. 9 | 0.14 2 | - | 0.14 2 | B3 | 396 | 20. 0 | 0.14 2 | - | 0.14 2 | 3.2 | 2.4 | 35 | 45 | 1.49 | 51 | 1.17 |
| Compara-tive Exam-ple B5 | Com-poundB | 0 | 12. 4 | 0.16 1 | - | 0.16 1 | B5 | 450 | 20.0 | 0.160 0 | - | 0.16 0 | 3.2 | 2.4 | 38 | 49 | 1.50 | 51 | 1.16 |

Compound A: Mixture of 2,5-Bis(Isocyanate Methyl)-Bicyclo[2.2.1] Heptane and 2,6-Bis(Isocyanate Methyl)-Bicyclo[2.2.1] Heptane
Compound B: 1,5-Pentamethylene Diisocyanate

As described above, according to the polymerizable composition for an optical material containing the polyisocyanate (a) and the polyol (d), it was possible to obtain a polyurethane molded product which contributed to conservation of the global environment by using a plant-derived raw material and had excellent practicality such as transparency and heat resistance.

Further, according to the polymerizable composition for an optical material containing the polyisocyanate (a), the polyol (c), the polyol (d), and the alicyclic polyisocyanate (b) which was suitably contained under predetermined conditions, it was possible to obtain a polyurethane molded product for an optical material which had a degree of biomass of 50% or more and less than 70% and had excellent practicality such as transparency and heat resistance.

In addition, in a case where the concentration of the isocyanurate trimer was 10 weight% or more and the polyol (d) was not included as in Comparative Examples B1 to B3, even when it was possible to obtain a polyurethane molded product in which the degree of biomass was 50% or more and less than 70%, the heat resistance of the polyurethane molded product decreased. In addition, in a case where the concentration of the isocyanurate trimer was 10 weight% or less and the polyol (d) was not included as in Comparative Examples B4 and B5, the degree of biomass of the obtained molded product did not reach 50%, and the heat resistance of the obtained polyurethane molded product had a value lower than that of Comparative Examples B1 to B3.

<Example C>

(Measurement Method of Concentration (Unit: Weight%) of Unreacted 1,5-Pentamethylene Diisocyanate in Polyisocyanate)

The concentration of unreacted 1, 5-pentamethylene diisocyanate in polyisocyanate was obtained from a calibration curve prepared by using 1,5-pentamethylene diisocyanate obtained in Producing Example C2 described below as a specimen by using the following device.

Device: Prominence (manufactured by Shimadzu Corporation)
Column: SHISEIDO SILICA SG-120
Column Temperature: 40°C
Eluent: n-Hexane/Methanol/1,2-Dichloroethane = 90/5/5 (Volume Ratio)
Flow Rate: 0.2 ml/min
Detector: UV 225nm
R. Time: 16.9 min
Measurement Solution Adjustment: 0.1 g of a sample and dibenzyl amine having a molar ratio approximately 20 times the molar ratio of the sample were added to a volumetric flask of 50 ml, and 1,2-dichloroethane was mixed thereto, and thus, a measurement solution was obtained.
Measurement: 1 μL of the measurement solution was injected, and thus, measurement was performed.

(Measurement Method of Concentration (Unit: Weight%) of Isocyanate Group of Polyisocyanate)

The concentration of an isocyanate group of the polyisocyanate was obtained by being measured by an n-dibutyl amine method using a potential difference titration device on the basis of JIS K-1556.

(Measurement Method of Concentration (Unit: Weight%) of Isocyanurate Trimer in Polyisocyanate)

An area ratio of a peak corresponding to a molecular weight three times the molecular weight of 1,5-pentamethylene isocyanate to the total peak area was obtained as the concentration (weight%) of an isocyanurate trimer in the polyisocyanate according to a chromatogram obtained by gel permeation chromatography by using the following device.

Device: HLC-8020 (manufactured by TOSOH CORPORATION)
Column: Series Connection of G1000HXL, G2000HXL, and G3000HXL (manufactured by TOSOH CORPORATION)
Column Temperature: 40°C
Eluent: Tetrahydrofuran
Flow Rate: 0.8 ml/min
Detector: Differential Refractometer

R. Time: Isocyanurate Trimer 27.2 min
Standard Substance: Polyethylene Oxide (TSK Standard Polyethylene Oxide, manufactured by TOSOH CORPORATION)
Measurement: 30 mg of a sample was dissolved in 10 ml of tetrahydrofuran, and 100 μL of the obtained solution was injected, and thus, measurement was performed.

(Calculation Method of Average Number of Functional Groups of Polyisocyanate)

The average number of functional groups of the polyisocyanate was calculated by the following expression using a number average molecular weight obtained by the same measurement as that of the concentration of the isocyanurate trimer in the polyisocyanate and the concentration of the isocyanate group of the polyisocyanate.

$$\text{(Average Number of Functional Groups of Polyisocyanate)} = \text{(Number Average Molecular Weight of Polyisocyanate)} \times \text{(Concentration of Isocyanate Group of Polyisocyanate)} / 4202$$

(Measurement Method of Hydroxyl Value of Polyol)

Hydroxyl Value (mgKOH/g): Measured on the basis of JIS K1557-1 (B Method).

(Calculation Method of Average Number of Functional Groups of Polyol)

The average number of functional groups of the polyol was calculated by the following expression.

$$\Sigma(Mn / MWn \times fn) / \Sigma(Mn / MWn)$$

Mn: Part by Weight of Multifunctional Alcohol
MWn: Molecular Weight of Multifunctional Alcohol
fn: Number of Hydroxyl Groups in One Molecule of Multifunctional Alcohol

(Calculation Method of Degree of Biomass (Unit: %) of Polyisocyanate (a))

The degree of biomass of polyisocyanate described in Synthesis Example C1 was calculated by the following expression.

$$\text{Number of Plant-Derived Carbon Atoms} / \text{(Number of Plant-Derived Carbon Atoms + Number of Petroleum-Derived Carbon Atoms)} \times 100$$

(Calculation Method of Degree of Biomass (Unit: %) of Polyurethane Molded Body)

The degree of biomass of a polyurethane molded product described in Example C1 was calculated by the following expression.

{[Part by Weight of (a) × Degree of Biomass of (a) / 100] + [Part by Weight of (b) × Degree of Biomass of (b) / 100] + [Part by Weight of (e) × Degree of Biomass of (e) / 100] + [Part by Weight of (d) × Degree of Biomass of (d) / 100]} / [Total Weight (Part by Weight) of (a) + (b) + (e) + (d)]

In the expression described above, (a), (b), (d), and (e) are as follows.

(a): Polyisocyanate (a)
(b): Alicyclic Polyisocyanate (b)
(d): Polyol (d)
(e): (Poly) Glycerin Fatty Acid Esters (e)

The degree of biomass of the polyurethane molded product was obtained by using the value of the degree of biomass of the polyisocyanate (a) which was calculated by the calculation method described above. The degree of biomass of the polyurethane molded product was obtained by setting the degree of biomass of the polyol (d) and the (poly)glycerin fatty acid esters (e) to 100%.

(Performance Testing Method of Lens)

A lens obtained by polymerization was evaluated by performing a performance test. In the performance test, a refractive index and the Abbe number, heat resistance, and specific gravity were evaluated by the following testing method.

- Refractive Index (ne) and Abbe Number (νe) : Measured at 20°C by using Pulfrich refractometer KPR-30 manufactured by Shimadzu Corporation.
- Heat Resistance: Glass transition temperature (Tg) in a TMA penetration method (a load of 50 g and a pin tip of 0.5 mmφ) was set as heat resistance by using TMA-60 manufactured by Shimadzu Corporation.
- Specific Gravity: Measured at 20°C by Archimedes' method.

[Reference Preparation Example C]

(Synthesis of 1,5-Pentamethylene Diisocyanate Using Plant-Derived Raw Material]

Preparation Example C1 (Preparation of Fungus Body Lysate Liquid)

(Cloning of Lysine Decarbonation Enzyme Gene (cadA))

Genome DNA prepared according to an ordinary method from a cluster of Escherichia coli W3110 (ATCC27325) was used for molding PCR.

In a primer for PCR, oligonucleotide (synthesized through commission to Life Technologies Japan Ltd.) having a base sequence represented by Sequence Numbers 1 and 2 designed on the basis of a base sequence of lysine decarbonation enzyme gene (cadA) (GenBank Accession No. AP009048) was used. The primer has each restriction enzyme recognition sequence of KpnI and XbaI in the vicinity of a 5' terminal.

PCR was performed by using 25 μL of a PCR reaction liquid including 1 ng/μL of the genome DNA and 0.5 pmol/μL of each of the primers in conditions where a reaction cycle including Modification: 94°C and 30 seconds, Annealing: 55°C and 30 seconds, and Extension Reaction: 68°C and 2 minutes was repeated 30 times.

A PCR reaction product and Plasmid pUC18 (manufactured by TAKARA SHUZO CO., LTD.) were digested by KpnI and XbaI and were connected by using Ligation High (manufactured by TOYOBO CO., LTD.), and then Eschrichia coli DH5α (manufactured by TOYOBO CO., LTD.) was transformed by using the obtained recombinant plasmid. The transformant was cultured by an LB agar medium including 100 μg/mL of Ampicillin (Am) and X-Gal (5-bromo-4-chloro-3-indolyl-β-D-galactoside), and thus, a transformant which had resistance to Am and became a white colony was obtained. The plasmid was extracted by the transformant obtained as described above.

It was confirmed that the base sequence of a segment of DNA introduced into the plasmid was a base sequence represented by Sequence Number 3 according to a general determination method of a base sequence.

The plasmid having DNA which encodes the obtained lysine decarbonation enzyme was named pCADA. The transformed escherichia coli was cultured by using pCADA, and thus, it was possible to produce a lysine decarbonation enzyme having an amino acid sequence represented by Sequence Number 4.

(Preparation of Transformant)

A cluster of Escherichia coli W3110 was transformed by a general method using pCADA, and the obtained transformant was named W/pCADA.

The transformant was vaccinated against 500 ml of an LB medium including 100 μg/mL of Am in an erlenmeyer flask which was attached with a baffle and was subjected to shake culture at 30°C until OD (660 nm) became 0.5, and then isopropyl-β-thiogalactopyranoside (IPTG) was added such that the amount of IPTG became 0.1 mmol/L and was subjected to shake culture for 14 hours. A culture liquid was subjected to centrifugal separation at 8000 rpm for 20 minutes, and thus, a fungus body was obtained. The fungus body was suspended in 20 mmol/L of a buffer solution of sodium phosphate (pH 6.0) , and was subjected to ultrasonic crushing, and thus, a fungus body lysate liquid was prepared.

Preparation Example C2 (Preparation of Aqueous Solution of 1,5-Pentamethylene Diamine)

120 parts by weight of a substrate solution in which L-lysine monohydrochloride (manufactured by Wako Pure Chemical Industries, Ltd.) was prepared such that the final concentration was 45 weight% and a pyridoxal phosphoric acid (manufactured by Wako Pure Chemical Industries, Ltd.) was prepared such that the final concentration was 0.15 mmol/L was added to a flask. Next, the W/pCADA fungus body lysate liquid described above (preparing a dried fungus body having a conversion weight of 0.3 g) was added and a reaction was initiated. The reaction conditions were 37°C and 200 rpm. pH of a reaction liquid was adjusted to pH 6 by 6 mol/L of a hydrochloric acid. After 24 hours, a reaction yield of 1,5-pentamethylene diamine reached 99%. pH of the reaction liquid after performing the reaction described above for 24 hours was adjusted to pH 2 by 6 mol/L of a hydrochloric acid, 0.6 parts by weight of activated charcoal (powder activated charcoal PM-SX, manufactured by Sanso Chemical Company) was added to the reaction liquid and was stirred at 25°C for 1 hour, and then filtration was performed by using filter paper (5C, manufactured by Toyo Roshi Kaisha, Ltd.). Next, pH of the filtrate was adjusted to pH 12 by sodium hydroxide, and thus, an aqueous solution of 1, 5-pentamethylene diamine (an aqueous solution of 17.0 weight %) was obtained.

Producing Example C1 (Preparation of 1,5-Pentamethylene Diamine)

100 parts by weight of the aqueous solution of the 1, 5-pentamethylene diamine and 100 parts by weight of n-butanol were put into a liquid separating funnel at 23°C, were mixed for 10 minutes, and then were left to stand for 30 minutes. A lower layer which was a water layer was extracted, and then an upper layer which was an organic layer (the n-butanol including the 1,5-pentamethylene diamine) was extracted. As a result of measuring an extraction rate, the extraction rate was 91.6%. Next, 80 parts by weight of an extraction liquid of the organic layer was put into a four-neck flask provided with a thermometer, a distillation tower, a cooling pipe, and a nitrogen introduction pipe, an oil bath temperature was set to 120°C, and the n-butanol was distilled under reduced pressure of 10 kPa. Next, the oil bath temperature was set to 140°C, the 1,5-pentamethylene diamine was distilled under reduced pressure of 10 kPa, and thus, 1, 5-pentamethylene diamine having a purity of 99.9 weight% was obtained.

Producing Example C2 (Preparation of 1,5-Pentamethylene Diisocyanate)

2000 parts by weight of o-dichlorobenzene was put into a pressurization reactor attached with a jacket in which an electromagnetic induction stirrer, an automatic pressure adjusting valve, a thermometer, a nitrogen introduction line, a phosgene introduction line, a condenser, and a raw material feed pump were provided. Next, 2300 parts by weight of phosgene was added thereto from the phosgene introduction line, and stirring was initiated. Cold water passed through the jacket of the reactor, and thus, the temperature inside the reactor was maintained at approximately 10 °C. A solution in which 400 parts by weight of the 1,5-pentamethylene diamine obtained in Producing Example C1 was dissolved in 2600 parts by weight of o-dichlorobenzene was fed into the reactor by a feed pump for 60 minutes, and cold phosgenation was initiated at a temperature of lower than or equal to 30°C and under normal pressure. After the feeding ended, the liquid in the pressurization reactor became a light brown white slurry-like liquid.

Next, the liquid in the reactor was pressurized to 0.25 MPa while being gradually heated up to 160°C, and was further subjected to thermal phosgenation at a pressure of 0.25 MPa and a reaction temperature of 160°C for 90 minutes. Furthermore, 1100 parts by weight of phosgene was further added during the thermal phosgenation. The liquid in the

pressurization reactor became a light brown clear solution during the thermal phosgenation. After the thermal phosgenation ended, nitrogen gas passed through the reactor at 100°C to 140°C and 100 L/hour, and thus, degassing was performed.

Next, the o-dichlorobenzene was distilled under reduced pressure, and then similarly, the 1,5-pentamethylene diisocyanate was distilled under reduced pressure, and thus, 558 parts by weight of 1,5-pentamethylene diisocyanate having a purity of 98.7% was obtained.

Next, 558 parts by weight of 1,5-pentamethylene diisocyanate, and 0.02 parts by weight of tris(tridecyl) phosphite (manufactured by JOHOKU CHEMICAL CO., LTD., Product Name: JP-333E) with respect to 100 parts by weight of the 1,5-pentamethylene diisocyanate were put into a four-neck flask provided with a stirrer, a thermometer, a reflux pipe, and a nitrogen introduction pipe, a heat treatment was performed at 210°C for 2 hours under normal pressure while introducing nitrogen, and thus, 553 parts by weight of 1,5-pentamethine diisocyanate having purity of 98.3% was obtained. In the heat treatment, the yield of the 1,5-pentamethylene diisocyanate was 99.6%.

Next, the 1,5-pentamethylene diisocyanate after the heat treatment was put into a glass flask, a distillation pipe was filled with 4 elements of a filler (manufactured by Sumitomo Heavy Industries, Ltd., Product Name: Sumitomo/Sulzer Laboratory Packing EX Type), and rectification was performed under conditions of 127°C to 132°C and 2.7 KPa by using a distillation tower (manufactured by SIBATA SCIENTIFIC TECHNOLOGY LTD., Product Name: Distillation Head K Type) provided with a reflux ratio adjusting timer and a rectification device provided with a cooler while further performing reflux, and thus, 1,5-pentamethylene diisocyanate having a purity of 99.9 weight% was obtained. As a result of measuring the degree of biomass by the following method, the degree of biomass of the 1,5-pentamethylene diisocyanate was 71%.

(Measurement Method of Degree of Biomass of 1,5-Pentamethylene Diisocyanate)

The degree of biomass was measured on the basis of ASTM D6866 METHOD-B.

The 1,5-pentamethylene diisocyanate was subjected to methyl carbamation (urethanization) by methanol, and the degree of biomass of a methyl carbamate body was measured. As a result thereof, the degree of biomass was 56%. On the basis of this value, the degree of biomass of the 1,5-pentamethylene diisocyanate (a) was obtained by the following expression.

$$\text{Number of Plant-Derived Carbon Atoms} / (\text{Number of Plant-Derived Carbon Atoms} + \text{Number of Petroleum-Derived Carbon Atoms}) \times 100$$

[Synthesis Example C1]

(Synthesis of Polyisocyanate C1)

500 parts of the 1,5-pentamethylene diisocyanate obtained in Producing Example C2, 1 part of isobutyl alcohol, 0.3 parts of 2, 6-di (tert-butyl) -4-methyl phenol, and 0.3 parts of tris (tridecyl) phosphite were put into a four-neck flask provided with a stirrer, a thermometer, a reflux pipe, and a nitrogen introduction pipe, and were subjected to a reaction at 80°C for 2 hours. Next, 0.05 parts of N- (2-hydroxy propyl)-N, N,N-trimethyl ammonium-2-ethyl hexanoate (manufactured by Air Products and Chemicals Inc., Product Name: DABCO(R)TMR) was added as an isocyanuration catalyst. After performing the reaction for 50 minutes, 0.12 parts of o-toluene sulfone amide was added. The obtained reaction liquid passed through a thin film distillation device and was distilled at a vacuum degree of 0.09 KPa and a temperature of 150°C, and thus, 401 parts of unreacted pentamethylene diisocyanate was obtained. Further, 0.02 parts of o-toluene sulfone amide was added to 100 parts of the obtained composition, and thus, 100 parts of polyisocyanate C1 was obtained. The amount of 1,5-pentamethylene diisocyanate-derived component configuring the polyisocyanate C1 was 98 weight%.

The concentration of unreacted 1, 5-pentamethylene diisocyanate in the polyisocyanate C1 was less than 1 weight%, the concentration of an isocyanurate trimer was 65 weight%, the concentration of an isocyanate group was 25%, the average number of functional groups was 3.3, and the degree of biomass was 70%.

Hereinafter, a calculation method of the degree of biomass will be described. DABCO(R)TMR of the used isocyanuration catalyst was a mixture of 33.8 weight% of N-(2-hydroxy propyl)-N,N,N-trimethyl ammonium-2-ethyl hexanoate, 41.2 weight% of 2-ethyl hexanoic acid, and 25 weight% of ethylene glycol.

Degree of Biomass of Polyisocyanate C1 = {500 (Part by Weight of Polyisocyanate C1) × 98.0 (Amount of PDI-Derived Component Configuring Polyisocyanate C1) / 100 / 154.2 (Molecular Weight of PDI) × 5 (Number of Plant-Derived Carbon Atoms in One Molecule of PDI)} / {500 (Part by Weight of Polyisocyanate C1) × 98.0 (Amount of PDI-Derived Component Configuring Polyisocyanate C1) / 100 / 154.2 (Molecular Weight of PDI) × 7 (Number of Carbon Atoms in One Molecule of PDI) + 1 (Part by Weight of IBA) / 74.1 (Molecular Weight of IBA) × 4 (Carbon Atoms in One Molecule of IBA) + 0.3 (Part by Weight of BHT) / 220.4 (Molecular Weight of BHT) × 15 (Number of Carbon Atoms in One Molecule of BHT) + 0.3 (Part by Weight of JP-333E) / 628 (Molecular Weight of JP-333E) × 39 (Number of Carbon Atoms in One Molecule of JP-333E) + 0.05 (Part By Weight of N-(2-Hydroxy Propyl)-N,N,N-Trimethyl Ammonium-2-Ethyl Hexanoate) / 118.2

(Molecular Weight of N-(2-Hydroxy Propyl)-N,N,N-Trimethyl Ammonium-2-Ethyl Hexanoate) × 6 (Number of Carbon Atoms in One Molecule of N-(2-Hydroxy Propyl)-N,N,N-Trimethyl Ammonium-2-Ethyl Hexanoate) + 0.05 (Part by Weight of 2-Ethyl Hexanoic Acid) / 144.2 (Molecular Weight of 2-Ethyl Hexanoic Acid) × 8 (Number of Carbon Atoms in One Molecule of 2-Ethyl Hexanoic Acid) + 0.05 (Part by Weight of Ethylene Glycol) / 62.1 (Molecular Weight of Ethylene Glycol) × 2 (Number of Carbon Atoms in One Molecule of Ethylene Glycol) + 0.12 (Part by Weight of OTS) / 171.2 (Molecular Weight of OTS) × 7 (Number of Carbon Atoms in One Molecule of OTS)} × 100 = 70%

[Example C1]

1.4 parts by weight of Zelec UN (Acidic Phosphoric Acid Ester: Registered Trademark, manufactured by Stepan Company) and 1.0 part by weight of Tinuvin 292 (Hindered Amine: Registered Trademark, manufactured by BASF SE) were sequentially added to a mixture of 3.0 parts by weight of 1,3-propanediol (manufactured by E. I. du Pont de Nemours and Company) , 3.0 parts by weight of glycerin (manufactured by Kao Corporation), and 3.0 parts by weight of diglycerin caprylate, and were stirred at room temperature for 10 minutes.

20.0 parts by weight of the polyisocyanate C1 manufactured in Synthesis Example C1, and 11.4 parts by weight of a mixture of 2,5-bis(isocyanate methyl)-bicyclo[2.2.1] heptane and an isomer of 2,6-bis(isocyanate methyl)-bicyclo[2.2.1] heptane (manufactured by Mitsui Chemicals Inc.) were sequentially added, were subjected to deaeration while being stirred for 3 hours under reduced pressure, and then were injected into a mold comprised of a glass mold and tape, and were put into an oven, the mixed liquid was heated up to 25°C to 120°C for 21 hours, and after that, was cooled to 25°C for 1 hour, and thus, a molded product was obtained. A lens was smoothly released from the mold. In the obtained lens, the refractive index (ne) was 1.53, the Abbe number was 45, Tg was 89°C, the calculated degree of biomass was 54%, and the degree of biomass measured by an ASTMD6866-12 measurement method was 51%.

As described above, according to the polymerizable composition for an optical material containing the polyisocyanate (a) and the polyol (d), it was possible to obtain a polyurethane molded product which contributed to conservation of the global environment by using a plant-derived raw material and had excellent practicality such as transparency and heat resistance.

As described above, according to the polymerizable composition for an optical material containing the polyisocyanate (a), the polyol (d), and the (poly)glycerin fatty acid esters (e), it was possible to obtain a polyurethane molded product for an optical material which had a degree of biomass of 20% to 75% and had excellent releasability and excellent practicality such as transparency and heat resistance.

## Claims

**1.** A polymerizable composition for an optical material, comprising:

polyisocyanate (a) which is obtained from a plant-derived raw material and includes a modified product of aliphatic polyisocyanate;
polyol (d) which is a plant-derived compound; and
(poly)glycerin fatty acid esters (e) represented by General Formula (1),

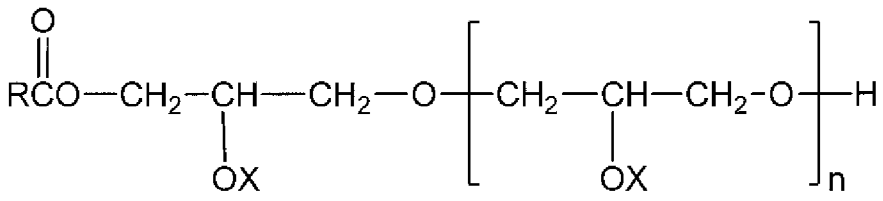

(1)

wherein in General Formula (1), R represents a C5 to C19 alkyl group or a C5 to C19 alkenyl group, the alkyl group or the alkenyl group may have a straight chain or a branched chain; X represents a hydrogen atom or a R' CO group; wherein R' is a C5 to C19 alkyl group or a C5 to C19 alkenyl group, the alkyl group or the alkenyl group may have a straight chain or a branched chain; a plurality of Xs may be identical to each other or different from each other; and n represents an integer of 0 to 3.

**2.** The polymerizable composition for an optical material according to claim 1, wherein the modified product is an isocyanurate product of aliphatic polyisocyanate, and an isocyanurate trimer is contained in the polyisocyanate (a) in the amount of 15 weight% or more.

**3.** The polymerizable composition for an optical material according to claim 1, wherein a molar ratio ((d) / (e) + (d)) of a hydroxyl group of the polyol (d) to the total number of hydroxyl groups of the (poly)glycerin fatty acid esters (e) and the polyol (d) is 0.5 to 0.9.

**4.** The polymerizable composition for an optical material according to claim 3, further comprising: polyol (c) which has a hydroxyl value of 300 mgKOH/g to 650 mgKOH/g and has the average number of functional groups of 2 or more and less than 7 and which is obtained from a plant-derived raw material, and/or alicyclic polyisocyanate (b).

**5.** The polymerizable composition for an optical material according to claim 4, wherein the polyol (c) is obtained by using at least one selected from glycerin, sorbitol, isosorbide, sucrose, 1,4-butanediol, 1,3-butanediol, and 1,3-propanediol which are plant-derived raw materials as a raw material.

**6.** The polymerizable composition for an optical material according to claim 5, wherein the polyol (c) is at least one selected from polyether polyol, polyester polyol, polycarbonate polyol, and polyacryl polyol.

**7.** The polymerizable composition for an optical material according to any one of claims 1 to 6, wherein the polyol (d) is at least one selected from glycerin, sorbitol, isosorbide, sucrose, 1,3-butanediol, 1,4-butanediol, and 1,3-propanediol.

**8.** The polymerizable composition for an optical material according to any one of claims 1 to 7, further comprising a non-metal catalyst.

**9.** A polyurethane molded product which is obtained by polymerizing and curing the polymerizable composition for an optical material according to claim 3.

**10.** The polyurethane molded product according to claim 9, wherein a degree of biomass is 20% to 75%.

**11.** The polyurethane molded product according to claim 9 or claim 10, wherein Tg is 60°C or higher.

**12.** An optical material which is comprised of the polyurethane molded product according to any one of claims 9 to 11.

**13.** A plastic spectacle lens which is comprised of the optical material according to claim 12.

**14.** A plastic polarization lens in which a layer obtained by polymerizing and curing the polymerizable composition for an optical material according to any one of claims 1 to 8 is laminated over at least one surface of a polarizing film.

**Patentansprüche**

1. Polymerisierbare Zusammensetzung für ein optisches Material, umfassend:

   Polyisocyanat (a), das aus einem von Pflanzen gewonnenen Rohmaterial erhältlich ist und ein modifiziertes Produkt von aliphatischem Polyisocyanat umfasst;
   Polyol (d), das eine von Pflanzen gewonnene Verbindung ist; und
   (Poly-)Glycerinfettsäureester (e), der durch die allgemeine Formel (1) dargestellt ist,

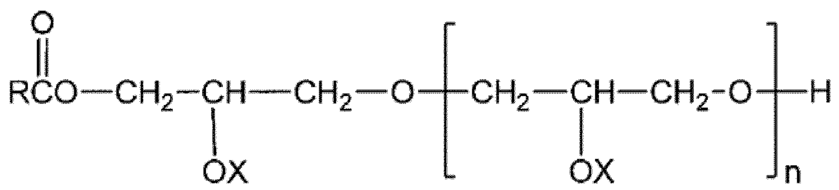

(1)

   wobei in der allgemeinen Formel (1) R für eine $C_{5-19}$-Alkylgruppe oder eine $C_{5-19}$-Alkenylgruppe steht, wobei die Alkylgruppe oder die Alkenylgruppe eine unverzweigte Kette oder eine verzweigte Kette aufweisen kann; X für ein Wasserstoffatom oder eine Gruppe R'CO steht, worin R' eine $C_{5-19}$-Alkylgruppe oder eine $C_{5-19}$-Alkenylgruppe ist, wobei die Alkylgruppe oder die Alkenylgruppe eine unverzweigte Kette oder eine verzweigte Kette aufweisen kann, und mehrere X gleich oder unterschiedlich sein können; und n für eine ganze Zahl von 0 bis 3 steht.

2. Polymerisierbare Zusammensetzung für ein optisches Material nach Anspruch 1,
   wobei das modifizierte Produkt ein Isocyanuratprodukt von aliphatischem Polyisocyanat ist und in dem Polyisocyanat (a) ein Isocyanurat-Trimer in einer Menge von 15 Gew.-% oder mehr enthalten ist.

3. Polymerisierbare Zusammensetzung für ein optisches Material nach Anspruch 1,
   wobei das Molverhältnis ((d) / (e) + (d)) zwischen den Hydroxylgruppen des Polyols (d) und der Gesamtanzahl an Hydroxylgruppen des (Poly-)Glycerinfettsäureesters (e) und des Polyols (d) 0,5 bis 0,9 beträgt.

4. Polymerisierbare Zusammensetzung für ein optisches Material nach Anspruch 3, die weiters Folgendes umfasst: Polyol (c), das eine Hydroxylzahl von 300 mgKOH/g bis 650 mgKOH/g aufweist und eine durchschnittliche Anzahl an funktionellen Gruppen von 2 oder mehr und weniger als 7 aufweist und das aus einem von Pflanzen gewonnenen Rohmaterial erhältlich ist, und/oder alizyklisches Polyisocyanat (b).

5. Polymerisierbare Zusammensetzung für ein optisches Material nach Anspruch 4,
   wobei das Polyol (c) unter Verwendung zumindest eines, ausgewählt aus Glycerin, Sorbit, Isosorbid, Saccharose, 1,4-Butandiol, 1,3-Butandiol und 1,3-Propandiol, die von Pflanzen gewonnene Rohmaterialien sind, als Rohmaterial erhältlich ist.

6. Polymerisierbare Zusammensetzung für ein optisches Material nach Anspruch 5,
   wobei das Polyol (c) zumindest eines, ausgewählt aus Polyetherpolyol, Polyesterpolyol, Polycarbonatpolyol und Polyacrylpolyol ist.

7. Polymerisierbare Zusammensetzung für ein optisches Material nach einem der Ansprüche 1 bis 6,
   wobei das Polyol (d) zumindest eines, ausgewählt aus Glycerin, Sorbit, Isosorbid, Saccharose, 1,3-Butandiol, 1,4-Butandiol und 1,3-Propandiol ist.

8. Polymerisierbare Zusammensetzung für ein optisches Material nach einem der Ansprüche 1 bis 7, das weiters einen Nichtmetall-Katalysator umfasst.

9. Polyurethan-Formteil, erhalten durch Polymerisieren und Härten einer polymerisierbaren Zusammensetzung für ein optisches Material nach Anspruch 3.

10. Polyurethan-Formteil nach Anspruch 9, wobei das Ausmaß an Biomasse 20 % bis 75 % beträgt.

11. Polyurethan-Formteil nach Anspruch 9 oder Anspruch 10, wobei die Tg 60 °C oder höher ist.

**12.** Optisches Material, das aus einem Polyurethan-Formteil nach einem der Ansprüche 9 bis 11 besteht.

**13.** Kunststoffbrillenglas, das aus einem optischen Material nach Anspruch 12 besteht.

**14.** Kunststoffpolarisationslinse, in der eine Schicht, die durch Polymerisieren und Härten einer polymerisierbaren Zusammensetzung für ein optisches Material nach einem der Ansprüche 1 bis 8 erhalten wurde, über zumindest eine Oberfläche einer polarisierenden Folie laminiert ist.

## Revendications

**1.** Composition polymérisable pour un matériau optique, comprenant :

un polyisocyanate (a) qui est obtenu à partir d'une matière première dérivée d'une plante et comprend un produit modifié de polyisocyanate aliphatique ;
un polyol (d) qui est un composé dérivé d'une plante ; et
des esters d'acide gras de (poly)glycérine (e) représentés par la formule générale (1)

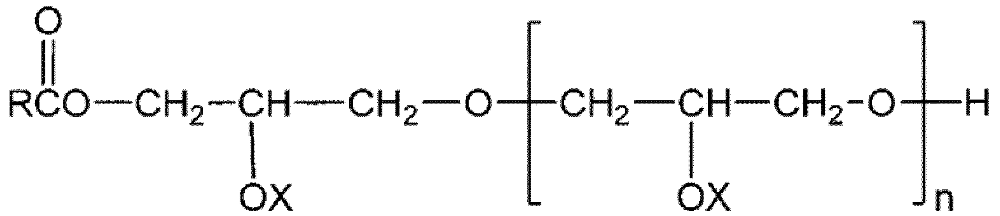

(1)

dans laquelle dans la formule générale (1), R représente un groupe alkyle en C5 à C19 ou un groupe alcényle en C5 à C19, le groupe alkyle ou le groupe alcényle pouvant avoir une chaîne linéaire ou une chaîne ramifiée ; X représente un atome d'hydrogène ou un groupe R'CO ; dans laquelle R' est un groupe alkyle en C5 à C19 ou un groupe alcényle en C5 à C19, le groupe alkyle ou le groupe alcényle pouvant avoir une chaîne linéaire ou une chaîne ramifiée ; une pluralité de X peuvent être identiques les uns des autres ou différents les uns des autres ; et n représente un nombre entier de 0 à 3.

**2.** Composition polymérisable pour un matériau optique selon la revendication 1,
dans laquelle le produit modifié est un produit d'isocyanurate de polyisocyanate aliphatique, et un trimère d'isocyanurate est contenu dans le polyisocyanate (a) en la quantité de 15 % en poids ou plus.

**3.** Composition polymérisable pour un matériau optique selon la revendication 1,
dans laquelle un rapport molaire ((d) / (e) + (d)) d'un groupe hydroxyle du polyol (d) sur le nombre total de groupes hydroxyle des esters d'acide gras de (poly)glycérine (e) et du polyol (d) est de 0,5 à 0,9.

**4.** Composition polymérisable pour un matériau optique selon la revendication 3, comprenant en outre :
un polyol (c) qui a un indice d'hydroxyle de 300 mgKOH/g à 650 mgKOH/g et a un nombre moyen de groupes fonctionnels de 2 ou plus et inférieur à 7 et qui est obtenu à partir d'une matière première dérivée d'une plante, et/ou un polyisocyanate alicyclique (b).

**5.** Composition polymérisable pour un matériau optique selon la revendication 4,
dans laquelle le polyol (c) est obtenu en utilisant au moins un élément choisi parmi la glycérine, le sorbitol, l'isosorbide, le saccharose, le 1,4-butanediol, le 1,3-butanediol et le 1,3-propanediol qui sont des matières premières dérivées d'une plante en tant que matière première.

**6.** Composition polymérisable pour un matériau optique selon la revendication 5,
dans laquelle le polyol (c) est au moins un élément choisi parmi un polyol de polyéther, un polyol de polyester, un polyol de polycarbonate et un polyol polyacrylique.

**7.** Composition polymérisable pour un matériau optique selon l'une quelconque des revendications 1 à 6,
dans laquelle le polyol (d) est au moins un élément choisi parmi la glycérine, le sorbitol, l'isosorbide, le saccharose, le 1,4-butanediol, le 1,3-butanediol et le 1,3-propanediol.

**8.** Composition polymérisable pour un matériau optique selon l'une quelconque des revendications 1 à 7, comprenant en outre un catalyseur non métallique.

**9.** Produit de polyuréthane moulé qui est obtenu par polymérisation et durcissement de la composition polymérisable pour un matériau optique selon la revendication 3.

**10.** Produit de polyuréthane moulé selon la revendication 9, dans lequel un degré de biomasse est de 20 % à 75 %.

**11.** Produit moulé de polyuréthane selon la revendication 9 ou la revendication 10, dans lequel la Tg est de 60 °C ou plus.

**12.** Matériau optique qui se compose du produit de polyuréthane moulé selon l'une quelconque des revendications 9 à 11.

**13.** Verre de lunette en plastique qui se compose du matériau optique selon la revendication 12.

**14.** Lentille de polarisation en plastique dans laquelle une couche obtenue par polymérisation et durcissement de la composition polymérisable pour un matériau optique selon l'une quelconque des revendications 1 à 8 est stratifiée sur au moins une surface d'un film polarisant.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010190919 A
- JP 2011012141 A
- JP 2011225863 A
- JP 2013218734 A
- JP 2013218736 A
- JP 2014175758 A